(19) Europäisches Patentamt
European Patent Office
Office européen des brevets

(11) EP 4 495 065 A1

(12) EUROPEAN PATENT APPLICATION
published in accordance with Art. 153(4) EPC

(43) Date of publication:
22.01.2025 Bulletin 2025/04

(21) Application number: 23770846.6

(22) Date of filing: 15.03.2023

(51) International Patent Classification (IPC):
$C01B\ 21/068^{(2006.01)}$    $C04B\ 35/587^{(2006.01)}$

(52) Cooperative Patent Classification (CPC):
C01B 21/068; C04B 35/587

(86) International application number:
PCT/JP2023/010125

(87) International publication number:
WO 2023/176893 (21.09.2023 Gazette 2023/38)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 18.03.2022 JP 2022044684

(71) Applicant: UBE Corporation
Ube-shi, Yamaguchi 755-8633 (JP)

(72) Inventors:
• OHMARU, Takuji
Ube-shi, Yamaguchi 755-8633 (JP)
• SHIBATA, Koji
Ube-shi, Yamaguchi 755-8633 (JP)
• FUJII, Takayuki
Ube-shi, Yamaguchi 755-8633 (JP)
• YAMADA, Tetsuo
Tokyo 105-8449 (JP)

(74) Representative: Plougmann Vingtoft a/s
Strandvejen 70
2900 Hellerup (DK)

(54) SILICON NITRIDE POWDER AND METHOD FOR PRODUCING SILICON NITRIDE SINTERED BODY

(57) The invention provides crystalline silicon nitride powder that can yield a silicon nitride sintered body with easy sinterability and excellent sintered body properties including high-temperature strength. It further provides crystalline silicon nitride powder that allows production of a silicon nitride sintered body having sufficient mechanical strength as well as excellent thermal conductivity. It still further provides a method for producing a silicon nitride sintered body having high flexural strength and excellent thermal conductivity. The crystalline silicon nitride powder has a specific surface area (SA) of 3 m$^2$/g to 16 m$^2$/g as measured by the BET method, a surface oxygen amount (FSO) of 0.2 mass% to 0.6 mass% as measured by temperature increase mode analysis, an internal oxygen amount (FIO) of 0.4 mass% to 1.3 mass% as measured by temperature increase mode analysis, a ratio (FSO/SA) of surface oxygen amount to BET specific surface area of 0.25 mg/m$^2$ or higher and lower than 0.50 mg/m$^2$, and a median diameter $D_{50}$ in the volume-based cumulative particle size distribution measured by laser diffraction/scattering of 0.5 μm to 1.0 μm.

Fig. 1

**Description**

FIELD

The present invention relates to crystalline silicon nitride powder suitable as a starting material for production of a silicon nitride sintered body useful in heat-resistant structural materials, wear resistant materials and circuit board materials, as well as to a method for producing the silicon nitride sintered body.

BACKGROUND

Silicon nitride sintered bodies have high strength and excellent corrosion-resistance and thermal shock resistance, and are therefore considered promising as heat-resistant structural members such as gas turbine parts and automobile engine parts, and wear-resistant members such as bearing parts. Silicon nitride sintered substrates are also increasingly being used as insulating substrates for use in power modules designed for electric vehicles (EV) and railway vehicles. Such silicon nitride sintered bodies are usually produced by mixing a sintering agent into silicon nitride powder and forming a compact by press molding, injection molding, extrusion molding or sheet casting, and then sintering the compact in an ordinary pressure atmosphere or pressurized atmosphere, or with a pressure press. When producing a silicon nitride sintered body by these methods, it is known that the powder properties of the silicon nitride powder starting material, including especially the oxygen content, have a major effect on the sinterability and properties of the sintered body. Specifically, silicon nitride powders with high oxygen contents are generally easy to sinter but cannot provide sufficient high-temperature strength. Silicon nitride powders with low oxygen content are difficult to sinter and are difficult to produce with sufficient densification.

PTL 1, for example, discloses a method for improving the high-temperature properties of a silicon nitride sintered body, whereby the specific surface area of the silicon nitride powder is 10 $m^2$/g or greater and the total oxygen content is 1.5 wt% or lower, thereby reducing the proportion of the grain boundary phase generated during sintering, and maintaining a high melting temperature, to improve the high-temperature properties.

PTL 2 discloses a ceramic substrate composed of $Si_3N_4$, wherein the concentration of silicon oxide and silicon complex oxide on the substrate surface is set to no greater than 2.7 Atom% based on surface concentration measurement using an electronic probe microanalyzer, thereby producing a substrate for a power module having sufficient bonding strength for bonding with metal members such as aluminum, and increasing the bonding reliability during thermal cycling. Such insulating substrates must have high insulating properties and heat dissipation properties.

The oxygen in silicon nitride powder is generally defined by the oxygen present in the silicon oxide layer and/or silicon oxynitride layer on the particle surfaces (surface oxygen), the oxygen present as solid solution in the silicon nitride crystals in the particle interiors (internal oxygen) and the total oxygen (sum of the surface oxygen and internal oxygen). When the oxygen in silicon nitride powder is divided into surface oxygen and internal oxygen, it is the surface oxygen that is considered to have the major effect on sinterability.

PTL 3 describes silicon nitride powder having a surface oxygen amount of 0.3 to 0.6 wt% and an internal oxygen amount of 0.5 to 1.1 wt%. However, while these inventions disclose the surface oxygen amount and internal oxygen amount, they nowhere mention the effect of the ratio of the surface oxygen amount with respect to the specific surface area, or the effect of the ratio of the total oxygen content with respect to the specific surface area, and therefore the high-temperature flexural strength of the obtained sintered body is 550 MPa or lower for sintered body A and 640 MPa or lower for sintered body B.

PTL 4 discloses silicon nitride powder wherein the oxygen content present as hydroxide or oxide on the particle surfaces is 0.2 to 1.0 wt% while the oxygen content present as solid solution is 0.5 to 1.2 wt%, and of the oxygen present as solid solution, the oxygen content present in a range of 3 nm directly below the particle surfaces is 0.1 to 0.5 wt% while the oxygen content present inside in a range of 3 nm or more from the particle surfaces is 0.8 wt% or lower. The same patent publication defines the surface oxygen amount (O) as the sum of the oxygen content present as hydroxide or oxide on the particle surfaces (surface oxygen amount (A)) and the oxygen content present as solid solution in a range of 3 nm directly below the particle surfaces (surface oxygen amount (B)). In paragraph [0010] of the patent publication it is stated to the effect that "with a surface oxygen amount of lower than 0.3 wt%, the wettability between the silicon nitride particles and the liquid phase comprising the sintering agent is reduced during sintering", explaining the importance of having a surface layer of suitable thickness on the surfaces of the silicon nitride particles (a layer comprising oxygen present as hydroxide, oxide or solid solution). According to Table 2 in paragraph [0020], the surface oxygen amount (O) in Examples 1 to 8 was 0.48 to 0.86 wt%, the specific surface area (S) was 9.5 to 12.2 $m^2$/g, and the ratio S/O of the specific surface area (S) with respect to the surface oxygen amount (O) was 11.9 to 20.2. In other words, the ratio O/S between the surface oxygen amount (O) and the specific surface area (S) is listed as being 0.50 to 0.84 mg/$m^2$ (0.050 to 0.084%/$m^2g^{-1}$),

PTL 5 discloses that using silicon nitride powder having low internal oxygen and surface oxygen suitable for sintering, can yield a silicon nitride sintered body which is dense and exhibits excellent mechanical strength, and especially a silicon nitride sintered body having both high thermal conductivity and excellent mechanical strength. However the method for producing the silicon nitride powder disclosed in that patent publication involves flowing an amorphous SiN(-H)-based compound through a continuous firing furnace while firing under a nitrogen-containing inert gas atmosphere or under a nitrogen-containing reducing gas atmosphere at a temperature of 1400 to 1700°C. Since an amorphous Si-N(-H)-based compound is rapidly subjected to high-temperature heating in this method, the degree of supersaturation near the particles increases, promoting nuclei formation (a greater number of nuclei), such that the resulting silicon nitride particles are micronized and a higher specific surface area is obtained. In contrast, when using an ordinary firing process (such as a process of loading the starting material into a crucible and firing in a batch furnace or pusher furnace without flow), it is difficult to stably produce crystalline silicon nitride powder with a BET specific surface area of 7 m$^2$/g or greater if the oxygen content of the starting material is too low. The surface oxygen amount of the crystalline silicon nitride powders described in Examples 1 to 12 is high at 0.62 mass% or greater, presumably as a feature of the method of firing an amorphous Si-N(-H)-based compound in a continuous firing furnace with flow.

PTL 6 discloses silicon nitride powder in which the ratio of surface oxygen amount to specific surface area is 0.02 to 0.09%/m$^2$g$^{-1}$ (corresponding to 0.2 to 0.9 mg/m$^2$ in the expression of the present specification). However the definition of 0.02 to 0.09%/m$^2$g$^{-1}$ is a surface oxygen amount of 0.2 to 0.9 wt% for a BET specific surface area of 10 m$^2$/g, and it therefore includes the surface oxygen amount range disclosed in PTL 3 (0.3 to 0.6 wt%). PTL 6 also contains no mention of the internal oxygen amount. This patent document also describes prolonged immersion of a pulverized product having a very high oxygen concentration of 3.6 to 5.1 mass%, in a high-concentration hydrofluoric acid solution as acid treatment. Moreover nothing is mentioned regarding the fluorine content of the resulting silicon nitride powder, even though treating a pulverized product in a high-concentration hydrofluoric acid solution having a hydrofluoric acid concentration of 10 to 40 mass% to remove the oxygen in the pulverized product leaves fluorine in the silicon nitride powder even after washing with water. In Table 1 under the Examples, the properties (such as flexural strength and thermal conductivity) of silicon nitride sintered bodies obtained by firing for 10 hours under a 1 MPa nitrogen pressurized atmosphere at a temperature of 1900°C are listed as relative values, making it impossible to judge the effect of the invention.

[CITATION LIST]

[PATENT LITERATURE]

[PTL 1] Japanese Unexamined Patent Publication No. HEI 7(2005)-206409
[PTL 2] Japanese Unexamined Patent Publication No. 2009-231388
[PTL 3] Japanese Examined Patent Publication No. HEI 5(2003)-87441
[PTL 4] Japanese Unexamined Patent Publication No. HEI 6(2004)-329404
[PTL 5] International Patent Publication No. WO2013/146713
[PTL 6] International Patent Publication No. WO2021/200830

[NON PATENT LITERATURE]

[NPL 1] G.P. Gazzara and D.P. Messier, Am. Ceram. Soc. Bull., 56[9], pp.777-80(1977).

SUMMARY

[TECHNICAL PROBLEM]

It is an object of the invention to solve the aforementioned problems and provide crystalline silicon nitride powder that can yield a silicon nitride sintered body with easy sinterability and excellent sintered body properties including high-temperature strength. It is another object of the invention to provide crystalline silicon nitride powder that allows production of a silicon nitride sintered body having sufficient mechanical strength as well as excellent thermal conductivity. It is yet another object of the invention to provide a method for producing a silicon nitride sintered body having high flexural strength and excellent thermal conductivity.

[SOLUTION TO PROBLEM]

The present inventors have extensively studied the effects of the state of the specific surface area, particle size distribution, oxygen content and oxygen distribution of silicon nitride powder, on sinterability and sintered body properties, especially high-temperature strength and thermal conductivity, and as a result have found that silicon nitride powder that is able to yield a silicon nitride sintered body with easy sinterability and excellent sintered body properties including high-temperature high strength, has a very narrow range for the ratio of surface oxygen amount to BET specific surface area. Specifically, the present invention provides a crystalline silicon nitride powder having a silicon oxide layer and/or silicon oxynitride layer on the particle surfaces, wherein the specific surface area (SA) as measured by the BET method is 3 $m^2$/g to 16 $m^2$/g, the surface oxygen amount (FSO) as measured by temperature increase mode analysis is 0.20 mass% to 0.60 mass%, the internal oxygen amount (FIO) as measured by temperature increase mode analysis is 0.40 mass% to 1.30 mass%, the ratio (FSO/SA) between the surface oxygen amount and the BET specific surface area is 0.25 mg/$m^2$ or higher and lower than 0.50 mg/$m^2$, and the median diameter $D_{50}$ in the volume-based cumulative particle size distribution curve measured by laser diffraction/scattering method is 0.5 $\mu$m to 1.0 $\mu$m.

The ratio (FSO/SA) between the surface oxygen amount (FSO) measured by temperature increase mode analysis and the BET specific surface area (SA) of the silicon nitride powder of the invention is a standard for evaluating the thickness of the silicon oxide layer and/or silicon oxynitride layer on the surfaces of silicon nitride primary particles. If the value is 0.25 mg/$m^2$ or higher and lower than 0.50 mg/$m^2$, an oxide layer and/or oxynitride layer of suitable thickness will be formed on the primary particle surfaces, allowing a high-density silicon nitride sintered body to be easily fabricated, due to formation of a melt phase of suitable volume by reaction with the sintering agent during the sintering process.

For the purpose of the invention, from the viewpoint of forming an oxide layer and oxynitride layer of suitable thickness on the primary particle surfaces, the surface oxygen amount (FSO) is subdivided into the surface oxygen amount (FSOA) from the silicon oxide layer on the particle surfaces and the surface oxygen amount (FSOB) from the silicon oxynitride layer on the particle surfaces. One embodiment of the invention provides crystalline silicon nitride powder wherein, of the surface oxygen amount (FSO) measured by temperature increase mode analysis, the surface oxygen amount (FSOA) from the silicon oxide layer on the particle surfaces is 0.10 mass% to 0.50 mass% and the surface oxygen amount (FSOB) from the silicon oxynitride layer on the particle surfaces is 0.08 mass% to 0.50 mass%.

Another embodiment of the invention provides crystalline silicon nitride powder wherein the ratio (FSO/SA) of the surface oxygen amount measured by temperature increase mode analysis with respect to the BET specific surface area is 0.28 mg/$m^2$ to 0.44 mg/$m^2$.

Yet another embodiment of the invention provides crystalline silicon nitride powder wherein the ratio (FIO/SA) of the internal oxygen amount (FIO) measured by temperature increase mode analysis with respect to the BET specific surface area (SA) is 0.60 mg/$m^2$ to 1.00 mg/$m^2$.

Yet another embodiment of the invention provides crystalline silicon nitride powder wherein the ratio (FIO/SA) of the internal oxygen amount (FIO) measured by temperature increase mode analysis with respect to the BET specific surface area (SA) is 0.63 mg/$m^2$ to 0.93 mg/$m^2$.

Yet another embodiment of the invention provides crystalline silicon nitride powder wherein the total oxygen content (TO) is 0.7 mass% to 1.8 mass%, and the ratio (TO/SA) of the total oxygen content (TO) with respect to the BET specific surface area (SA) is 0.85 mg/$m^2$ to 1.4 mg/$m^2$.

Yet another embodiment of the invention provides crystalline silicon nitride powder wherein the total oxygen content (TO) is 0.8 mass% to 1.6 mass%, and the ratio (TO/SA) of the total oxygen content (TO) with respect to the BET specific surface area (SA) is 1.00 mg/$m^2$ to 1.30 mg/$m^2$.

Yet another embodiment of the invention provides crystalline silicon nitride powder wherein the BET specific surface area (SA) is 4.5 $m^2$/g to 15 $m^2$/g.

Yet another embodiment of the invention provides crystalline silicon nitride powder wherein the BET specific surface area (SA) is 7 $m^2$/g to 13 $m^2$/g, and the surface oxygen amount (FSO) measured by temperature increase mode analysis is 0.30 mass% to 0.60 mass%.

Yet another embodiment of the invention provides crystalline silicon nitride powder wherein the median diameter $D_{50}$ in the cumulative particle size distribution is 0.63 $\mu$m to 0.91 $\mu$m.

Yet another embodiment of the invention provides crystalline silicon nitride powder wherein $D_{90}$, as the cumulative 90% diameter in the cumulative particle size distribution, is 1.75 $\mu$m to 2.35 $\mu$m, the first cohesion index $D_{50}/D_{BET}$ as the ratio between the median diameter $D_{50}$ and the sphere-equivalent size $D_{BET}$ calculated from the BET specific surface area, is 3.0 to 4.9, and the second cohesion index $D_{90}/D_{50}$, as the ratio between the cumulative 90% diameter $D_{90}$ and the median diameter $D_{50}$, is 2.5 to 3.4.

Yet another embodiment of the invention provides crystalline silicon nitride powder wherein the cumulative 90% diameter $D_{90}$ is 1.93 $\mu$m to 2.25 $\mu$m, the first cohesion index $D_{50}/D_{BET}$ is 3.1 to 4.5 and the second cohesion index $D_{90}/D_{50}$ is 2.6 to 3.2.

Yet another embodiment of the invention provides crystalline silicon nitride powder wherein the mass ratio of the $\beta$ phase with respect to the total amount of the $\alpha$ phase and $\beta$ phase $\beta/(\alpha + \beta)$ is 40 mass% or lower, and the carbon content is 0.01 mass% to 0.2 mass%.

Yet another embodiment of the invention provides crystalline silicon nitride powder wherein the mass ratio of the $\beta$ phase with respect to the total amount of the $\alpha$ phase and $\beta$ phase $\beta/(\alpha + \beta)$ is 1.5 mass% to 10.0 mass%, and the carbon content is 0.01 mass% to 0.15 mass%.

Yet another embodiment of the invention provides a method for producing a silicon nitride sintered body comprising a step of molding and sintering a sintering material containing the crystalline silicon nitride powder and a sintering agent.

Throughout the present specification, the surface oxygen amount and internal oxygen amount as measured by temperature increase mode analysis will be referred to simply as "surface oxygen amount" and "internal oxygen amount", respectively, omitting "as measured by temperature increase mode analysis".

[ADVANTAGEOUS EFFECTS OF INVENTION]

According to the invention it is possible to provide silicon nitride powder that can yield a silicon nitride sintered body having excellent mechanical properties and high thermal conductivity, as well as a method for producing the same. It is also possible to provide a method for producing a silicon nitride sintered body having excellent mechanical properties and high thermal conductivity.

BRIEF DESCRIPTION OF DRAWINGS

Fig. 1 is a diagram showing an example of an oxygen/nitrogen analysis chart.
Fig. 2 is a diagram showing another example of an oxygen/nitrogen analysis chart.
Fig. 3 is a diagram showing yet another example of an oxygen/nitrogen analysis chart.

DESCRIPTION OF EMBODIMENTS

<Silicon nitride powder>

<BET specific surface area>

The silicon nitride powder of the invention has a silicon oxide layer and/or silicon oxynitride layer on the particle surfaces, the crystalline silicon nitride powder having a specific surface area of 3 $m^2$/g to 16 $m^2$/g based on the BET method. The specific surface area is an important powder property which controls densification throughout the process of dissolution and deposition of the silicon nitride particles during sintering, a BET specific surface area of lower than 7 $m^2$/g causing the driving force of sintering to fall, and a BET specific surface area of lower than 3 $m^2$/g causing the driving force of sintering to fall significantly, making it impossible to obtain a high-density silicon nitride sintered body without addition of a large amount of sintering agent. Addition of a sintering agent in large amounts can impair the properties of the silicon nitride sintered body. If the BET specific surface area exceeds 16 $m^2$/g, this not only lowers the green density and hampers molding in ordinary molding methods, but also generates microcracks and voids after sintering. In addition, it has an adverse effect on dimensional precision, while also being undesirable due to cuttings or damages (crack aggregation) at the corner sections of sintered bodies during sintering of complex shapes. The BET specific surface area is preferably 4.5 $m^2$/g to 15 $m^2$/g, more preferably 7 $m^2$/g to 13 $m^2$/g and even more preferably 8.4 $m^2$/g to 12 $m^2$/g.

For production of silicon nitride powder by imide pyrolysis, the specific surface area can be controlled by adjusting the specific surface area and oxygen content of the amorphous Si-N(-H)-based compound, for example. For production of silicon nitride powder by a direct nitriding method, the specific surface area can be controlled by adjusting the pulverizing treatment conditions during production, for example.

The specific surface area for the invention is the value measured by the BET-one point method using nitrogen gas, as described in JIS Z 8830:2013 "Determination of the Specific Surface Area of Powders (Solids) by Gas Adsorption" (BET specific surface area).

<Surface oxygen amount (FSO)>

The surface oxygen amount (FSO) of the silicon nitride powder of the invention is in the range of 0.20 mass% to 0.60 mass%. If the surface oxygen amount (FSO) is lower than 0.20 mass%, the amount of melt phase generated during the sintering process will be lower, thus reducing the densification rate and making it impossible to obtain a high-density sintered body. If the surface oxygen amount is greater than 0.60 mass%, on the other hand, a high-density sintered body can be obtained but the amount of grain boundary phase in the sintered body increases, not only lowering the strength properties (strength and toughness) of the resulting sintered body, but also lowering its thermal conductivity. The surface oxygen amount (FSO) is more preferably 0.30 mass% to 0.60 mass%, with an optional lower limit of 0.33 mass% or 0.35 mass%. The upper limit may be 0.53 mass% or 0.46 mass%.

<Surface oxygen amount (FSOA) from silicon oxide layer on particle surfaces, and surface oxygen amount (FSOB) from silicon oxynitride layer on particle surfaces>

As mentioned above, the surface oxygen amount (FSO) is divided into the surface oxygen amount (FSOA) from the silicon oxide layer on the particle surfaces and the surface oxygen amount (FSOB) from the silicon oxynitride layer on the particle surfaces. The surface oxygen amount (FSOA) from the silicon oxide layer on the particle surfaces is preferably 0.10 mass% to 0.50 mass%, and the surface oxygen amount (FSOB) from the silicon oxynitride layer on the particle surfaces is preferably 0.08 mass% to 0.50 mass%. If the surface oxygen amount (FSOA) from the silicon oxide layer on the particle surfaces is 0.10 mass% or greater, the densification rate will be favorable, and if it is 0.50 mass% or lower the strength properties (such as strength and toughness) of the sintered body will be satisfactory. If the surface oxygen amount (FSOB) from the silicon oxynitride layer on the particle surfaces is 0.08 mass% or greater, the densification rate will be favorable, and if it is 0.50 mass% or lower the thermal conductivity of the obtained sintered body will be satisfactory. The surface oxygen amount (FSOA) from the silicon oxide layer on the particle surfaces is preferably 0.14 mass% to 0.47 mass% and more preferably 0.16 mass% to 0.42 mass%. The surface oxygen amount (FSOB) from the silicon oxynitride layer on the particle surfaces is preferably 0.12 mass% to 0.45 mass% and more preferably 0.14 mass% to 0.40 mass%.

<Preparation of surface oxygen amount (FSO)>

For production of silicon nitride powder by imide pyrolysis, the surface oxygen amount (FSO) can be controlled, for example, by adjusting the components in the firing furnace atmosphere (the oxygen concentration and carbon monoxide concentration), or the components in the atmosphere during the step of milling the fired powder (the oxygen concentration and water concentration). The surface oxygen amount (FSOA) from the silicon oxide layer on the particle surfaces is influenced, for example, by the components in the atmosphere during the milling step (the oxygen concentration and water concentration), while the surface oxygen amount (FSOB) from the silicon oxynitride layer on the particle surfaces is strongly influenced by the components in the firing furnace atmosphere (the oxygen concentration and carbon monoxide concentration), for example.

For production of silicon nitride powder by direct nitriding, the surface oxygen amount (FSO) can be controlled, for example, by adjusting the components in the firing furnace atmosphere (the oxygen concentration and carbon monoxide concentration), as well as the hydrofluoric acid concentration during acid treatment of the pulverized powder, for example. The surface oxygen amount (FSOA) from the silicon oxide layer on the particle surfaces is influenced, for example, by the components in the hydrofluoric acid concentration during acid treatment, while the surface oxygen amount (FSOB) from the silicon oxynitride layer on the particle surfaces is influenced, for example, by the components in the firing furnace atmosphere (the oxygen concentration and carbon monoxide concentration).

<Internal oxygen amount (FIO)>

The internal oxygen amount (FIO) of the silicon nitride powder of the invention is 0.4 mass% to 1.3 mass%. An internal oxygen amount (FIO) of lower than 0.4 mass% will undesirably result in abnormal particle growth of $\beta$-type columnar crystals, resulting in lower strength properties. In ordinary firing methods, the particle size distribution of the fired powder is not stable under conditions with an internal oxygen amount (FIO) of lower than 0.4 mass%, making it difficult to stably produce crystalline silicon nitride powder with a BET specific surface area of 3 $m^2$/g or greater, and requiring stronger pulverizing in subsequent steps.

When the internal oxygen amount (FIO) is greater than 1.3 mass%, on the other hand, the composition of the grain boundary phase is changed when the silicon nitride particles dissolve at the grain boundary phase composed of the sintering agent during the silicon nitride sintering process, interfering with deposition and growth of $\beta$-type columnar crystals, so it would be difficult to expect to exhibit sufficient sintered body properties (especially high-temperature strength). The thermal conductivity of the sintered body is also lowered. The internal oxygen amount is more preferably 0.50 mass% to 1.10 mass%, with an optional lower limit of 0.60 mass% or greater, 0.65 mass% or greater or 0.70 mass% or greater, for example. The upper limit may be 1.00 mass% or lower, 0.95 mass% or lower or 0.90 mass% or lower.

<Ratio (FSO/SA) of surface oxygen amount (FSO) with respect to BET specific surface area (SA)>

Since the densification rate of the molded body containing the silicon nitride powder and sintering agent varies depending on the specific surface area of the silicon nitride powder starting material, the preferred value for the surface oxygen amount (FSO) of the silicon nitride powder of the invention will differ depending on the specific surface area (SA). According to the invention, assuming % $\times$ g = g/100 = 10 mg, the units for the ratio (FSO/SA) of surface oxygen amount (FSO) to BET specific surface area (SA) are mg/$m^2$ (where the numerator m is $10^{-3}$ and the denominator m is meters), and therefore %/$m^2 g^{-1}$ = 10 mg/$m^2$.

The range for the ratio (FSO/SA) of surface oxygen amount (FSO) to BET specific surface area (SA) is 0.25 mg/m$^2$ or higher and lower than 0.50 mg/m$^2$ (which may also be represented as: 0.025%/m$^2$g$^{-1}$ or higher and lower than 0.050%$^2$g$^{-1}$). If the FSO/SA ratio is within this range, the densification rate will be increased and grain growth during sintering will be appropriate, to yield a high-density silicon nitride sintered body composed of β-type columnar crystals with the desired long axis diameter and aspect ratio, and having a lower percentage of grain boundary phase, thereby satisfying both conditions of high strength properties (strength and toughness) and thermal conductivity.

If the FSO/SA ratio is lower than 0.25 mg/m$^2$, the amount of melt phase generated by reaction with the sintering agent will be low, making it impossible to sufficiently cover the silicon nitride particles with the melt phase, and thus lowering the densification rate and making it difficult to obtain a high-density sintered body. If the FSO/SA ratio is 0.50 mg/m$^2$ or higher, an excessive amount of melt phase will be generated, with more grain boundary phase, which will not only lower the strength properties (strength and toughness) of the sintered body but will also result in lower thermal conductivity. The FSO/SA ratio is preferably 0.26 mg/m$^2$ to 0.47 mg/m$^2$, optionally with a lower limit of 0.28 mg/m$^2$, 0.30 mg/m$^2$ or 0.38 mg/m$^2$, for example. The upper limit may be 0.44 mg/m$^2$, 0.42 mg/m$^2$ or 0.41 mg/m$^2$, for example.

<Ratio of FSOA to BET specific surface area (SA) (FSOA/SA) and ratio of FSOB to BET specific surface area (SA) (FSOB/SA)>

For fabrication of a silicon nitride sintered body, the initial process of densification is governed mainly by the ratio of FSOA to BET specific surface area (SA) (FSOA/SA), while the intermediate process of densification is mainly governed by the ratio of FSOB to BET specific surface area (SA) (FSOB/SA). In order to control the densification rate, therefore, it is desirable to limit both the FSOA/SA and FSOB/SA to within appropriate ranges. The FSOA/SA ratio is preferably 0.10 mg/m$^2$ to 0.42 mg/m$^2$, optionally with a lower limit of 0.16 mg/m$^2$., for example. The upper limit may be 0.36 mg/m$^2$, for example. The FSOB/SA ratio is preferably 0.08 mg/m$^2$ to 0.40 mg/m$^2$, optionally with a lower limit of 0.14 mg/m$^2$, for example. The upper limit may be 0.34 mg/m$^2$, for example.

<Adjustment of FSO/SA ratio>

For production of silicon nitride powder by imide pyrolysis, the FSO/SA ratio can be controlled, for example, by adjusting the components in the atmosphere during the step of milling the fired powder (the oxygen concentration and water concentration). The FSOA/SA ratio is influenced, for example, by the components in the atmosphere during the milling step (oxygen concentration and water concentration), while the FSOB/SA ratio is influenced, for example, by the components in the firing furnace atmosphere (oxygen concentration and carbon monoxide concentration), for example.

For production of silicon nitride powder by direct nitriding, the FSO/SA ratio can be controlled by adjusting the acid treatment conditions during production, for example. The FSOA/SA ratio is influenced by the hydrofluoric acid concentration during acid treatment, for example, while the FSOB/SA ratio is influenced by the components in the firing furnace atmosphere (oxygen concentration and carbon monoxide concentration), for example.

<Ratio (FIO/SA) of internal oxygen amount (FIO) with respect to BET specific surface area (SA)>

Since the latter stage process of densification of the molded body comprising the silicon nitride powder and sintering agent is governed mainly by the ratio (FIO/SA) between the internal oxygen amount (FIO) and the BET specific surface area (SA), the preferred value for the internal oxygen amount (FIO) of the silicon nitride powder of the invention will differ depending on the specific surface area (SA). Specifically, the ratio (FIO/SA) between the internal oxygen amount (FIO) and the BET specific surface area (SA) is preferably 0.60 mg/m$^2$ to 1.00 mg/m$^2$ (which may also be represented as 0.060%/m$^2$g$^{-1}$ to 0.100%/m$^2$ $^{-1}$). If the FIO/SA ratio is within this range it will be possible to reduce abnormal particle growth during sintering, and increase the homogeneity of the sintered body structure composed of β-type columnar crystals. Moreover since a high-density silicon nitride sintered body with an appropriately controlled composition and abundance ratio grain boundary phase will be obtained, it becomes possible to produce sintered body parts with increased oxidation resistance and high-temperature strength, as well as excellent thermal conductivity.

If the FIO/SA ratio is 0.60 mg/m$^2$ or higher, abnormal particle growth of the β-type columnar crystals will be less likely to occur, with less risk of reduced strength properties and with satisfactory oxidation resistance of the obtained sintered body, which is preferred for use in high temperature mechanical parts, for example.

When the FIO/SA ratio is 1.00 mg/m$^2$ or lower, on the other hand, the composition of the grain boundary phase is stable when the silicon nitride particles dissolve at the grain boundary phase composed of the sintering agent during the silicon nitride sintering process, thus helping to avoid inhibiting deposition and growth of β-type columnar crystals, so that sufficient sintered body properties, and especially fracture toughness may be expected. The high-temperature strength and thermal conductivity will be satisfactory as well. The FIO/SA ratio is more preferably 0.63 mg/m$^2$ to 0.96 mg/m$^2$, optionally with a lower limit of 0.66 mg/m$^2$ or higher, 0.68 mg/m$^2$ or higher or 0.74 mg/m$^2$ or higher, for example. The upper

**EP 4 495 065 A1**

limit is preferably 0.93 mg/m $^2$ or lower, 0.90 mg/m $^2$ or lower or 0.88 mg/m$^2$ or lower, for example.

<Total oxygen content (TO)>

The total oxygen content (TO) is preferably in the range of 0.7 mass% to 1.8 mass%. If the total oxygen content is 0.7 mass% or higher, the amount of melt phase generated during the sintering process will be sufficient, thus increasing the densification rate and allowing a high-density sintered body to be obtained. If the total oxygen content (TO) is 1.8 mass% or lower, on the other hand, it will be possible to obtain a densified sintered body, while the oxygen content of the sintered body will not be excessive and the amount of grain boundary phase will not overly increase, thus resulting in satisfactory strength properties (such as room-temperature strength, high-temperature strength and fracture toughness). The thermal conductivity of the sintered body will also be high. When the surface oxygen amount is lower than 0.3 mass%, the internal oxygen amount value is greater than 1.6 mass%, and the fracture toughness of the obtained sintered body is lower, potentially making it too fragile to be used as a mechanical part. The total oxygen content (TO) is more preferably 0.8 mass% to 1.6 mass%.

The preferred value for the total oxygen content (TO) in the silicon nitride powder of the invention will also vary depending on the specific surface area (SA). The ratio (TO/SA) of the total oxygen content (TO) with respect to the BET specific surface area (SA) is preferably 0.85 mg/m$^2$ to 1.4 mg/m$^2$ (which may also be represented as 0.085%/m$^2$g$^{-1}$ to 0.14%/m$^{2 -1}$). If the TO/SA ratio is 0.85 mg/m$^2$ or higher, the FSO/SA ratio and FIO/SA ratio will each be in preferred ranges, resulting in a satisfactory densification rate and satisfactory mechanical strength. If the TO/SA ratio is 1.4 mg/m$^2$ or lower, on the other hand, the FSO/SA ratio and FIO/SA ratio will each be in preferred ranges, and consequently the oxygen content of the sintered body will be in the preferred range, resulting in satisfactory strength properties (including room-temperature strength, high-temperature strength and fracture toughness). This can also help prevent notable reduction in the thermal conductivity of the sintered body. The TO/SA ratio is more preferably 1.00 mg/m$^2$ to 1.30 mg/m$^2$.

<Particle size distribution>

For the silicon nitride powder of the invention, the median diameter (cumulative 50% diameter) $D_{50}$ is 0.50 $\mu$m to 1.00 $\mu$m, the cumulative 10% diameter $D_{10}$ is preferably 0.20 $\mu$m to 0.50 $\mu$m and the cumulative 90% diameter $D_{90}$ is preferably 1.75 $\mu$m to 2.35 $\mu$m, in the volume-based cumulative particle size distribution according to laser diffraction/-scattering.

The cumulative 10% diameter $D_{10}$ is the particle diameter whose volume, with accumulation from small to large particle diameter in the cumulative particle size distribution, occupies 10% of the total volume, the median diameter $D_{50}$ is the particle diameter whose volume, with accumulation from small to large particle diameter in the volume-based cumulative particle size distribution, occupies 50% of the total volume, and the cumulative 90% diameter $D_{90}$ is the particle diameter whose volume, with accumulation from small to large particle diameter in the cumulative particle size distribution, occupies 90% of the total volume.

<Median diameter $D_{50}$>

The median diameter $D_{50}$ in the volume-based cumulative particle size distribution is 0.50 $\mu$m to 1.00 $\mu$m. If the median diameter $D_{50}$ is smaller than 0.5 $\mu$m, the mean particle diameter will be too fine, tending to lower the green density in ordinary molding methods. Firing in this case will yield a sintered body with a fine structure, but the individual silicon nitride particles will be too fine, tending to result in lower fracture toughness. The high-temperature strength will also tend to be lower. If the median diameter $D_{50}$ is greater than 1.00 $\mu$m, the proportion of coarse particles will increase, lowering the densification rate and tending to result in a heterogeneous sintered body structure. The aggregated micropores in the sintered body will also be formed, usually creating fracture generation sources. The upper limit for the median diameter $D_{50}$ is 0.91 $\mu$m or smaller, 0.87 $\mu$m or smaller or 0.84 $\mu$m or smaller, for example. The lower limit for the median diameter $D_{50}$ is 0.60 $\mu$m or larger, 0.63 $\mu$m or larger or 0.75 $\mu$m or larger for example.

<Cumulative 10% diameter $D_{10}$>

The volume-based cumulative 10% diameter $D_{10}$ is preferably 0.20 $\mu$m to 0.50 $\mu$m. If the volume-based cumulative particle size distribution is within this range, the filling property of the silicon nitride powder will be satisfactory with virtually no molding defects, allowing a homogeneous silicon nitride molded body to be obtained. If the cumulative 10% diameter $D_{10}$ is 0.20 $\mu$m or larger, the proportion of microparticles will not be too great, helping to ensure a suitable green density when molding by ordinary molding methods, and helping to prevent generation of microcracks or voids after sintering. This is also preferred as it will avoid producing an adverse effect on dimensional precision, and can inhibit formation of cuttings or damages (crack aggregation) at the corner sections of sintered bodies during sintering of complex shapes. If the cumulative 10% diameter $D_{10}$ is 0.50 $\mu$m or smaller, the proportion of microparticles will increase, creating a driving force for sintering so that a high-density silicon nitride sintered body can be obtained even without addition of large amounts of sintering agent. Addition of a sintering agent in large amounts can potentially impair the properties of the silicon nitride sintered body. The upper limit for the cumulative 10% diameter $D_{10}$ is 0.47 $\mu$m or smaller, 0.44 $\mu$m or smaller or 0.40 $\mu$m or smaller, for example. The lower limit for the cumulative 10% diameter $D_{10}$ is 0.26 $\mu$m or larger, 0.30 $\mu$m or larger or 0.34 $\mu$m or larger, for example.

\<Cumulative 90% diameter $D_{90}$\>

The cumulative 90% diameter $D_{90}$ in the volume-based cumulative particle size distribution is preferably 1.75 $\mu$m to 2.35 $\mu$m. If the cumulative 90% diameter $D_{90}$ is 1.75 $\mu$m or larger, the particle size distribution will not be too sharp, allowing a suitable green density to be ensured by ordinary molding methods. Firing in this case will yield a sintered body with a fine structure, but the individual silicon nitride particles will not be too fine, tending to result in satisfactory fracture toughness. The high-temperature strength will also be high. If the cumulative 90% diameter $D_{90}$ is 2.35 $\mu$m or smaller, the proportion of coarse particles will be lower, which not only prevents further growth to coarse particles during sintering but also helps prevent generation of microcracks or voids around the coarse particles, which can become fracture generation sources. The upper limit for the cumulative 90% diameter $D_{90}$ is 2.30 $\mu$m or smaller, 2.25 $\mu$m or smaller or 2.19 $\mu$m or smaller, for example. The lower limit for the cumulative 90% diameter $D_{90}$ is 1.93 $\mu$m or larger, 2.00 $\mu$m or larger or 2.05 $\mu$m or larger, for example.

The cumulative 10% diameter $D_{10}$, median diameter $D_{50}$ and cumulative 90% diameter $D_{90}$ in the volume-based cumulative particle size distribution of the silicon nitride powder can be controlled, for example, by adjusting the pulverizing conditions and sorting conditions during production of the silicon nitride powder.

\<Sizes of primary particles, secondary particles and tertiary particles of silicon nitride powder\>

(Sizes of primary particles; sphere-equivalent size $D_{BET}$ based on specific surface area measured by BET method)

Silicon nitride powder consists of aggregates of an extremely large number of silicon nitride particles (several trillion or more), and it is formed of primary particles as the minimal unit, secondary particles formed by fusion or aggregation of primary particles, and tertiary particles formed by aggregation of secondary particles. According to the invention, the sizes of the primary particles are represented by the diameters of the particles calculated from the specific surface area measured by the BET method, assuming spherical particle shapes (the sphere-equivalent sizes) $D_{BET}$, as represented by the following formula.

$$\mathrm{D_{BET}}\ (\mu m) = 6/(\rho \cdot \mathrm{SA})$$

)

Here, $\rho$ is the true density of silicon nitride (3.186 g/cm$^3$), and SA is the BET specific surface area (m$^2$/g).

For example, the sphere-equivalent size $D_{BET}$ is about 0.2 $\mu$m when the BET specific surface area is 9.4 m$^2$/g.

(Sizes of secondary particles and tertiary particles)

The sizes of the secondary particles are on the submicron order, and typically represented as the median diameter $D_{50}$ ($\mu$m) obtained by measurement of the volume-based particle size distribution by laser diffraction/scattering. The sizes of the tertiary particles are on the micron order, and typically represented as the cumulative 90% diameter $D_{90}$ ($\mu$m) obtained by measurement of the volume-based particle size distribution by laser diffraction/scattering.

(First cohesion index and second cohesion index)

By defining the primary particles, secondary particles and tertiary particles in this manner, the ratio $D_{50}/D_{BET}$ between the sizes of the secondary particles and the sizes of the primary particles (that is, the ratio of the median diameter $D_{50}$ and the sphere-equivalent size $D_{BET}$ calculated from the BET specific surface area) is thus defined as the first cohesion index, according to the invention. The ratio $D_{90}/D_{50}$ between the sizes of the tertiary particles and the sizes of the secondary particles (that is, the ratio of the cumulative 90% diameter $D_{90}$ and the median diameter $D_{50}$) is defined as the second cohesion index.

<First cohesion index: $D_{50}/D_{BET}$ ratio>

For the silicon nitride powder of the invention, the first cohesion index represented by the ratio $D_{50}/D_{BET}$ ($\mu$m/$\mu$m) between the median diameter $D_{50}$ ($\mu$m) and the sphere-equivalent size $D_{BET}$ ($\mu$m) is preferably 3.0 to 4.9. If the first cohesion index $D_{50}/D_{BET}$ ($\mu$m/$\mu$m) is 4.9 or lower, warping and deformation of the obtained silicon nitride sintered body will be reduced. If $D_{50}/D_{BET}$ ($\mu$m/$\mu$m) is 3.0 or higher, densification will be facilitated and a silicon nitride sintered body with both high mechanical strength and thermal conductivity will be more easily obtained. Specifically, when the first cohesion index $D_{50}/D_{BET}$ ($\mu$m/$\mu$m) is lower than 3.0, the bulk density of the green body decreases during molding, thus lowering the dimensional precision of the obtained sintered body. If the first cohesion index $D_{50}/D_{BET}$ ($\mu$m/$\mu$m) is higher than 4.9, defects such as voids and pores will be produced inside the molded body resulting in a heterogeneous structure, and making it difficult to obtain a silicon nitride sintered body having both high mechanical strength and thermal conductivity. The $D_{50}/D_{BET}$ ($\mu$m/$\mu$m) is more preferably 3.1 to 4.5. The lower limit for the $D_{50}/D_{BET}$ ($\mu$m/$\mu$m) may be 3.2 or higher or 3.3 or higher. The upper limit for the $D_{50}/D_{BET}$ ($\mu$m/$\mu$m) may be 4.4 or lower or 4.3 or lower.

<Second cohesion index: $D_{90}/D_{50}$ ratio>

For the silicon nitride powder of the invention, the second cohesion index represented by the ratio $D_{90}/D_{50}$ ($\mu$m/$\mu$m) between the cumulative 90% diameter $D_{90}$ ($\mu$m) and the median diameter $D_{50}$ ($\mu$m) is preferably 2.5 to 3.4. If the second cohesion index $D_{90}/D_{50}$ ($\mu$m/$\mu$m) is 3.4 or lower, warping and deformation of the obtained silicon nitride sintered body will be reduced. If the second cohesion index $D_{90}/D_{50}$ ($\mu$m/$\mu$m) is 2.5 or higher, it will be easier to obtain a silicon nitride sintered body with high thermal conductivity. Specifically, when the second cohesion index $D_{90}/D_{50}$ ($\mu$m/$\mu$m) is lower than 2.5, the bulk density of the green body is reduced during molding, not only tending to lower the dimensional precision of the sintered body but also increasing variation in bulk density between molded bodies in mass production, and increasing the rate of product defects. If the second cohesion index $D_{90}/D_{50}$ ($\mu$m/$\mu$m) is higher than 3.4, coarse voids and pores are produced inside the molded body, resulting in a heterogeneous structure and making it difficult to obtain a silicon nitride sintered body having both high mechanical strength and thermal conductivity. The $D_{90}/D_{50}$ ($\mu$m/$\mu$m) is more preferably 2.6 to 3.3. The lower limit for the $D_{90}/D_{50}$ ($\mu$m/$\mu$m) may be 2.7 or higher or 2.8 or higher. The upper limit for the $D_{90}/D_{50}$ ($\mu$m/$\mu$m) may be 3.2 or lower or 3.1 or lower.

<Measurement of cumulative 10% diameter $D_{10}$, median diameter $D_{50}$ and cumulative 90% diameter $D_{90}$>

The cumulative 10% diameter $D_{10}$, median diameter $D_{50}$ and cumulative 90% diameter $D_{90}$ in the volume-based cumulative particle size distribution of the invention are the respective particle diameters such that the cumulative value in the volume-based cumulative particle size distribution is 10%, 50% or 90%, when the particle size distribution is measured by laser diffraction/scattering. Laser diffraction/scattering is measured according to the method described in JIS Z 8825:2013, "Particle size analysis - laser diffraction/scattering".

<Carbon content>

The silicon nitride powder of the invention preferably has a carbon content of 0.01 mass% to 0.2 mass%. During the process of temperature increase, the silicon oxide layer and silicon oxynitride layer on the silicon nitride particle surfaces is reduced by carbon, and a carbon content of 0.2 mass% or lower is therefore preferred because it can ensure the melt phase amount generated at high temperature, increase the densification rate, and help obtain a high-density sintered body. The carbon content is more preferably 0.01 mass% to 0.15 mass%.

<Mass ratio $\beta/(\alpha + \beta)$ of $\beta$ phase with respect to total amount of $\alpha$ phase and $\beta$ phase>

In the silicon nitride powder of the invention, the mass ratio $\beta/(\alpha + \beta)$ of the $\beta$ phase with respect to the total amount of the $\alpha$ phase and $\beta$ phase is preferably 40 mass% or lower. A $\beta/(\alpha + \beta)$ ratio of 40 mass% or lower can prevent increase in the short diameter of the $\beta$-type columnar crystals composing the sintered body and can increase the aspect ratio (long diameter/short diameter ratio), allowing satisfactory strength properties to be obtained. In particular, it can prevent the fracture toughness from being notably lowered. The $\beta/(\alpha + \beta)$ ratio is more preferably 0.5 mass% to 30 mass% and even more preferably 1.5 mass% to 10.0 mass%. A $\beta/(\alpha + \beta)$ ratio of lower than 0.5 mass% is not preferred because abnormal particle growth will proceed during sintering and the sintered body structure composed of the $\beta$-type columnar crystals will become heterogeneous.

<Halogen content>

The halogen content of the silicon nitride powder of the invention is 120 ppm or lower, and is most preferably 5 ppm to 120 ppm. A halogen content within this range will facilitate densification during sintering, and will also result in satisfactory strength properties such as high-temperature strength. Confirming a halogen content of lower than 5 ppm is difficult by analysis methods in terms of detection sensitivity. If the halogen content is 120 ppm or lower, it will be possible to prevent excessive increase in the proportion of halogens in the grain boundary phase of the obtained silicon nitride sintered body, softening of the grain boundary phase under high temperature, and reduction in the high-temperature strength. Impairment of the high temperature creep property can also be prevented. The halogens in the silicon nitride powder are mainly fluorine and chlorine, the total amount of the fluorine content and chlorine content preferably being 5 ppm to 95 ppm. The upper limit for the total amount of the fluorine content and chlorine content may be 90 ppm or lower, 80 ppm or lower, 70 ppm or lower or 65 ppm or lower, for example. The lower limit may be 10 ppm or higher, 20 ppm or higher, 25 ppm or higher or 30 ppm or higher, for example.

<Fluorine content>

The total fluorine content of the silicon nitride powder of the invention is 80 ppm or lower, and is most preferably 2 ppm to 80 ppm. A total fluorine content within this range will facilitate densification during sintering, and will also result in satisfactory strength properties such as high-temperature strength. Confirming a total fluorine content of lower than 2 ppm is difficult by analysis methods, in terms of detection sensitivity. If the total fluorine content is 80 ppm or lower, it will be possible to avoid excessive increase in the proportion of fluorine in the grain boundary phase of the obtained silicon nitride sintered body, helping to prevent softening of the grain boundary phase under high temperature and reduction in the high-temperature strength. Impairment of the high temperature creep property can also be prevented. The total fluorine content is preferably 5 ppm to 70 ppm, with a lower limit of 10 ppm or higher or 15 ppm or higher, for example. The upper limit may be 60 ppm or lower or 50 ppm or lower, for example.

<Surface fluorine content>

Fluorine is present mainly on the particle surfaces of the silicon nitride powder. The surface fluorine content of the silicon nitride powder is 70 ppm or lower, and is most preferably 2 ppm to 70 ppm. A surface fluorine content within this range will facilitate densification during sintering, and will also result in satisfactory strength properties such as high-temperature strength. Confirming a surface fluorine content of lower than 2 ppm is difficult by analysis methods, in terms of detection sensitivity. If the surface fluorine content is 70 ppm or lower it will be possible to avoid reduction in the high-temperature strength of the silicon nitride sintered body, similar to when the total fluorine content is 80 ppm or lower. Impairment of the high temperature creep property can also be reduced.

The surface fluorine content is preferably 5 ppm to 60 ppm, with a lower limit of 8 ppm or higher or 12 ppm or higher, for example. The upper limit may be 50 ppm or lower or 40 ppm or lower, for example. The ratio of the surface fluorine content to the total fluorine content is preferably 0.7 or higher and more preferably 0.8 or higher.

For production of silicon nitride powder by imide pyrolysis it is not necessary to carry out acid treatment of the fired powder, which facilitates obtaining a total fluorine content of 80 ppm or lower. Since pulverizing is necessary in a direct nitriding method for micronization, it is necessary to carry out acid treatment to reduce the impurities produced by pulverizing. Acid treatment chemical components remain as a result, increasing the content of impurities such as fluorine. This has led to attempts to lower the fluorine content of silicon nitride powder, with dependence on post-treatment (washing) after firing.

<Chlorine content>

The total chlorine content of the silicon nitride powder of the invention is 85 ppm or lower, and is most preferably 2 ppm to 85 ppm. A total chlorine content within this range will facilitate densification during sintering, and will also result in satisfactory strength properties such as high-temperature strength. Confirming a total chlorine content of lower than 2 ppm is difficult by analysis methods, in terms of detection sensitivity. If the total chlorine content is 85 ppm or lower, it will be possible to avoid excessive increase in the proportion of chlorine in the grain boundary phase of the obtained silicon nitride sintered body, helping to prevent softening of the grain boundary phase under high temperature and reduction in the high-temperature strength. Impairment of the high temperature creep property can also be reduced. The total chlorine content is preferably 5 ppm to 80 ppm, with a lower limit of 10 ppm or higher or 15 ppm or higher, for example. The upper limit may be 70 ppm or lower or 60 ppm or lower, for example.

Chlorine is present mainly on the particle surfaces of the silicon nitride powder. The surface chlorine content of the silicon nitride powder is 80 ppm or lower, and is most preferably 2 ppm to 80 ppm. A surface chlorine content within this range will facilitate densification during sintering, and will also result in satisfactory strength properties such as high-temperature strength. Confirming a surface chlorine content of lower than 2 ppm is difficult by analysis methods, in terms of detection sensitivity. If the surface chlorine content is 80 ppm or lower it will be possible to avoid reduction in the high-temperature strength of the silicon nitride sintered body, similar to when the total chlorine content is 85 ppm or lower. Impairment of the high temperature creep property can also be reduced.

(Adjustment of halogen content)

Since production of silicon nitride powder by imide pyrolysis uses a silicon halide as the starting material, ammonium halides such as ammonium chloride generated as by-products during the imide synthesis reaction must be thoroughly washed out and removed with liquid ammonia, to lower the halogen content of nitrogen-containing silane compounds such as silicon diimide to 200 ppm or lower and preferably 150 ppm or lower. Alternatively, a large amount of ammonia gas must be supplied during thermal decomposition of the generated imide to significantly lower the hydrogen halide concentration (for example, the hydrochloric acid concentration) in the atmosphere.

Since pulverizing is necessary in a direct nitriding method for micronization, it is also necessary to carry out acid treatment to reduce the impurities produced by pulverizing. This results in residue of acid treatment chemical components, thereby increasing the content of impurities such as chlorine. Similar to the fluorine content, therefore, the chlorine content must also be carefully managed by post-treatment (washing) after firing, for example.

<Method of measuring total fluorine content and surface fluorine content>

The total fluorine content of silicon nitride powder can be determined by using an ion chromatograph to quantify the amount of fluorine desorbed by combustion of the silicon nitride powder in oxygen and a water vapor stream, according to JIS R 1603:2007, "Chemical analysis method for silicon nitride fine powder for fine ceramics". The surface fluorine content can be determined by first boiling water obtained by dispersing silicon nitride powder in water to extract the fluorine on the silicon nitride powder surfaces into the water, and then quantifying the extracted fluorine using ion chromatography. The internal fluorine content is determined by subtracting the surface fluorine content from the total fluorine content. For the purpose of this disclosure, the total fluorine content is the ratio of the total mass of fluorine with respect to the total mass of the silicon nitride powder. The surface fluorine content is the ratio of the mass of surface fluorine with respect to the total mass of the silicon nitride powder. The internal fluorine content is the ratio of the mass of internal fluorine with respect to the total mass of the silicon nitride powder.

<Method of measuring total chlorine content and surface chlorine content>

The total chlorine content of silicon nitride powder can likewise be determined by using an ion chromatograph to quantify the amount of chlorine desorbed by combustion of the silicon nitride powder in oxygen and a water vapor stream, according to JIS R 1603:2007, "Chemical analysis method for silicon nitride fine powder for fine ceramics". The surface chlorine content can be determined by first boiling water obtained by dispersing silicon nitride powder in water to extract the chlorine on the silicon nitride powder surfaces into the water, and then quantifying the extracted chlorine using ion chromatography. The total chlorine content is the ratio of the total mass of chlorine with respect to the total mass of the silicon nitride powder, and for the purpose of this disclosure the total chlorine content is referred to as the "chlorine content".

<Method for producing silicon nitride powder>

<Imide pyrolysis>

There are no particular restrictions on the method for producing the silicon nitride powder of the invention. In imide pyrolysis, for example, an amorphous Si-N(-H)-based compound is fired to produce crystalline silicon nitride powder. The method may be a publicly known method, such as a method of reacting a silicon halide with ammonia, and specifically a method of reacting a silicon halide such as silicon tetrafluoride, silicon tetrachloride, silicon tetrabromide or silicon tetraiodide with ammonia in a gas phase, or a method of reacting a liquid silicon halide with liquid ammonia, to produce a nitrogen-containing silane compound such as silicon diimide, silicon tetraamide or silicon chlorimide.

<Nitrogen-containing silane compound>

(Amorphous Si-N(-H)-based compounds)

These nitrogen-containing silane compounds are represented by the following compositional formula (1).

$$Si_6(NH)_n(NH_2)_{24-2n} \text{ (where n = 0 to 12, including compounds containing halogens as impurities that are not represented by the compositional formula)} \qquad (1)$$

The amount of halogens present as impurities may be 0.05 mass% or lower, and is preferably 0.01 mass% or lower. According to the invention, a nitrogen-containing silane compound where n = 8 to 12 will be referred to as a silicon diimide for convenience.

An amorphous Si-N(-H)-based compound is produced by a publicly known method, such as a method of thermolysing the obtained nitrogen-containing silane compound in a nitrogen or ammonia gas atmosphere at a temperature of 1100°C or below, or a method of reacting a silicon halide such as silicon tetrafluoride, silicon tetrachloride, silicon tetrabromide or silicon tetraiodide with ammonia at high temperature.

The amorphous Si-N(-H)-based compound to be used for the invention is an amorphous SiN-H-based compound comprising the elements Si, N and H or an amorphous silicon nitride containing Si and N obtained by thermolysis of all or a portion of the nitrogen-containing silane compound, , and it is represented by the following compositional formula (2). According to the invention, the amorphous Si-N(-H)-based compound includes all of the series of compounds of compositional formula (2) from $Si_6N_2(NH)_9$ where x = 1 to amorphous $Si_3N_4$ where x = 4, with "$Si_6N_6(NH)_3$ where x = 3" being referred to as silicon nitrogen imide.

$$Si_6N_{2x}(NH)_{12-3x} \text{ (where x = 0 to 4, including compounds containing halogens as impurities which are not represented by the compositional formula)} \qquad (2)$$

The value of x is preferably 1.3 to 3.6, and more preferably 1.65 to 3.10.

In compositional formula (2), $Si_6(NH)_{12}$ where x = 0 is silicon diimide, this silicon diimide being a nitrogen-containing silane compound and not included in the definition of the amorphous Si-N(-H)-based compound of the invention.

(Halogen content)

The amount of halogens such as chlorine present as impurities is preferably 0.01 mass% (100 ppm) or lower, and more preferably 0.007 mass% (70 ppm) or lower. The amount of halogens can be controlled by the ammonia amount of washing solution per 1 kg of generated imide. The ratio of washing solution ammonia amount/imide amount (ammonia amount of washing solution per 1 kg of generated silicon diimide) may be 53 liter/kg to 400 liter/kg, for example, and is more preferably 63 liter/kg to 300 liter/kg.

(Carbon content)

The amount of carbon present as impurity in the silicon nitride powder depends on the content of hydrocarbons such as toluene in the nitrogen-containing silane compound. For example, when the nitrogen-containing silane compound is silicon diimide, the toluene content of the silicon diimide may be controlled to 0.01 to 0.54 mass% so as to obtain a silicon nitride powder carbon content of 0.01 mass% to 0.20 mass% after high-temperature firing. The toluene content of the silicon diimide is more preferably 0.01 mass% to 0.35 mass%.

(Specific surface area)

The specific surface area of the amorphous Si-N(-H)-based compound as the intermediate starting material during production of silicon nitride powder according to the invention is preferably 215 $m^2/g$ to 590 $m^2/g$. A specific surface area of 215 $m^2/g$ or greater will prevnet rapid crystallization in the temperature range of 1000 to 1400°C, and generation of needle-like particles and aggregated particles. Fabricating a sintered body with such powder will result in formation of a homogeneous structure, so that the strength and thermal conductivity of the obtained sintered body will be satisfactory. If the specific surface area is 590 $m^2/g$ or lower, on the other hand, the degree of supersaturation near the particles will increase during crystallization, generating more nuclei and thus avoiding lowering of the specific surface area of the crystalline silicon nitride powder. The sinterability will thus be satisfactory, and the strength and thermal conductivity of the sintered body will be satisfactory. The specific surface area of the amorphous Si-N(-H)-based compound may be 290 $m^2/g$ to 525 $m^2/g$, and is more preferably 340 $m^2/g$ to 500 $m^2/g$.

The specific surface area of the amorphous Si-N(-H)-based compound can be adjusted by changing the maximum temperature used for thermolysis of the nitrogen-containing silane compound starting material. A lower maximum temperature during the thermolysis can increase the specific surface area of the amorphous Si-N(-H)-based compound. The maximum temperature for thermal decomposition when the nitrogen-containing silane compound is silicon diimide may be 480°C to 1060°C, for example, and is preferably 580°C to 980°C.

(Oxygen content percentage)

The oxygen content percentage of the amorphous Si-N(-H)-based compound can be controlled by adjusting the oxygen content in the nitrogen-containing silane compound and the oxygen partial pressure (oxygen concentration) in the atmosphere during thermolysis of the nitrogen-containing silane compound. Reducing the oxygen content of the nitrogen-containing silane compound and lowering the oxygen partial pressure in the atmosphere during the thermolysis can lower the oxygen content percentage of the amorphous Si-N(-H)-based compound. The oxygen concentration in the inert gas supplied to the thermolytic furnace may be 60 ppm to 1250 ppm, for example, and is more preferably 190 ppm to 530 ppm. The oxygen content of the amorphous Si-N(-H)-based compound may be 0.37 mass% to 1.5 mass%, for example, and is preferably 0.58 mass% to 1.0 mass% and more preferably 0.62 mass% to 0.98 mass%.

If the oxygen content of the amorphous Si-N(-H)-based compound is 0.37 mass% or greater, the degree of supersaturation near the particles during crystallization will increase, resulting in more generated nuclei and a more satisfactory value for the specific surface area of the crystalline silicon nitride powder. An oxygen content of 1.5 mass% or lower is preferred for the amorphous Si-N(-H)-based compound as it will help prevent increase in the internal oxygen amount (FIO) of the crystalline silicon nitride powder.

<Firing and crystallization of amorphous Si-N(-H)-based compound>

According to the invention, the amorphous Si-N(-H)-based compound is fired under a nitrogen-containing inert gas atmosphere or under a nitrogen-containing reducing gas atmosphere, preferably at a temperature of 1400 to 1600°C, for conversion to crystalline silicon nitride powder. The heating furnace used for heating of the amorphous Si-N(-H)-based compound may be a common firing furnace such as a batch electric furnace or pusher electric furnace.

A pusher furnace is a firing furnace provided with a furnace chamber that can control the temperature and atmosphere conditions while carrying out firing of a ceramic starting material as the substance to be fired, by successively pushing in and conveying a plurality of base plates, onto each of which has been loaded a crucible housing the substance to be fired, into the furnace using a pusher mechanism.

(Nitrogen-containing inert gas atmosphere)

The nitrogen-containing inert gas atmosphere is a nitrogen atmosphere, or an inert gas atmosphere comprising nitrogen and a rare gas such as argon. In order to obtain a fired powder with a low oxygen content the atmosphere preferably contains absolutely no oxygen, but if it does contain oxygen, the oxygen concentration may be 100 ppm (V) or lower, and preferably 50 ppm (V) or lower. The nitrogen-containing reducing gas atmosphere is an atmosphere comprising an inert gas such as nitrogen and a reducing gas such as hydrogen or ammonia.

(Furnace CO concentration)

In the crystallization and firing step, the carbon monoxide (CO) concentration in the furnace tends to increase due to volatilization of absorbed moisture from the heat-insulating material component of the firing furnace. The furnace CO concentration is preferably from 60 ppm (V) to 240 ppm (V), for example. The furnace CO concentration is preferably 240 ppm (V) or lower to limit increase in the internal oxygen amount and total oxygen content of the obtained silicon nitride powder. If the furnace CO concentration is 60 ppm (V) or higher there will be no need to supply a large amount of nitrogen-containing inert gas for dilution, thus helping to avoid cost increase. The furnace CO concentration may be 120 ppm (V) to 190 ppm (V). The furnace CO concentration also influences the surface oxygen amount (FSOB) from the silicon oxynitride layer on the particle surfaces.

(Temperature-elevating rate and maximum holding temperature)

The specific surface area of the crystalline silicon nitride powder is influenced by the specific surface area of the amorphous Si-N(-H)-based compound, and by the temperature-elevating rate and maximum holding temperature during its firing. The temperature-elevating rate is therefore preferably set to 53°C to 110°C/hr, and the maximum holding temperature to 1430°C to 1595°C, for example. Moreover since the $\beta/(\alpha + \beta)$ ratio in the crystal phase is also influenced by the temperature-elevating rate and maximum holding temperature, more preferably the temperature-elevating rate is 59°C to 100°C/hr and the maximum holding temperature is 1480°C to 1570°C. The holding time at the maximum temperature may be 1 to 5 hours, for example.

<Disassociating treatment>

The obtained crystalline silicon nitride powder is subjected to disassociating treatment under an oxygen-containing inert gas atmosphere (such as an air stream), to adjust the surface oxygen amount (FSO) and the ratio (FSO/SA) of the surface oxygen amount (FSO) with respect to the BET specific surface area (SA). Disassociating may be carried out by milling using a common pulverizing apparatus such as a bead mill, vibrating mill, planetary ball mill or jet mill. The surface oxygen amount of the silicon nitride powder is influenced by the water concentration in the gas supplied to the milling vessel. The water concentration is adjusted to 90 ppm (V) to 3000 ppm (V), for example, and is more preferably 125 ppm (V) to 1400 ppm (V). The water concentration also influences the surface oxygen amount (FSOA) from the silicon oxide layer on the particle surfaces.

<Adjustment of particle size distribution>

The particle size distribution of the crystalline silicon nitride powder is adjusted by the post-milling conditions. For example, when using a continuous vibrating mill, the pulverizing ball diameter, the ball loading weight, the powder filling amount, the mill amplitude and the milling time are comprehensively adjusted to vary the particle size distribution. For example, a pulverizing ball diameter is 15 mm$\varphi$, and a ball space fill factor is 85%. For fine pulverzing, the pulverizing ball diameter is reduced, the ball space fill factor is increased, and the powder filling amount is decreased. In order to obtain the desired median diameter ($D_{50}$), cumulative 90% diameter ($D_{90}$) and cumulative 10% diameter ($D_{10}$), the mill amplitude is adjusted to 7.8 mm to 9.8 mm and the milling time to 25 to 40 minutes, for example. More preferably, the mill amplitude is set to 7.9 mm to 8.7 mm and the milling time to 28 to 35 minutes.

<Direct nitriding method>

For production of silicon nitride powder by direct nitriding in which metal silicon powder is heated in a nitrogen-containing non-oxidizing gas atmosphere, the desired silicon nitride powder can be obtained by controlling the mean particle size and oxygen content of the metal silicon powder starting material, as well as the moisture content of the atmosphere. Specifically, when using metal silicon powder having an appropriately adjusted mean particle size and oxygen content as the starting material, it is preferably subjected to nitriding in nitrogen gas with a water concentration of 1000 ppm or lower or a nitrogen-containing non-oxidizing gas atmosphere, and pulverized, to obtain silicon nitride powder having the specific surface area and oxygen content (total oxygen content, surface oxygen amount and internal oxygen amount) specified above.

(50% diameter (mean particle size))

The metal silicon powder starting material may be metal silicon powder having a 50% diameter (mean particle size) of 5 $\mu$m or smaller in the volume-based cumulative particle size distribution, and preferably the mean particle size is 0.7 $\mu$m to 5.0 $\mu$m. If the mean particle size of the metal silicon powder is 0.7 $\mu$m or larger it will be possible to reduce the internal oxygen amount of the silicon nitride powder obtained by nitriding and pulverizing. If the mean particle size of the metal silicon powder is 5.0 $\mu$m or smaller, the nitriding reaction time will be shortened, resulting in superior productivity. Residue of unreacted silicon can also be prevented. The mean particle diameter of the metal silicon powder is more preferably 1.0 $\mu$m to 3.0 $\mu$m.

(Oxygen content)

The oxygen content of the metal silicon powder can be adjusted by changing the pulverizing and pretreatment conditions. As examples, the oxygen content of metal silicon powder with a mean particle size of 3 $\mu$m is 0.50 mass%, the oxygen content of metal silicon powder with a mean particle size of 6 $\mu$m is 0.30 mass%, and the oxygen content of metal silicon powder with a mean particle size of 10 $\mu$m is 0.20 mass%. Since the oxygen content of the metal silicon powder influences the internal oxygen amount of the obtained crystalline silicon nitride powder, the oxygen content of the metal silicon powder used for production of the silicon nitride powder of the invention may be 0.4 mass% to 1.1 mass%, for example. The oxygen content is more preferably 0.5 mass% to 0.8 mass%.

(Additives)

The starting material for firing is prepared by adding a dilution material, a nitriding accelerator and an organic binder for molding to the metal silicon powder. The dilution material used is crystalline silicon nitride powder with a mean particle diameter of about 0.7 $\mu$m. The nitriding accelerator used is calcium fluoride powder. The organic binder used is polyvinyl alcohol, carboxymethyl cellulose, a waxy emulsion or an acrylic emulsion.

(Dilution material)

Addition of a dilution material can yield a fired product (nitrided ingot) that is easy to pulverize. The amount of crystalline silicon nitride powder added may be 3 mass% to 22 mass%, for example. With addition at less than 3 mass%, more time will be required for nitriding reaction and the nitrided ingot will be excessively hard, thus undesirably increasing the load during the pulverizing step. Addition at greater than 22 mass% has little effect on the high-temperature firing conditions or the properties of the fired product, butis undesirable in terms of increased cost.

(Nitriding accelerator: calcium fluoride powder)

The amount of calcium fluoride powder added may be 0.02 mass% to 0.09 mass%, for example. Addition at greater than 0.09 mass% will cause the internal fluorine content of the obtained crystalline silicon nitride powder to increase, which is undesirable. If calcium and fluorine residue in the nitrided ingot is of concern, addition of calcium fluoride may be omitted.

(Organic binder)

The amount of organic binder added may be 0.2 mass% to 2.0 mass%, for example, in the case of polyvinyl alcohol. Addition at greater than 2.0 mass% will cause the carbon content of the obtained crystalline silicon nitride powder to increase, which is undesirable. If an increased filling amount of the firing starting material into the firing vessel is not necessary, the organic binder does not need to be added.

(Dilution material, nitriding accelerator and organic binder)

The amount of crystalline silicon nitride powder added is preferably 6 mass% to 18 mass%. The amount of calcium fluoride powder added is preferably 0.04 mass% or lower. The amount of polyvinyl alcohol added is preferably 0.2 mass% to 1.4 mass%.

(Supply gas)

Nitrogen or a nitrogen-containing non-oxidizing gas may be used as the supply gas for nitriding of the firing starting material containing the metal silicon powder. In order to obtain a fired powder with a low oxygen content it is preferred for the supply gas to contain absolutely no oxygen, but if it does contain oxygen, the oxygen concentration may be 140 ppm (V) or lower, and preferably 110 ppm (V) or lower. A preferred lower limit for the oxygen concentration is 15 ppm (V) or higher, or 25 ppm (V) or higher. A nitrogen-containing reducing gas atmosphere is an atmosphere comprising nitrogen or a nitrogen-containing inert gas, and a reducing gas such as hydrogen or ammonia. An example of a mixed gas of hydrogen gas and nitrogen gas is a nitrogen gas mixture containing about 0.5 to 15 vol% hydrogen gas, and an example of a mixed gas of ammonia gas and nitrogen gas is a nitrogen gas mixture containing 0.1 vol% to 4.4 vol% ammonia gas. The mixing ratio of ammonia gas is preferably 0.6 vol% to 3.4 vol%. In this case the water concentration of the gas atmosphere is preferably 40 ppm to 1000 ppm, as a water concentration of 1000 ppm or lower can limit increase in the amount of internal oxygen. The water concentration is more preferably 100 ppm to 900 ppm. The concentration of components in the furnace atmosphere (water, oxygen and carbon monoxide) also influences the surface oxygen amount (FSOB) from the silicon oxynitride layer on the particle surfaces.

(Nitriding firing temperature and time)

When the firing starting material containing the metal silicon powder is nitrided in a gas atmosphere, the nitriding temperature may be 1150°C to 1450°C or 1200°C to 1400°C, for example. The nitriding time may be about 15 to 40 hours, but the firing time including temperature increase will be 40 to 70 hours, for example. Repeated heat treatment of the fired product (nitrided ingot) to increase the maximum temperature during high-temperature firing to around 1600°C is preferred for stabilization of the properties of the obtained crystalline silicon nitride powder.

(Temperature-elevating rate)

For production of the silicon nitride powder of the invention, it is preferred for the nitriding reaction rate to be preliminarily examined, adjusting the temperature-elevating rate to 3°C/h to 15°C/h up to a 50% nitriding rate. A temperature-elevating rate of 3°C/h or higher up to a 50% nitriding rate will shorten the firing time, which is preferred to avoid cost increase. A temperature-elevating rate of 15°C/h or lower up to a 50% nitriding rate is also preferred to avoid increasing the percentage of β-type silicon nitride particles in the fired product (nitrided ingot), and to limit the β/(α + β) ratio to 40 mass% or lower. In the temperature range with a 50% or higher nitriding rate it is possible to adjust the temperature-elevating rate to between 10°C/h and 35°C/h, thus increasing the production rate and limiting the nitriding time to about 15 to 40 hours. If the temperature-elevating rate is 10°C/h or higher at a 50% or higher nitriding rate, the firing time will be shortened, which is preferred to avoid cost increase. A temperature-elevating rate of 35°C/h or lower at a 50% or higher nitriding rate is preferred to avoid excessive hardening of the fired product (nitrided ingot) and prevent increase in load during the pulverizing step.

It is more preferred to adjust the temperature-elevating rate to the range of 4.5°C/h to 8.5°C/h up to a 50% nitriding rate, and to adjust the temperature-elevating rate to the range of 23°C/h to 32°C/h at a 50% or higher nitriding rate.

(Maximum temperature)

The maximum temperature for high-temperature firing is 1485°C to 1565°C, for example. If the maximum temperature is 1485°C or higher it will be possible to stabilize the quality of the fired product (nitrided ingot), without variation in the degree of pulverizing in the pulverizing step after nitriding is complete, thus allowing the desired particle size distribution (especially the cumulative 10% diameter $D_{10}$ and cumulative 90% diameter $D_{90}$) to be obtained. A maximum temperature of 1565°C or lower is preferred as this will inhibit coagulation of the generated particles, helping to prevent a harder fired product and increased the load during the pulverizing step. This is also preferred to prevent growth of the β-type silicon nitride particles and increase in the β/(α + β) ratio. In order to obtain crystalline silicon nitride powder with stable quality and a controlled particle size distribution, the maximum temperature is preferably set to 1505°C to 1555°C.

(Pulverizing)

After nitriding is complete, preferably the fired product (nitrided ingot) is pulverized by a method of dry grinding or wet grinding to adjust the particle size, thus obtaining silicon nitride powder pulverized to a mean particle size of 1.0 $\mu$m or smaller and more preferably 0.6 to 0.9 $\mu$m. The specific surface area of the pulverized silicon nitride powder is 7 to 18 $m^2$/g, for example.

The pulverization time may be 1.5 to 10 hours, for example, but the necessary pulverization time will differ depending on the type of pulverizing apparatus. The pulverizing conditions must be changed to match the high-temperature firing conditions, but as one example, when the nitrided ingot is to be pulverized under high-temperature firing conditions using a dry vibrating mill, the mill amplitude is preferably adjusted to 8.0 mm to 10 mm and the milling time is adjusted to 90 minutes to 215 minutes, for example. A mean particle size of 1.0 $\mu$m or smaller is advantageous for sinterability because it can help ensure the densification rate in the sintering step. By setting the mill amplitude and milling time to the aforementioned ranges it is possible to obtain a crystalline silicon nitride powder with the median diameter ($D_{50}$), cumulative 10% diameter ($D_{10}$) and cumulative 90% diameter ($D_{90}$) adjusted to the prescribed ranges. The mill amplitude may be 8.3 mm to 9.2 mm, and the milling time may be 115 minutes to 170 minutes.

(Oxygen content of pulverized product)

The oxygen content of the pulverized product is adjusted to 1.5 mass% to 6.0 mass%, for example. The oxygen content of the pulverized product may be 2.5 mass% to 5.0 mass%.

(Acid treatment and washing)

After pulverizing, the impurities in the pulverized product are removed and purified using hydrofluoric acid (HF) together with an inorganic acid such as hydrochloric acid (HCl), sulfuric acid ($H_2SO4$) or nitric acid (HNO3). That is, acid treatment and washing are carried out using a mixture of hydrofluoric acid and hydrochloric acid, a mixture of hydrofluoric acid and sulfuric acid or a mixture of hydrofluoric acid and nitric acid, with a mixture of hydrofluoric acid and hydrochloric acid being usually used from the viewpoint of solubility of SUS-based impurities. In this method, the chemical components from mixed acid treatment remain, tending to increase the content of impurities such as fluorine.

(Hydrofluoric acid)

Hydrofluoric acid is preferably used at a concentration of 0.35 mass% to 10 mass%. The upper limit for the hydrofluoric acid concentration may be 8 mass% or lower, 5 mass% or lower or 3 mass% or lower, for example. If the upper limit for the hydrofluoric acid concentration is within the aforementioned range it will be easier to adjust the surface oxygen amount of the silicon nitride powder. The lower limit for the hydrofluoric acid concentration may be 0.55 mass% or higher, 0.8 mass% or higher or 1.1 mass% or higher, for example. If the hydrofluoric acid concentration is within this range, it will be easier to adjust the ratio (FSO/SA) of the surface oxygen amount (FSO) with respect to the BET specific surface area (SA) of the silicon nitride powder, by adjusting the treatment temperature and treatment time. The hydrofluoric acid concentration especially influences the ratio (FSOA/SA) of FSOA to BET specific surface area.

(Inorganic acids other than hydrofluoric acid)

The inorganic acids other than hydrofluoric acid are preferably used at concentrations of 1 mass% to 20 mass%. The upper limit for the concentration of the inorganic acid other than hydrofluoric acid may be 17 mass% or lower, 15 mass% or lower or 13 mass% or lower, for example. The lower limit for the concentration of the inorganic acid other than hydrofluoric acid may be 2 mass% or higher, 4 mass% or higher or 5 mass% or higher, for example. If the upper limit and lower limit for the concentration of the inorganic acids other than hydrofluoric acid are within this range it will be easy to adjust the amount of metal impurities in the silicon nitride powder.

(Acid treatment conditions for pulverized product)

The means for contacting the pulverized product with the acid may be a method of dispersing the pulverized product in an acid solution, for example.

The temperature of the acid (or its aqueous solution) used for the acid treatment step is preferably set to 40°C to 80°C. The lower limit for the temperature of the acid in the acid treatment step may be 45°C or higher, 50°C or higher or 55°C or higher, for example. The upper limit for the temperature of the acid in the acid treatment step may be 75°C or lower, 70°C or lower or 65°C or lower, for example. It is sufficient to adjust the temperature of the acid in the acid treatment step to within this range, such as 45°C to 75°C or 50°C to 70°C, for example. The immersion time in the treatment solution may be 2 to 10 hours or 4 to 8 hours, for example.

(Liquid temperature for washing step)

Following acid treatment, the solid (silicon nitride powder) and acid in the acid treatment slurry must be separated while maintaining a temperature near the preset temperature. It is therefore especially important to manage the liquid temperature during the washing step after acid treatment. The temperature of the washing solution (such as ion-exchanged water) is preferably set to 45°C to 80°C. The lower limit for the temperature of the washing water may be 50°C or higher, 55°C or higher or 60°C or higher, for example. The upper limit for the temperature of the washing water may be 75°C or lower, 70°C or lower or 65°C or lower, for example. It is sufficient to adjust the temperature of the washing solution in the washing treatment step to within this range, such as 45°C to 75°C or 50°C to 70°C, for example. If the temperature of the washing solution is lower than 45°C, the solid will cool while in contact with high-concentration acid, resulting in residue of chemical components that have adsorbed onto the solid surface, and tending to increase the content of impurities such as fluorine and chlorine. Setting the temperature of the washing solution to 45 to 80°C means adjusting the slurry temperature after acid treatment to a range of 45°C to 80°C.

(Washing solution pH)

The pH of the washing solution at the end point of washing is preferably adjusted to 3.0 to 6.0. The pH of the washing solution may be 3.1 to 5.0, or it may be 3.2 to 4.5.

(Drying temperature)

The drying temperature of the filter cake is preferably adjusted to 70°C to 100°C. The drying temperature may be 75°C to 95°C, or it may be 85°C to 90°C. A low drying temperature is undesirable as more time will be required for drying, the drying temperature will be too high, and the dried product will be hardened, creating more of a load during the pulverizing step.

(Measurement of surface oxygen amount (FSO), internal oxygen amount (FIO) and total oxygen content (TO))

The surface oxygen amount (FSO), internal oxygen amount (FIO) and total oxygen content (TO) of the silicon nitride powder of the invention can be measured by the following procedure. The silicon nitride powder is weighed out and the oxygen content and nitrogen content of the silicon nitride powder are analyzed using an oxygen/nitrogen simultaneouslanalyzer. The measuring sample is increased in temperature from 20°C to 2000°C at a temperature-elevating rate of 4 to 8°C/sec, for example, in a helium gas atmosphere, and the oxygen desorbed as the temperature increases is detected and subjected to the following temperature increase mode analysis. As temperature increase begins, the oxygen bonded on the surface of the silicon nitride powder is desorbed, and the surface oxygen amount can thus be determined by quantifying the desorbed oxygen content. In other words, the surface oxygen amount (FSOA) from the silicon oxide layer on the particle surfaces can be determined. When the temperature later reaches near 1500°C, the silicon oxynitride near the particle surfaces begins to decompose. Since initial decomposition of silicon oxynitride can be discerned by initial detection of nitrogen, it is possible to determine the surface oxygen amount (FSOB) derived from the silicon oxynitride layer near the particle surfaces. The silicon nitride inside the particles has a higher decomposition temperature, and therefore the concentration peak of oxygen desorbed from the silicon oxide layer and silicon oxynitride layer on the particle surfaces is the minimum value (the concentration at the maximum depth of the peak valley) at temperatures over 1500°C (for example, 1550 to 1650°C). Although the temperature at which the oxygen concentration peak is minimum differs slightly depending on the production history of the silicon nitride powder (imide pyrolysis or metal silicon direct nitriding), the silicon nitride begins to decompose after the temperature at which it is minimum (1550 to 1650°C, for example). In other words, the initial decomposition of silicon nitride can be ascertained as the temperature at which the concentration peak of desorbed oxygen is minimum (the maximum depth of the peak valley). When silicon nitride begins to decompose, the oxygen inside the silicon nitride powder is desorbed. The oxygen desorbed at this stage can be quantified to determine the internal oxygen amount (FIO).

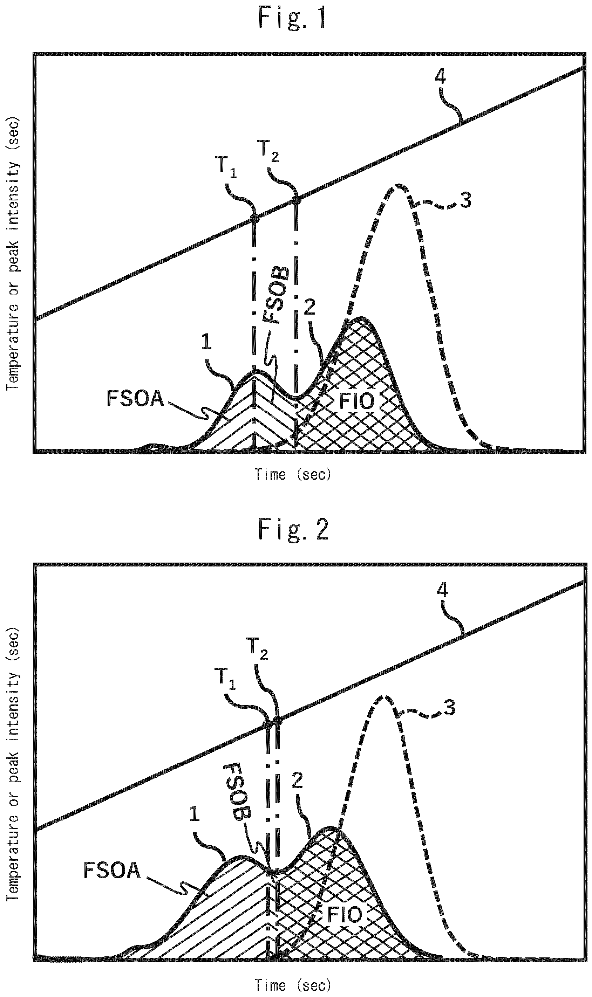

Figs. 1 to 3 are drawings showing examples of oxygen and nitrogen concentration charts for silicon nitride powder obtained by simultaneous oxygen/nitrogen analysis. Peak 1 is the surface oxygen peak, and peak 2 is the internal oxygen peak. Peak 3 is the nitrogen peak. The straight line 4 is the temperature increase line. Peak 1 and peak 2 are divided by temperature $T_2$ as the maximum depth of the valley between both peaks. The left end of peak 3 where nitrogen begins to be detected (temperature $T_1$) does not coincide with the maximum depth of the valley between peaks 1 and 2 (temperature $T_2$). In Figs. 1 to 3, peak 3 clearly begins to increase in the temperature range where the top of peak 1 is detected. This demonstrates that a silicon oxide layer and silicon oxynitride layer have been formed on the surfaces of the silicon nitride particles of the invention from the rise of peak 3 near temperature $T_1$. Based on the temperature at which peak 3 begins to be detected, i.e. the temperature $T_1$ at which peak 3 rises, it is possible to distinguish the layer of the particle surfaces from which the surface oxygen has been generated (whether from the silicon oxide layer or the silicon oxynitride layer of the particle surfaces). The surface oxygen amount (FSO) according to the invention is the amount of oxygen released from both the silicon oxide layer and the silicon oxynitride layer present on the particle surfaces, and it can be further divided into the surface oxygen amount (FSOA) from the silicon oxide layer and the surface oxygen amount (FSOB) from the silicon oxynitride layer on the particle surfaces, depending on temperature $T_1$ at which peak 3 rises.

Temperature $T_1$ at which peak 3 rises will usually be 1400 to 1550°C, and temperature $T_2$ which divides peak 1 and peak 2 will usually be 1550 to 1650°C. The temperature at which peak 1 begins to be detected (the temperature at the left end of peak 1) is 750 to 1300°C, for example. The temperature at which peak 2 ceases to be detected (the temperature at the right end of peak 2) is 1800 to 1900°C, for example. The internal oxygen amount (FIO) and surface oxygen amount (FSO) are detected based on a calibration curve, from the integrated value (area) of peak 1 and 2. The surface oxygen amount (FSO) is further divided into the surface oxygen amount (FSOA) from the silicon oxide layer and the surface oxygen amount (FSOB) from the silicon oxynitride layer on the particle surfaces, depending on temperature $T_1$ at which peak 3 rises. The total of the internal oxygen amount (FIO) and surface oxygen amount (FSO) is the total oxygen content (TO).

These may approach each other or recede away from each other, depending on the production history of the silicon nitride powder (imide pyrolysis or metal silicon direct nitriding). Since peak 1 and peak 2 are not completely divided near temperature $T_2$ but are overlapping, the silicon nitride particle interiors decompose and release nitrogen, but for the purpose of the invention it was concluded that the surface oxygen amount (FSOB) from the silicon oxynitride layer on the particle surfaces and the internal oxygen amount (FIO) due to oxygen inside the particles can be quantified separately.

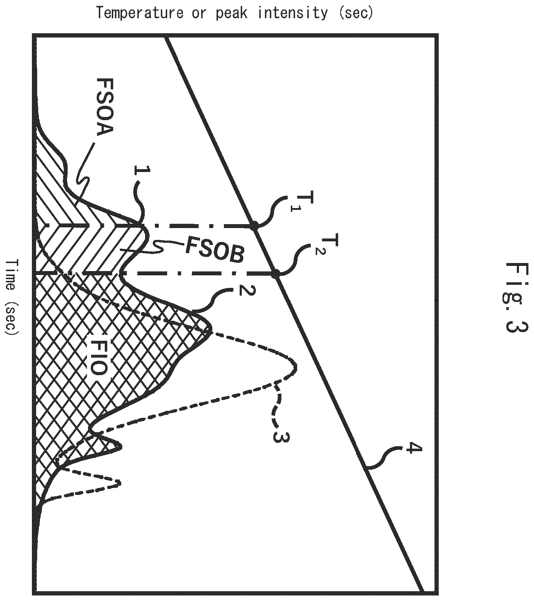

Fig. 1 is an example where temperature $T_1$, at the left end of peak 3 where nitrogen is initially detected, is low and separate from $T_2$ (FSOA is small and FSOB is large), Fig. 2 is an example where temperature $T_1$ at the left end of peak 3 where nitrogen is initially detected is high and close to $T_2$ (FSOA is large and FSOB is small), and Fig. 3 is an example where temperature $T_1$ at the left end of peak 3 where nitrogen is initially detected is low and separate from $T_2$, similar to Fig. 1, but peak 1 and peak 2 are both irregular without smooth concentration peaks.

Since the silicon nitride powders of Figs. 1 to 3 have a surface oxygen amount (FSO) and internal oxygen amount (FIO) within appropriate ranges, they can be used as starting materials for sintering to obtain silicon nitride sintered bodies with excellent thermal conductivity. The reason for this is thought to be that with surface oxygen amount (FSO) in an appropriate range the densification rate is high and a high-density sintered body can be obtained, and that an internal oxygen amount (FIO) in an appropriate range inhibits excessive growth of β-type columnar crystals, allowing interior defects to be reduced. The surface oxygen amount (FSO) of the silicon nitride powder is preferably equal to or less than the internal oxygen amount (FIO), as in Figs. 1 to 3. It is thus possible to obtain a silicon nitride sintered body having both high thermal conductivity and mechanical properties.

The significance of dividing the surface oxygen amount (FSO) into the surface oxygen amount (FSOA) from the silicon oxide layer on the particle surfaces and the surface oxygen amount (FSOB) from the silicon oxynitride layer on the particle surfaces was explained above.

The ratio of the surface oxygen amount (FSO) to the internal oxygen amount (FIO) may be 0.75 or lower, 0.65 or lower or 0.5 or lower. If the total oxygen content is 1.6 mass% or lower while the ratio of the surface oxygen amount (FSO) to the internal oxygen amount (FIO) is 0.38 to 0.65, the thermal conductivity of the silicon nitride sintered body can be notably improved.

<Method for producing silicon nitride sintered body>

The silicon nitride sintered body of the invention is fabricated by the following method.

After mixing the silicon nitride powder of the invention with a sintering agent and molding the obtained mixed powder, the resulting molded body may be sintered to produce a silicon nitride sintered body for use as a high-temperature structural member according to the invention. Alternatively, molding and sintering may be carried out simultaneously to produce a silicon nitride sintered body for use as a high-temperature structural member of the invention.

(Sintering agent)

Because silicon nitride is difficult to sinter, it is common to produce sintered bodies by adding a sintering agent to promote sintering. Because high-temperature stable $\beta$-type columnar crystals precipitate out during the sintering process for sintering of silicon nitride, most of the silicon nitride crystal particles in the sintered body are $\beta$-type columnar crystals. The fine structure including the aspect ratio and particle diameters of $\beta$-type columnar crystals is greatly influenced not only by the silicon nitride powder starting material but also by the type and amount of sintering agent added, as well as the sintering conditions, and these factors are therefore selected as appropriate for the physical properties of the silicon nitride powder and the properties desired for the silicon nitride sintered body.

In order to increase the mechanical strength of a silicon nitride sintered body it is preferable to produce a fine structure with a high aspect ratio of the $\beta$-type columnar crystals in the silicon nitride sintered body structure. The sintering agent used in this case will generally be an appropriate combination of magnesium oxide (MgO), aluminum oxide ($Al_2O_3$) and yttrium oxide ($Y_2O3$). A rare earth oxide such as ytterbium oxide which is effective for increasing the heat resistance at the grain boundary phase, is sometimes used in combination with the aforementioned sintering agent in the structure of silicon nitride sintered bodies for use in high-temperature structural members that require especially high-temperature strength, such as gas turbine members. An oxide-based sintering agent may be added to the starting material for sintered body production at 5 mass% to 12 mass%, for example.

The method for mixing the silicon nitride powder of the invention with the sintering agent may be either a wet or dry method, so long as it allows them to be homogeneously mixed, and any publicly known method such as rotary milling, barrel milling or vibrating milling may be used. For example, the silicon nitride powder, a sintering agent, a molding binder and a dispersing agent may be dispersed in water and mixed with a ball mill and then spray dried to form granules from the mixed powder.

(Mixed powder molding method)

The method of molding the mixed powder may be a publicly known method such as press molding, cast molding, extrusion molding, injection molding, sludge removal molding or cold isostatic pressing. For example, CIP (cold isostatic press) molding may be employed, in which the obtained granular mixed powder is packing into a rubber die and subjected to pressure to obtain a molded body.

(Molded body sintering method)

The method of sintering the molded body may be any method such that the obtained sintered body is densified, but it is preferably ordinary pressure sintering in a nitrogen-containing inert gas atmosphere, or pressurized atmosphere sintering with the atmosphere gas pressure increased to about 0.2 to 10 MPa. Preferably, nitrogen gas is used for sintering, with a temperature range of about 1700 to 1800°C for ordinary pressure sintering and about 1800 to 2000°C for pressurized atmosphere sintering. The temperature-elevating rate from about 1400°C to the maximum temperature may be 40°C/h to 150°C/h, for example, and the holding time at the maximum temperature may be 2 to 20 hours, for example.

A hot press may also be employed, as a method of simultaneously carrying out molding and sintering. Sintering with a hot press is preferably carried out in a nitrogen atmosphere with an applied pressure of 2 to 20 MPa and a sintering temperature of 1750 to 1950°C.

<Method for producing silicon nitride sintered body for circuit board>

A silicon nitride sintered body for a circuit board according to the invention is produced by the following method.

A sintering agent and organic binder are added to silicon nitride powder of the invention to prepare a starting mixture, and the obtained starting mixture is used in a sheet forming method such as doctor blading to obtain a molded body (green sheet). After then removing the organic binder by degreasing treatment, the obtained degreased molded body may be sintered in a nitrogen-containing inert atmosphere under the sintering conditions (temperature-elevating rate, maximum temperature and holding time at the maximum temperature) described above, to produce a silicon nitride sintered body for a circuit board according to the invention. When the purpose is to evaluate the thermal conductivity and mechanical properties of the silicon nitride sintered body for a circuit board, the thermal and mechanical properties of a sintered body obtained by CIP (cold isostatic press) molding may be measured.

(Sintering agent)

According to the invention, a sintering agent such as yttrium oxide, a lanthanoid rare earth oxide, magnesium oxide, magnesium silicon nitride (MgSiN2, MgSi$_4$N6) or a rare earth-silicon complex nitride ($Y_2Si_3N_6$) may be used, either alone or in an appropriate combination. The amount of sintering agent added to the starting material for sintered body production may be 3 mass% to 8 mass%, for example.

In order to increase the thermal conductivity of the silicon nitride sintered body it is effective to increase the purity of the β-type crystals and increase their dimensions. However, because of the typical trade-off relationship between tsuch crystalline form (large crystal grain dimensions) and mechanical strength for a silicon nitride sintered body, a suitable sintering agent is selected in a suitable amount from among the aforementioned sintering agents, to allow formation of an intricately intertwined structure of β-type crystals with suitable particle sizes, and to allow densification with a minimum amount of grain boundary phase.

<Mechanical properties of high-strength silicon nitride sintered body for structural member>

The high-strength silicon nitride sintered body for a structural member produced as described above has excellent mechanical properties. For example, the three-point bending strength at room temperature may be 800 MPa or greater, or it may be 930 MPa or greater. The three-point bending strength at high temperature (1250°C) may be 530 MPa or greater or 610 MPa or greater.

<Mechanical properties and heat dissipation of highly thermal-conductive silicon nitride sintered body for circuit board>

A highly thermal-conductive silicon nitride sintered body for a circuit board has excellent mechanical properties and heat dissipation. For example, the three-point bending strength at room temperature may be 660 MPa or greater, or it may be 720 MPa or greater. The thermal conductivity at room temperature may be 100 W/(m·K) or higher, or 110 W/(m·K) or higher.

EXAMPLES

The present invention will now be explained in detail by Examples, with the understanding that these Examples are in no way limitative on the invention.

(Method of measuring toluene content)

A nitrogen-containing silane compound such as silicon diimide was immersed and dispersed in hexane, extracting the toluene in the nitrogen-containing silane compound into the hexane, and the toluene concentration in the hexane was quantified by gas chromatography to determine the toluene content of the nitrogen-containing silane compound.

(Compositional analysis of amorphous Si-N(-H)-based compound)

The silicon (Si) content of the amorphous Si-N(-H)-based compound was measured by quantitation of the total silicon by the dehydrated weight ICP emission spectroscopy combination method, according to JIS R1603:2007, "Chemical analysis of silicon nitride fine powder for fine ceramics". The nitrogen (N) content was measured by quantitation of the total nitrogen by steam distillation separation neutralization titration, according to JIS R1603:2007. The oxygen (O) content was measured by quantitation of oxygen using an oxygen/nitrogen simultaneous analyzer, by the inert gas fusion-carbon dioxide infrared absorbing method of JIS R1603:2007. In order to inhibit oxidation of the amorphous Si-N(-H)-based compound, the sample was handled in a nitrogen-purged glove box. For example, for measurement of the silicon/nitrogen content by ICP emission analysis or steam distillation separation neutralization titration, a nitrogen atmosphere is used for storage of the sample up until directly before pretreatment of the sample for measurement, while for measurement of the oxygen content by infrared absorption, a nitrogen atmosphere is used as the atmosphere during sample storage and capsule insertion, up until directly before measurement. The hydrogen (H) content of the amorphous Si-N(-H)-based compound is calculated from the theoretical chemical composition, as the remainder after subtracting the silicon (Si), nitrogen (N) and oxygen (O) contents from the total amount of the amorphous Si-N(-H)-based compound.

The Si, N and H ratio are thus determined to ascertain the compositional formula of the amorphous Si-N(-H)-based compound.

(Method of measuring oxygen content)

Measurement of the oxygen (O) content was based on quantitation of oxygen using an oxygen/nitrogen simultaneous analyzer (Model TCH600 by LECO Corp.), according to the inert gas fusion-carbon dioxide infrared absorption method of JIS R1603:2007, measuring the oxygen content of the silicon nitride powder by the following procedure.

The silicon nitride powder was weighed out and the measuring sample was set in an oxygen/nitrogen simultaneous analyzer. The temperature was raised from 20°C to 2000°C at a temperature-elevating rate of 4 to 8°C/sec in a helium gas atmosphere, and the oxygen and nitrogen separating during temperature increase were detected to obtain a concentration chart for oxygen (non-dispersed infrared absorption) and nitrogen (thermal conductivity method). The measurement results are shown in Figs. 1 to 3. As shown in Figs. 1 to 3, peak 1 derived from surface oxygen, peak 2 derived from internal oxygen, and peak 3 derived from nitrogen were detected in the oxygen and nitrogen concentration charts. The straight line 4 indicates temperature. As temperature increase begins, the oxygen bonded on the surface of the silicon nitride powder is desorbed, and therefore the surface oxygen amount (FSOA) from the silicon oxide layer on the particle surfaces can be determined by quantifying the desorbed oxygen content. The nitrogen then begins to desorb from temperature $T_1$ (for example, 1400 to 1550°C), and peak 3 begins to be detected. Since nitrogen desorbed from the silicon oxynitride layer is detected at temperature $T_1$ at which peak 3 rises, the surface oxygen amount (FSOB) from the silicon oxynitride layer near the particle surfaces can be determined by quantitation of the oxygen content desorbed in the temperature range from $T_1$ to $T_2$. The surface oxygen amount (FSO) is the sum of FSOA and FSOB, as explained below.

In regard to measurement of the surface oxygen amount (FSO), internal oxygen amount (FIO) and total oxygen content (TO), as mentioned above, the oxygen concentration chart changes from decrease to increase upon reaching temperature $T_2$ which exceeds 1500°C (for example, 1550 to 1650°C), with a minimum value appearing between peak 1 derived from surface oxygen and peak 2 derived from internal oxygen (the concentration at the maximum depth of the peak valley). In other words, both peaks are divided by temperature $T_2$, as the minimum value for the detected concentration of oxygen. Since silicon nitride begins to decompose when the temperature exceeds $T_2$, the oxygen desorbed at a temperature of $T_2$ or higher is quantified as the internal oxygen amount (FIO). Peak 1 and peak 2 are thus separated by temperature $T_2$, and therefore the internal oxygen amount (FIO) and surface oxygen amount (FSO) were calculated from the integrated value (area) of peaks 1 and 2, based on the calibration curve described below. The total of the internal oxygen amount (FIO) and surface oxygen amount (FSO) was used as the total oxygen content (TO).

Total oxygen content (mass%) = internal oxygen amount (mass%) + surface oxygen amount (mass%) (3)

For measurement of the oxygen content and nitrogen content, first a standard sample is used to draw a calibration curve. Since the integrated value of the peak intensity for oxygen detected with a non-dispersed infrared-absorbing cell is not necessarily linear with respect to the actual oxygen concentration, the desorbed oxygen content (depending on the mass of the standard sample) was separately varied on about 5 levels and measured for calibration, and a calibration curve was generated for oxygen content with respect to peak intensity integrated value, calculating the oxygen content based on the calibration curve.

In the concentration charts for oxygen (non-dispersed infrared absorption) and nitrogen (thermal conductivity method) shown in Figs. 1 to 3, the abscissa represents time. Figs. 1 to 3 demonstrate according to the rise of peak 3 near temperature $T_1$ that a silicon oxide layer and silicon oxynitride layer had been formed on the surfaces of the silicon nitride particles of the invention. Consequently, the surface oxygen amount determined from the area of peak 1 is measured as the amount of oxygen released from both the silicon oxide layer and the silicon oxynitride layer present on the particle surfaces. The temperature $T_1$ at which peak 3 rises (left end of peak 3) due to nitrogen was therefore detected to subdivide the surface oxygen amount (FSO) into surface oxygen amount (FSOA) from the silicon oxide layer on the particle surfaces and surface oxygen amount (FSOB) from the silicon oxynitride layer on the particle surfaces. In order to increase the measuring precision (reproducibility), specifically, the time point at which the concentration peak increased to 0.5% of the maximum concentration value of peak 3 at the left end of peak 3 was defined as the "temperature $T_1$ at which peak 3 rises", and used to subdivide the area of peak 1 into FSOA and FSOB.

$$FSO\ (mass\%) = FSOA\ (mass\%) + FSOB\ (mass\%) \qquad (4)$$

Normal measurement was conducted at a temperature-elevating rate of 8°C/sec, but in cases where peak 1 and peak 2 were difficult to separate and discriminate, the temperature-elevating rate was lowered to 4°C/sec and the oxygen and nitrogen concentration profiles were measured. If the ratio of surface oxygen amount (FSO) to internal oxygen amount (FIO) is lower than 0.3, peak 1 and peak 2 cannot be separated in some cases even if the temperature-elevating rate is lowered to 4°C/sec. In such cases a peak simulation is conducted, based on a peak profile for the oxygen concentration of the powder sample having FSO/FIO of near 0.6 and a steep peak valley (minimum) at temperature $T_2$, determining the surface oxygen amount (FSO) and internal oxygen amount (FIO) based on the results of the simulation.

(Method of measuring carbon content)

The carbon content of the silicon nitride powder was measured by quantitation of carbon by combustion-infrared absorption using a carbon analyzer C844 by LECO Corp.), according to JIS R 1603:2007, "Chemical analysis method for silicon nitride fine powder for fine ceramics".

(Method of measuring fluorine content)

The total fluorine content of the silicon nitride powder was measured by quantitation of fluorine by thermal hydrolysis separation-ion chromatography, according to JIS R 1603:2007, "Chemical analysis method for silicon nitride fine powder for fine ceramics". The surface fluorine content was determined by boiling water obtained by dispersing silicon nitride powder in water to extract the fluorine on the silicon nitride powder surfaces into the water, and quantifying the extracted fluorine using ion chromatography. The internal fluorine content was determined by subtracting the surface fluorine content from the total fluorine content. This is based on the following established formula.

Total fluoruine content (ppm by mass) = Internal fluorine content (ppm by mass) + surface fluorine content (ppm by mass)      (4)

(Method of measuring chlorine content)

The total chlorine content of the silicon nitride powder was measured by quantitation of chlorine by thermal hydrolysis separation-ion chromatography, according to JIS R 1603:2007, "Chemical analysis method for silicon nitride fine powder for fine ceramics".

(Method of measuring metal silicon content)

The metal silicon content of the silicon nitride powder was measured by a hydrogen gas generation-gas volume method according to JIS R1616:2007, "9. Free silicon quantitation method", as applied for a free silicon content of 0.01 mass% to 1 mass%.

(Method of measuring specific surface area)

The specific surface area of the silicon nitride powder and the amorphous Si-N(-H)-based compound were detected by measurement by the single point BET method, based on nitrogen gas adsorption using a Macsorb by Mountech Co.

(Method of measuring degree of crystallinity)

Weighed out silicon nitride powder was added to a 0.5 N NaOH aqueous solution and heated to 100°C. The $NH_3$ gas generated by decomposition of silicon nitride was absorbed into a 1% boric acid aqueous solution, and the amount of $NH_3$ in the absorbing solution was titrated with a 0.1 N sulfuric acid standard solution. The amount of decomposed nitrogen was calculated from the amount of $NH_3$ in the absorbing solution. The degree of crystallinity was calculated using the following formula (5), based on the amount of decomposed nitrogen and a theoretical nitrogen content of 39.94% in silicon

nitride.

$$\text{Degree of crystallinity (\%)} = 100 - (\text{decomposed nitrogen} \times 100/39.94) \quad (5)$$

(Method of measuring $\alpha$ phase, $\beta$ phase and $\beta/(\alpha + \beta)$ ratio)

A RINT-TTRIII wide-angle X-ray diffraction analyzer by Rigaku Corp. was used for measurement of the X-ray diffraction pattern of the silicon nitride powder. The powder X-ray diffraction was conducted using CuK$\alpha$ rays, identifying the crystal phases ($\alpha$ phase and $\beta$ phase) of the produced silicon nitride powder and calculating the $\beta/(\alpha + \beta)$ ratio by the method of Gazzara & Messier described in NPL 1.

(Method of measuring particle size distribution, and median diameter, 10% diameter and 90% diameter of silicon nitride powder)

The particle size distribution of the silicon nitride powder of the invention was measured in the following manner. The powder was loaded into a 0.2 mass% sodium hexametaphosphate aqueous solution, and an ultrasonic homogenizer equipped with a stainless steel center cone with a diameter of 26 mm was used for dispersion treatment for 6 minutes at an output of 300 W to prepare a dilute solution as a measuring sample. A laser diffraction/scattering particle size distribution meter (MT3000 Microtrac by Microtrac-Bell Corp.) was used to measure the particle size distribution of the measuring sample. Using the obtained volume-based particle size distribution data for the silicon nitride powder of the invention, the frequency was calculated based on the cumulative undersieve distribution (vol%), to obtain a cumulative particle size distribution curve. The median diameter (cumulative 50% diameter) in the cumulative particle size distribution curve was recorded as the mean particle size ($D_{50}$), the particle size corresponding to 10% cumulative undersieve distribution was recorded as the cumulative 10% diameter ($D_{10}$), and the particle size corresponding to 90% cumulative undersieve distribution was recorded as the cumulative 90% diameter ($D_{90}$).

(Method of fabricating and evaluating high-strength sintered body for structural member)

A mixed powder obtained by adding 5 parts by mass of yttrium oxide (specific surface area: 3 m$^2$/g, Shin-Etsu Chemical Co., Ltd.) and 2 parts by mass of aluminum oxide (specific surface area: 7.4 m$^2$/g, Sumitomo Chemical Co., Ltd.) as sintering agents to 93 parts by mass of silicon nitride powder was wet blended for 36 hours with a ball mill using ethanol as the medium, and then dried under reduced pressure. The obtained mixture was molded in a die with a 6 $\times$ 45 $\times$ 75 mm shape under a molding pressure of 50 MPa, and then subjected to CIP molding at a molding pressure of 150 MPa. The obtained molded body was placed in a silicon nitride crucible and sintered for 2 hours under a nitrogen gas atmosphere at 1780°C. The obtained sintered body was cut, shaved and polished to fabricate a 3 mm $\times$ 4 mm $\times$ 40 mm bending test piece conforming to JIS R1601. The bulk density of the sintered body was measured by Archimedes' method. Assuming the silicon nitride particles to have been completely converted to $\beta$-type silicon nitride, the relative density (%) was calculated from the density calculated from the starting material composition, and the sintered body bulk density. The three-point bending strength at room temperature and 1250°C was measured by the method of JIS R1601 using a universal material tester by Instron. The crosshead speed was 0.5 mm/min. The flexural strength at room temperature was the average value for 40 samples. A high temperature bending test was carried out by holding each test piece in an air atmosphere at 1250°C for 10 minutes, measuring the strength of 8 or more test pieces, and calculating the average. Each of ten 3 mm $\times$ 4 mm $\times$ 40 mm test pieces were also heat treated for 100 hours in air at 1300°C, measuring the three-point bending strength at room temperature after oxidation of each test piece, and calculating the average.

(Method of fabricating and evaluating high heat conduction sintered body for circuit board)

A mixed powder obtained by adding 3.5 parts by mass of yttrium oxide (specific surface area: 3 m$^2$/g, Shin-Etsu Chemical Co., Ltd.) and 2 parts by mass of magnesium oxide (specific surface area: 3 m$^2$/g, Kojundo Chemical Lab. Co., Ltd.) as sintering agents to 94.5 parts by mass of silicon nitride powder was wet blended for 24 hours with a ball mill using ethanol as the medium, and then dried under reduced pressure. The obtained mixture was die molded to a shape of 6 $\times$ 45 $\times$ 75 mm and a shape of 12.3 mm$\varphi$ $\times$ 1.6 mmt under a molding pressure of 50 MPa, and then subjected to CIP molding at a molding pressure of 150 MPa. The obtained molded body was placed in a boron nitride crucible and sintered for 10 hours under a pressurized nitrogen gas atmosphere of 0.8 MPa at 1900°C. The obtained sintered body was cut, shaved and polished, to fabricate a 3 mm $\times$ 4 mm $\times$ 40 mm bending test piece conforming to JIS R1601, and a 10 mm$\varphi$ diameter $\times$ 1 mmt thick discoid test piece for thermal conductivity measurement conforming to JIS R1611. The bulk density of the sintered body was measured by Archimedes' method. Assuming the silicon nitride particles to have been completely converted to β-type silicon nitride, the relative density (%) was calculated from the density calculated from the starting material composition, and the sintered body bulk density. The three-point bending strength at room temperature was measured by the method of JIS R1601 using a universal material tester by Instron, and the thermal conductivity was measured at room temperature by the flash method according to JIS R1611. The crosshead speed for the bending test was 0.5 mm/min. The flexural strength at room temperature was the average value for 40 samples. The thermal conductivity was the average for three discoid test pieces.

(Example 1)

Silicon nitride powder was produced by the following production method (imide pyrolysis) under the production conditions listed in [Table 1]. The powder properties of the obtained crystalline silicon nitride powder are shown in [Table 2], [Table 3] and [Table 4].

[Method for producing silicon nitride powder by imide pyrolysis]

After air-to-nitrogen gas exchange in a vertical pressure-resistant reaction tank with a diameter of 40 cm and a height of 60 cm cooled to 0°C, 40 liters of liquid ammonia and 5 liters of toluene were charged into the reaction tank. The liquid ammonia and toluene were slowly stirred in the reaction tank while separating liquid ammonia on the upper layer and toluene on the lower layer. A solution (reaction solution) previously prepared to comprise 2 liters of silicon tetrachloride and 6 liters of toluene was supplied through a conduit to the lower layer in the reaction tank that was being slowly stirred. As the solution was supplied, a white reaction product deposited near the interface between the upper and lower layers. Liquid ammonia is present in large excess at the initial stage of the reaction, but since ammonia is consumed as the reaction proceeds, ammonia must be continuously supplied to the reaction tank. In the steady state, the volume ratio of silicon tetrachloride supplied into the reaction tank and liquid ammonia in the reaction tank was 4/100. Upon completion of the reaction, the reaction product and residual solution in the reaction tank were transferred to a filter tank, after which the reaction product was washed with approximately 47 liters of liquid ammonia in 5 batches (total: 234 liters), and then filtered and dried to obtain about 1 kg of purified silicon diimide with a specific surface area of 800 m$^2$/g and a toluene content of 0.38 mass%.

A rotary kiln furnace was used to circulate nitrogen gas containing 105 ppm (V) oxygen while conducting thermolysis of the obtained silicon diimide at 510°C, to obtain an amorphous Si-N(-H)-based compound represented by the compositional formula $Si_6N_{10.62}H_{7.86}$, i.e. the formula $Si_6N_{2x}(NH)_{12-3x}$ where x is 1.38. The specific surface area of the obtained amorphous Si-N(-H)-based compound was 565 m$^2$/g and the oxygen content was 0.43 mass%.

The obtained amorphous Si-N(-H)-based compound was then subjected to grinding treatment with a vibrating mill, after which a briquet machine was used for molding into an almond shape of approximately 6 mm thickness × 8 mm short axis diameter × 12 mm long axis diameter. The almond-shaped molded article partially including burr-like crushed pieces was filled into a carbon container surface-covered with silicon carbide (SiC), and supplied to a pusher furnace and heated and fired under a nitrogen gas circulating atmosphere under the conditions (furnace carbon monoxide (CO) concentration, temperature-elevating rate and maximum temperature) listed in [Table 1], to produce grayish white silicon nitride powder. The holding time at the maximum temperature (1585°C) was 1.5 hours. The CO concentration in the furnace was adjusted by the purity (oxygen concentration and dew point) and flow rate of the circulated nitrogen gas. The crystalline silicon nitride powder was loaded into a vibrating mill and milling treatment was carried out for 26 minutes, under an air atmosphere with a water concentration of 105 ppm (V) and with an amplitude of 7.8 mm. The chemical compositions of the obtained crystalline silicon nitride powders (surface oxygen amount, internal oxygen amount, total oxygen content, carbon content, fluorine content, surface fluorine content, chlorine content and others) are shown in [Table 2] and [Table 3], and the properties (specific surface area and β/(α + β) ratio) and particle size distributions are shown in [Table 4].

(Examples 2 to 29)

The properties of the amorphous Si-N(-H)-based compound (x value in the compositional formula, specific surface area and oxygen content) were controlled by the imide pyrolysis conditions listed in Table 1 (thermal decomposition temperature and supply gas oxygen concentration). The chemical compositions, properties and particle size distributions of the crystalline silicon nitride powders were controlled by the production conditions listed in [Table 1] (imide synthesis conditions, amorphous Si-N(-H)-based compound properties, high-temperature firing conditions and fired powder shredding conditions). Silicon nitride powders were produced by the same method as Example 1, except that the production conditions were as listed in [Table 1].

The chemical compositions of the obtained crystalline silicon nitride powders (surface oxygen amount, internal oxygen amount, total oxygen content, carbon content, fluorine content, surface fluorine content and chlorine content) are shown in [Table 2] and [Table 3], and the properties (specific surface area and β/(α + β) ratio) and particle size distributions are shown in [Table 4].

Examples 6, 19, 24 and 29 has slightly high surface oxygen amounts after post-milling treatment, and therefore the obtained silicon nitride powders were immersed in a weak hydrofluoric acid aqueous solution to reduce the surface oxygen amount. The temperature of the hydrofluoric acid aqueous solution was 30°C, the immersion time was 0.5 hour, and the hydrofluoric acid concentration was 0.02 mass% in Example 6, 0.10 mass% in Example 19, 0.04 mass% in Example 24 and 0.08 mass% in Example 29. The fluorine contents of the silicon nitride powders after drying were therefore slightly high.

Examples 28 and 29 had a specific surface area (SA) of lower than 7 $m^2/g$, Examples 1, 2, 3 and 24 had a specific surface area (SA) of 7.4 $m^2/g$ to 8.2 $m^2/g$, and Examples 18, 19, 20 and 25 had a specific surface area (SA) of 13.5 $m^2/g$ or higher.

Examples 1, 17, 21, 22, 25 and 27 had a surface oxygen amount (FSOA) from the silicon oxide layer on the particle surfaces of 0.09 mass% or lower, while Example 26 had an FSOA of 0.52 mass%. Example 26 had a surface oxygen amount (FSOB) from the silicon oxynitride layer on the particle surfaces of 0.06 mass% or lower, while Example 27 had an FSOB of 0.49 mass%.

Examples 19, 22 and 25 had a surface oxygen amount/specific surface area ratio (FSO/SA) of 0.27 $mg/m^2$ or lower, and Examples 3, 4, 23, 26, 27, 28 and 29 had a surface oxygen amount/specific surface area ratio (FSO/SA) of 0.45 $mg/m^2$ or higher. Examples 21, 24 and 25 had an internal oxygen amount/specific surface area ratio (FIO/SA) of lower than 0.60 $mg/m^2$, and Examples 17, 27 and 29 had an internal oxygen amount/specific surface area ratio (FIO/SA) of 0.94 $mg/m^2$ or higher. Example 25 had a total oxygen content/specific surface area ratio (TO/SA) of 0.84 $mg/m^2$ or lower, and Example 29 had a total oxygen content/specific surface area ratio (TO/SA) of 1.44 $mg/m^2$.

Examples 10, 20 and 22 had a median diameter $D_{50}$ of 0.62 $\mu$m or smaller, and Examples 1, 21, 23, 24, 28 and 29 had a median diameter $D_{50}$ of 0.92 $\mu$m or larger.

Examples 10 and 20 had a cumulative 90% diameter $D_{90}$ of 1.94 $\mu$m or smaller, and Examples 23, 24, 25 and 29 had a cumulative 90% diameter $D_{90}$ of 2.36 $\mu$m or larger.

Examples 18, 21, 25 and 26 had a first cohesion index $D_{50}/D_{BET}$ of 5.0 or higher, and Example 29 had a first cohesion index $D_{50}/D_{BET}$ of 2.1.

Examples 21 and 28 had a second cohesion index $D_{90}/D_{50}$ of 2.4, and Example 25 had a second cohesion index $D_{90}/D_{50}$ of 3.5.

Examples 3, 10 and 23 had $\beta/(\alpha + \beta)$ ratios of 1.4 mass% or lower.

Examples 1 and 3 had carbon contents of 0.16 mass% or greater.

Examples 19 and 29 had fluorine contents of greater than 70 ppm, while Examples 24 and 29 had halogen (F + Cl) contents of greater than 120 ppm.


(Comparative Examples 1 to 12)

The properties of the amorphous Si-N(-H)-based compound (x value in the compositional formula, specific surface area and oxygen content) were controlled by the imide pyrolysis conditions listed in Table 1 (thermal decomposition temperature and supply gas oxygen concentration), in the same manner as Examples 2 to 29. The chemical compositions, properties and particle size distributions of the crystalline silicon nitride powders were controlled by the production conditions listed in [Table 1] (imide synthesis conditions, amorphous Si-N(-H)-based compound properties, high-temperature firing conditions and fired powder shredding conditions). Silicon nitride powders were produced by the same method as Example 1, except that the production conditions were as listed in [Table 1].

The chemical compositions of the obtained crystalline silicon nitride powders (surface oxygen amount, internal oxygen amount, total oxygen content, carbon content, fluorine content, surface fluorine content, chlorine content and others) are shown in [Table 2] and [Table 3], and the properties (specific surface area and $\beta/(\alpha + \beta)$ ratio) and particle size distributions are shown in [Table 4].

Comparative Examples 2, 6, 7, 9 and 12 had slightly high surface oxygen amounts after post-milling treatment, and therefore the obtained silicon nitride powders were immersed in a weak hydrofluoric acid aqueous solution to reduce the surface oxygen amount. The temperature of the hydrofluoric acid aqueous solution was 30°C, the immersion time was 0.5 hour, and the hydrofluoric acid concentration was 0.03 mass% in Comparative Example 2, 0.07 mass% in Comparative Example 6, 0.09 mass% in Comparative Examples 7 and 9, and 0.10 mass% in Comparative Example 12. The fluorine contents of the silicon nitride powders after drying were therefore slightly high.

Comparative Example 8 had a specific surface area (SA) of lower than 3 $m^2/g$, and Comparative Examples 1 and 12 had a specific surface area (SA) of higher than 16 $m^2/g$.

Comparative Examples 5, 6, 7, 8 and 10 had a surface oxygen amount (FSO) of 0.29 mass% or lower, and Comparative Examples 1 and 11 had a surface oxygen amount (FSO) of 0.61 mass% or higher. Comparative Examples 8 and 9 had an internal oxygen amount (FIO) of 0.39 mass% or lower, and Comparative Examples 3 and 12 had an internal oxygen amount (FIO) of 1.40 mass% or higher. Comparative Example 8 had a total oxygen content (TO) of 0.37 mass%, and Comparative Examples 3, 11 and 12 had a total oxygen content (TO) of greater than 1.80 mass%. Comparative Examples 6, 7 and 12 had a surface oxygen amount/specific surface area ratio (FSO/SA) of 0.23 mg/m$^2$ or lower, and Comparative Examples 2, 4, 8 and 9 and 11 had a surface oxygen amount/specific surface area ratio (FSO/SA) of 0.51 mg/m$^2$ or higher. Comparative Examples 7, 9 and 10 had an internal oxygen amount/specific surface area ratio (FIO/SA) of 0.58 mg/m$^2$ or lower, and Comparative Examples 2, 3, 4, 5 and 11 had an internal oxygen amount/specific surface area ratio (FIO/SA) of higher than 1.0 mg/m$^2$. Comparative Examples 7 and 10 had a total oxygen content/specific surface area ratio (TO/SA) of 0.80 mg/m$^2$ or lower, and Comparative Examples 2, 3, 4, 8 and 11 had a total oxygen content/specific surface area ratio (TO/SA) of higher than 1.4 mg/m$^2$.

Comparative Examples 1, 3 and 12 had a median diameter $D_{50}$ of 0.47 μm or smaller, and Comparative Examples 4 and 8 had a median diameter $D_{50}$ of larger than 1.0 μm.

Comparative Examples 1, 3, 10 and 11 had a cumulative 90% diameter $D_{90}$ of 1.74 μm or smaller, and Comparative Examples 2, 4, 5, 7, 8 and 9 had a cumulative 90% diameter $D_{90}$ of 2.36 μm or larger.

Comparative Examples 2, 5, 6 and 7 had a first cohesion index $D_{50}/D_{BET}$ of 5.0 or higher. Comparative Example 4 had a second cohesion index $D_{90}/D_{50}$ of 2.5, and Comparative Examples 8 and 9 had a second cohesion index $D_{90}/D_{50}$ of 2.4 or lower. Comparative Examples 1, 3, 10, 11 and 12 had a second cohesion index $D_{90}/D_{50}$ of 3.5 or higher.

Comparative Examples 1 and 12 had $\beta/(\alpha + \beta)$ ratios of 10.8 mass% or greater.

Comparative Examples 6, 7, 10 and 12 had carbon contents of 0.22 mass% or higher.

Comparative Examples 2, 7 and 12 had halogen (F + Cl) contents of greater than 120 ppm.

In all of Examples 1 to 29 and Comparative Examples 1 to 12, the degree of crystallinity of the obtained silicon nitride powder was 99.6% or higher.

[Table 1]

| | Imide synthesis | | Imide pyrolysis | | | | | High-temperature firing | | | Shredding | | |
| | Washing conditions | Produced imide | Pyrolysis conditions | | Amorphous Si-N(-H)-based compound | | | Crystallization atmosphere/temperature conditions | | | Post-milling treatment conditions | | |
| | Washing solution ammonia amount/ imide amount (L/kg) | Toluene content (mass%) | Pyrolysis temp. (°C) | Supply gas oxygen conc. (ppm(V)) | Specific surface area (m$^2$/g) | Oxygen content (mass%) | X value in compositional formula | Furnace CO conc. (ppm(V)) | Temperature-elevating rate (°C/h) | Maximum temp. (°C) | Water conc. (ppm(V)) | Mill amplitude (mm) | Milling time (min) |
|---|---|---|---|---|---|---|---|---|---|---|---|---|---|
| Example 1 | 234 | 0.38 | 510 | 105 | 565 | 0.43 | 1.38 | 75 | 56 | 1585 | 105 | 7.8 | 26 |
| Example 2 | 198 | 0.33 | 560 | 130 | 530 | 0.47 | 1.60 | 95 | 58 | 1575 | 122 | 8.0 | 27 |
| Example 3 | 212 | 0.37 | 555 | 183 | 530 | 0.57 | 1.56 | 120 | 58 | 1555 | 175 | 8.4 | 28 |
| Example 4 | 188 | 0.32 | 590 | 225 | 505 | 0.62 | 1.73 | 125 | 65 | 1545 | 190 | 8.6 | 34 |
| Example 5 | 135 | 0.30 | 634 | 350 | 474 | 0.78 | 1.91 | 140 | 66 | 1555 | 180 | 8.1 | 29 |
| Example 6 | 180 | 0.30 | 637 | 265 | 472 | 0.68 | 1.92 | 130 | 66 | 1555 | 175 | 8.1 | 29 |
| Example 7 | 160 | 0.27 | 655 | 297 | 460 | 0.72 | 1.99 | 135 | 69 | 1545 | 210 | 8.4 | 30 |
| Example 8 | 135 | 0.26 | 680 | 400 | 440 | 0.84 | 2.10 | 145 | 71 | 1525 | 225 | 8.9 | 39 |
| Example 9 | 145 | 0.28 | 687 | 296 | 442 | 0.72 | 2.13 | 135 | 72 | 1530 | 200 | 8.7 | 35 |
| Example 10 | 130 | 0.21 | 730 | 493 | 410 | 0.93 | 2.28 | 155 | 74 | 1520 | 285 | 9.0 | 38 |
| Example 11 | 105 | 0.23 | 785 | 378 | 375 | 0.81 | 2.56 | 145 | 80 | 1525 | 320 | 8.1 | 29 |

EP 4 495 065 A1

28

| | Imide synthesis | | Imide pyrolysis | | | | | High-temperature firing | | | Shredding | | |
| | Washing conditions | Produced imide | Pyrolysis conditions | | Amorphous Si-N(-H)-based compound | | | Crystallization atmosphere/temperature conditions | | | Post-milling treatment conditions | | |
| | Washing solution ammonia amount/ imide amount (L/kg) | Toluene content (mass%) | Pyrolysis temp. (°C) | Supply gas oxygen conc. (ppm(V)) | Specific surface area (m$^2$/g) | Oxygen content (mass%) | X value in compositional formula | Furnace CO conc. (ppm(V)) | Temperature-elevating rate (°C/h) | Maximum temp. (°C) | Water conc. (ppm(V)) | Mill amplitude (mm) | Milling time (min) |
|---|---|---|---|---|---|---|---|---|---|---|---|---|---|
| Example 12 | 97 | 0.26 | 785 | 474 | 375 | 0.91 | 2.56 | 145 | 80 | 1525 | 135 | 8.1 | 29 |
| Example 13 | 95 | 0.21 | 820 | 475 | 350 | 0.91 | 2.70 | 150 | 83 | 1515 | 285 | 8.4 | 32 |
| Example 14 | 120 | 0.23 | 730 | 245 | 410 | 0.65 | 2.34 | 130 | 76 | 1530 | 320 | 8.0 | 27 |
| Example 15 | 123 | 0.21 | 848 | 350 | 333 | 0.78 | 2.82 | 135 | 87 | 1505 | 160 | 8.2 | 33 |
| Example 16 | 84 | 0.21 | 813 | 575 | 354 | 1.00 | 2.67 | 175 | 83 | 1515 | 795 | 8.4 | 32 |
| Example 17 | 115 | 0.19 | 780 | 617 | 375 | 1.04 | 2.50 | 230 | 78 | 1520 | 130 | 8.6 | 33 |
| Example 18 | 64 | 0.15 | 991 | 930 | 251 | 1.26 | 3.40 | 200 | 94 | 1475 | 310 | 8.9 | 36 |
| Example 19 | 285 | 0.13 | 930 | 585 | 285 | 0.99 | 3.15 | 150 | 95 | 1490 | 160 | 8.6 | 36 |
| Example 20 | 68 | 0.20 | 1026 | 960 | 232 | 1.30 | 3.53 | 225 | 98 | 1450 | 1425 | 9.0 | 38 |
| Example 21 | 105 | 0.27 | 708 | 179 | 425 | 0.56 | 2.24 | 105 | 74 | 1535 | 105 | 8.0 | 26 |
| Example 22 | 75 | 0.14 | 857 | 315 | 329 | 0.74 | 2.84 | 130 | 86 | 1505 | 115 | 8.9 | 37 |

| | Imide synthesis | | Imide pyrolysis | | | | | High-temperature firing | | | Shredding | | |
| | Washing conditions | Produced imide | Pyrolysis conditions | | Amorphous Si-N(-H)-based compound | | | Crystallization atmosphere/temperature conditions | | | Post-milling treatment conditions | | |
| | Washing solution ammonia amount/ imide amount (L/kg) | Toluene content (mass%) | Pyrolysis temp. (°C) | Supply gas oxygen conc. (ppm(V)) | Specific surface area (m$^2$/g) | Oxygen content (mass%) | X value in compositional formula | Furnace CO conc. (ppm(V)) | Temperature-elevating rate (°C/h) | Maximum temp. (°C) | Water conc. (ppm(V)) | Mill amplitude (mm) | Milling time (min) |
|---|---|---|---|---|---|---|---|---|---|---|---|---|---|
| Example 23 | 165 | 0.34 | 590 | 155 | 505 | 0.52 | 1.73 | 115 | 59 | 1560 | 235 | 7.7 | 27 |
| Example 24 | 55 | 0.26 | 510 | 85 | 565 | 0.39 | 1.38 | 65 | 53 | 1585 | 120 | 7.3 | 25 |
| Example 25 | 74 | 0.33 | 1031 | 540 | 230 | 0.97 | 3.53 | 190 | 107 | 1465 | 105 | 7.6 | 37 |
| Example 26 | 80 | 0.35 | 830 | 570 | 345 | 1.00 | 2.73 | 185 | 85 | 1515 | 1600 | 7.8 | 33 |
| Example 27 | 74 | 0.28 | 802 | 298 | 363 | 0.74 | 2.66 | 237 | 87 | 1508 | 120 | 8.2 | 40 |
| Example 28 | 55 | 0.26 | 470 | 85 | 590 | 0.39 | 1.25 | 85 | 50 | 1570 | 180 | 7.6 | 28 |
| Example 29 | 53 | 0.31 | 410 | 74 | 630 | 0.37 | 0.95 | 64 | 45 | 1585 | 150 | 7.1 | 20 |
| Comp. Ex. 1 | 74 | 0.25 | 1063 | 655 | 213 | 1.07 | 3.66 | 200 | 112 | 1435 | 5150 | 9.8 | 43 |
| Comp. Ex. 2 | 53 | 0.24 | 704 | 605 | 427 | 1.03 | 2.20 | 180 | 75 | 1540 | 795 | 7.4 | 26 |
| Comp. Ex. 3 | 50 | 0.45 | 930 | 1265 | 285 | 1.52 | 3.15 | 245 | 96 | 1475 | 1110 | 9.5 | 41 |
| Comp. Ex. 4 | 92 | 0.30 | 606 | 385 | 496 | 0.82 | 1.78 | 150 | 64 | 1560 | 400 | 7.3 | 27 |

EP 4 495 065 A1

| | Imide synthesis | | Imide pyrolysis | | | | | High-temperature firing | | | Shredding | | |
|---|---|---|---|---|---|---|---|---|---|---|---|---|---|
| | Washing conditions | Produced imide | Pyrolysis conditions | | Amorphous Si-N(-H)-based compound | | | Crystallization atmosphere/temperature conditions | | | Post-milling treatment conditions | | |
| | Washing solution ammonia amount/ imide amount (L/kg) | Toluene content (mass%) | Pyrolysis temp. (°C) | Supply gas oxygen conc. (ppm(V)) | Specific surface area (m$^2$/g) | Oxygen content (mass%) | X value in compositional formula | Furnace CO conc. (ppm(V)) | Temperature-elevating rate (°C/h) | Maximum temp. (°C) | Water conc. (ppm(V)) | Mill amplitude (mm) | Milling time (min) |
| Comp. Ex. 5 | 55 | 0.26 | 711 | 585 | 422 | 0.97 | 2.23 | 145 | 76 | 1540 | 77 | 7.4 | 27 |
| Comp. Ex. 6 | 258 | 0.58 | 865 | 683 | 325 | 1.09 | 2.87 | 153 | 90 | 1525 | 80 | 7.9 | 25 |
| Comp. Ex. 7 | 75 | 0.55 | 830 | 284 | 345 | 0.67 | 2.73 | 110 | 85 | 1515 | 65 | 7.7 | 29 |
| Comp. Ex. 8 | 120 | 0.26 | 370 | 20 | 660 | 0.20 | 0.85 | 50 | 40 | 1620 | 60 | 6.9 | 15 |
| Comp. Ex. 9 | 50 | 0.40 | 465 | 66 | 595 | 0.35 | 1.22 | 65 | 52 | 1600 | 160 | 7.5 | 24 |
| Comp. Ex. 10 | 65 | 0.63 | 947 | 427 | 275 | 0.86 | 3.22 | 130 | 98 | 1475 | 75 | 9.7 | 41 |
| Comp. Ex. 11 | 60 | 0.50 | 855 | 1024 | 330 | 1.35 | 2.83 | 245 | 88 | 1505 | 3465 | 9.0 | 40 |
| Comp. Ex. 12 | 64 | 0.64 | 1075 | 1681 | 208 | 1.82 | 3.75 | 260 | 117 | 1425 | 105 | 10.0 | 45 |

EP 4 495 065 A1

## EP 4 495 065 A1

[Table 2]

| | | Presence of oxygen impurities | | | | | | | |
|---|---|---|---|---|---|---|---|---|---|
| | | Oxygen content and distribution | | | | | Surface oxygen amount/ specific surface area ratio FSO/SA (mg/m$^2$) | Internal oxygen amount /specific surface area ratio FIO/SA (mg/m$^2$) | Total oxygen content /specific surface area ratio TO/SA (mg/m$^2$) |
| | | Surface oxygen amount FSO (mass%) | Surface oxygen amount A FSOA (mass%) | Surface oxygen amount B FSOB (mass%) | ]Internal oxygen amount FIO (mass%) | Total oxygen content TO (mass%) | | | |
| Example 1 | | 0.32 | 0.08 | 0.24 | 0.46 | 0.78 | 0.43 | 0.62 | 1.05 |
| Example 2 | | 0.34 | 0.10 | 0.24 | 0.50 | 0.84 | 0.41 | 0.61 | 1.02 |
| Example 3 | | 0.38 | 0.14 | 0.24 | 0.60 | 0.98 | 0.46 | 0.73 | 1.20 |
| Example 4 | | 0.39 | 0.15 | 0.24 | 0.65 | 1.04 | 0.45 | 0.75 | 1.20 |
| Example 5 | | 0.38 | 0.15 | 0.23 | 0.81 | 1.19 | 0.42 | 0.87 | 1.29 |
| Example 6 | | 0.38 | 0.15 | 0.23 | 0.70 | 1.08 | 0.41 | 0.76 | 1.17 |
| Example 7 | | 0.40 | 0.16 | 0.24 | 0.74 | 1.14 | 0.42 | 0.78 | 1.20 |
| Example 8 | | 0.41 | 0.17 | 0.24 | 0.85 | 1.26 | 0.41 | 0.86 | 1.27 |
| Example 9 | | 0.40 | 0.16 | 0.24 | 0.73 | 1.13 | 0.40 | 0.75 | 1.15 |
| Example 10 | | 0.43 | 0.20 | 0.23 | 0.94 | 1.37 | 0.41 | 0.90 | 1.30 |
| Example 11 | | 0.44 | 0.22 | 0.22 | 0.83 | 1.27 | 0.39 | 0.74 | 1.13 |
| Example 12 | | 0.35 | 0.14 | 0.21 | 0.93 | 1.28 | 0.31 | 0.83 | 1.14 |
| Example 13 | | 0.43 | 0.20 | 0.23 | 0.92 | 1.35 | 0.36 | 0.78 | 1.14 |
| Example 14 | | 0.44 | 0.23 | 0.21 | 0.68 | 1.12 | 0.42 | 0.65 | 1.07 |
| Example 15 | | 0.37 | 0.13 | 0.24 | 0.79 | 1.16 | 0.30 | 0.65 | 0.95 |
| Example 16 | | 0.52 | 0.37 | 0.15 | 1.00 | 1.52 | 0.44 | 0.86 | 1.30 |
| Example 17 | | 0.47 | 0.09 | 0.38 | 1.05 | 1.52 | 0.42 | 0.94 | 1.36 |
| Example 18 | | 0.44 | 0.20 | 0.24 | 1.15 | 1.59 | 0.30 | 0.79 | 1.09 |
| Example 19 | | 0.37 | 0.11 | 0.26 | 0.99 | 1.36 | 0.27 | 0.73 | 1.01 |

(continued)

| | Presence of oxygen impurities | | | | | | | |
|---|---|---|---|---|---|---|---|---|
| | Oxygen content and distribution | | | | | Surface oxygen amount/ specific surface area ratio FSO/SA (mg/m$^2$) | Internal oxygen amount /specific surface area ratio FIO/SA (mg/m$^2$) | Total oxygen content /specific surface area ratio TO/SA (mg/m$^2$) |
| | Surface oxygen amount FSO (mass%) | Surface oxygen amount A FSOA (mass%) | Surface oxygen amount B FSOB (mass%) | ]Internal oxygen amount FIO (mass%) | Total oxygen content TO (mass%) | | | |
| Example 20 | 0.57 | 0.48 | 0.09 | 1.24 | 1.81 | 0.37 | 0.81 | 1.18 |
| Example 21 | 0.32 | 0.09 | 0.23 | 0.58 | 0.90 | 0.31 | 0.57 | 0.88 |
| Example 22 | 0.33 | 0.09 | 0.24 | 0.74 | 1.07 | 0.27 | 0.60 | 0.87 |
| Example 23 | 0.41 | 0.18 | 0.23 | 0.54 | 0.95 | 0.47 | 0.62 | 1.09 |
| Example 24 | 0.32 | 0.10 | 0.22 | 0.42 | 0.74 | 0.43 | 0.57 | 1.00 |
| Example 25 | 0.38 | 0.08 | 0.30 | 0.90 | 1.28 | 0.25 | 0.58 | 0.83 |
| Example 26 | 0.58 | 0.52 | 0.06 | 1.02 | 1.60 | 0.49 | 0.86 | 1.34 |
| Example 27 | 0.57 | 0.08 | 0.49 | 1.17 | 1.74 | 0.49 | 1.01 | 1.50 |
| Example 28 | 0.32 | 0.14 | 0.18 | 0.42 | 0.74 | 0.48 | 0.64 | 1.12 |
| Example 29 | 0.21 | 0.10 | 0.11 | 0.40 | 0.61 | 0.49 | 0.95 | 1.44 |
| Comp. Ex. 1 | 0.69 | 0.57 | 0.12 | 0.99 | 1.68 | 0.42 | 0.60 | 1.02 |
| Comp. Ex. 2 | 0.52 | 0.31 | 0.21 | 1.04 | 1.56 | 0.51 | 1.02 | 1.53 |
| Comp. Ex. 3 | 0.54 | 0.34 | 0.20 | 1.40 | 1.94 | 0.40 | 1.04 | 1.44 |
| Comp. Ex. 4 | 0.46 | 0.23 | 0.23 | 0.90 | 1.36 | 0.52 | 1.02 | 1.55 |
| Comp. Ex. 5 | 0.25 | 0.07 | 0.18 | 1.03 | 1.28 | 0.24 | 1.01 | 1.25 |
| Comp. Ex. 6 | 0.28 | 0.09 | 0.19 | 1.10 | 1.38 | 0.23 | 0.89 | 1.11 |
| Comp. Ex. 7 | 0.23 | 0.08 | 0.15 | 0.67 | 0.90 | 0.19 | 0.56 | 0.76 |
| Comp. Ex. 8 | 0.15 | 0.08 | 0.07 | 0.22 | 0.37 | 0.58 | 0.86 | 1.44 |
| Comp. Ex. 9 | 0.37 | 0.16 | 0.21 | 0.38 | 0.75 | 0.54 | 0.56 | 1.10 |

(continued)

| | Presence of oxygen impurities | | | | | | | |
| --- | --- | --- | --- | --- | --- | --- | --- | --- |
| | Oxygen content and distribution | | | | | Surface oxygen amount/ specific surface area ratio FSO/SA (mg/m$^2$) | Internal oxygen amount /specific surface area ratio FIO/SA (mg/m$^2$) | Total oxygen content /specific surface area ratio TO/SA (mg/m$^2$) |
| | Surface oxygen amount FSO (mass%) | Surface oxygen amount A FSOA (mass%) | Surface oxygen amount B FSOB (mass%) | ]Internal oxygen amount FIO (mass%) | Total oxygen content TO (mass%) | | | |
| Comp. Ex. 10 | 0.27 | 0.09 | 0.18 | 0.80 | 1.07 | 0.20 | 0.58 | 0.78 |
| Comp. Ex. 11 | 0.65 | 0.55 | 0.10 | 1.29 | 1.94 | 0.53 | 1.05 | 1.58 |
| Comp. Ex. 12 | 0.32 | 0.10 | 0.22 | 1.54 | 1.86 | 0.19 | 0.92 | 1.11 |

[Table 3]

| | Carbon impurities or halogen impurities | | | | | |
| --- | --- | --- | --- | --- | --- | --- |
| | Carbon content (mass%) | Fluorine content (ppm) | Surface fluorine amount (ppm) | Surface fluorine amount/total fluorine content | Chlorine content (ppm) | Halogens (F+Cl) (ppm) |
| Example 1 | 0.17 | <5 | <5 | - | 16 | 21 |
| Example 2 | 0.15 | <5 | <5 | - | 22 | 27 |
| Example 3 | 0.16 | <5 | <5 | - | 20 | 25 |
| Example 4 | 0.14 | 10 | 10 | 0.95 | 24 | 34 |
| Example 5 | 0.13 | 10 | 10 | 0.95 | 35 | 40 |
| Example 6 | 0.13 | 30 | 28 | 0.95 | 25 | 30 |
| Example 7 | 0.12 | <5 | <5 | - | 30 | 35 |
| Example 8 | 0.11 | 15 | 14 | 0.94 | 35 | 50 |
| Example 9 | 0.12 | <5 | <5 | - | 33 | 38 |
| Example 10 | 0.09 | <5 | <5 | - | 37 | 42 |
| Example 11 | 0.10 | <5 | <5 | - | 45 | 50 |
| Example 12 | 0.11 | <5 | <5 | - | 48 | 53 |
| Example 13 | 0.09 | <5 | <5 | - | 50 | 55 |
| Example 14 | 0.10 | 10 | 10 | 0.95 | 40 | 45 |
| Example 15 | 0.09 | <5 | <5 | - | 40 | 45 |
| Example 16 | 0.09 | <5 | <5 | - | 55 | 60 |
| Example 17 | 0.08 | <5 | <5 | - | 43 | 48 |
| Example 18 | 0.06 | <5 | <5 | - | 66 | 71 |
| Example 19 | 0.06 | 85 | 83 | 0.98 | 8 | 93 |
| Example 20 | 0.08 | <5 | <5 | - | 63 | 68 |
| Example 21 | 0.12 | 10 | 10 | 0.95 | 45 | 50 |
| Example 22 | 0.06 | <5 | <5 | - | 58 | 63 |

| | Carbon impurities or halogen impurities | | | | | |
| --- | --- | --- | --- | --- | --- | --- |
| | Carbon content (mass%) | Fluorine content (ppm) | Surface fluorine amount (ppm) | Surface fluorine amount/total fluorine content | Chlorine content (ppm) | Halogens (F+Cl) (ppm) |
| Example 23 | 0.15 | <5 | <5 | - | 28 | 33 |
| Example 24 | 0.12 | 45 | 43 | 0.96 | 76 | 121 |
| Example 25 | 0.13 | <5 | <5 | - | 60 | 65 |
| Example 26 | 0.15 | 10 | 10 | 0.97 | 80 | 90 |
| Example 27 | 0.13 | 10 | 10 | 0.97 | 60 | 70 |
| Example 28 | 0.12 | 25 | 24 | 0.96 | 75 | 100 |
| Example 29 | 0.14 | 74 | 71 | 0.96 | 55 | 129 |
| Comp. Ex. 1 | 0.10 | <5 | <5 | - | 60 | 65 |
| Comp. Ex. 2 | 0.11 | 35 | 33 | 0.95 | 86 | 121 |
| Comp. Ex. 3 | 0.18 | 15 | 14 | 0.93 | 87 | 102 |
| Comp. Ex. 4 | 0.14 | 10 | 9.6 | 0.96 | 50 | 60 |
| Comp. Ex. 5 | 0.12 | 10 | 9.5 | 0.95 | 80 | 90 |
| Comp. Ex. 6 | 0.24 | 65 | 64 | 0.98 | 12 | 77 |
| Comp. Ex. 7 | 0.22 | 81 | 79 | 0.97 | 58 | 139 |
| Comp. Ex. 8 | 0.12 | <5 | <5 | - | 40 | 45 |
| Comp. Ex. 9 | 0.18 | 82 | 80 | 0.97 | 90 | 95 |
| Comp. Ex. 10 | 0.25 | 20 | 19 | 0.93 | 65 | 85 |
| Comp. Ex. 11 | 0.20 | <5 | <5 | - | 70 | 75 |
| Comp. Ex. 12 | 0.23 | 85 | 82 | 0.96 | 65 | 150 |

[Table 4]

| | Specific surface area | X-ray diffraction | Particle size distribution | | | | | |
| --- | --- | --- | --- | --- | --- | --- | --- | --- |
| | BET specific surface area SA (m$^2$/g) | Crystal phase $\beta/(\alpha + \beta)$ (mass%) | Cumulative 10% diameter D$_{10}$ ($\mu$m) | Cumulative 50% diameter D$_{50}$ ($\mu$m) | Cumulative 90% diameter D$_{90}$ ($\mu$m) | D$_{90}$-D$_{10}$ ($\mu$m) | First cohesion index D50/DBET | Second cohesion index D$_{90}$/D$_{50}$ |
| Example 1 | 7.4 | 2.2 | 0.49 | 0.92 | 2.29 | 1.80 | 3.6 | 2.5 |
| Example 2 | 8.2 | 2.4 | 0.48 | 0.90 | 2.22 | 1.74 | 3.9 | 2.5 |
| Example 3 | 8.2 | 1.1 | 0.39 | 0.78 | 2.09 | 1.70 | 3.4 | 2.7 |
| Example 4 | 8.7 | 3.5 | 0.30 | 0.69 | 2.03 | 1.73 | 3.2 | 2.9 |
| Example 5 | 9.2 | 3.3 | 0.42 | 0.83 | 2.17 | 1.75 | 4.1 | 2.6 |

(continued)

| | Specific surface area | X-ray diffraction | Particle size distribution | | | | | |
|---|---|---|---|---|---|---|---|---|
| | BET specific surface area SA $(m^2/g)$ | Crystal phase $\beta/(\alpha + \beta)$ (mass%) | Cumulative 10% diameter $D_{10}$ $(\mu m)$ | Cumulative 50% diameter $D_{50}$ $(\mu m)$ | Cumulative 90% diameter $D_{90}$ $(\mu m)$ | $D_{90}$-$D_{10}$ $(\mu m)$ | First cohesion index D50/DBET | Second cohesion index $D_{90}/D_{50}$ |
| Example 6 | 9.3 | 2.0 | 0.43 | 0.84 | 2.18 | 1.75 | 4.1 | 2.6 |
| Example 7 | 9.5 | 2.5 | 0.36 | 0.78 | 2.10 | 1.74 | 3.9 | 2.7 |
| Example 8 | 9.9 | 3.2 | 0.23 | 0.63 | 1.96 | 1.73 | 3.3 | 3.1 |
| Example 9 | 9.9 | 4.8 | 0.27 | 0.65 | 2.02 | 1.75 | 3.4 | 3.1 |
| Example 10 | 10.5 | 1.4 | 0.23 | 0.62 | 1.94 | 1.71 | 3.4 | 3.1 |
| Example 11 | 11.2 | 3.3 | 0.42 | 0.80 | 2.17 | 1.75 | 4.7 | 2.6 |
| Example 12 | 11.2 | 4.0 | 0.40 | 0.78 | 2.17 | 1.77 | 4.6 | 2.7 |
| Example 13 | 11.8 | 2.0 | 0.35 | 0.69 | 2.09 | 1.74 | 4.3 | 3.0 |
| Example 14 | 10.5 | 2.9 | 0.46 | 0.85 | 2.23 | 1.77 | 4.8 | 2.6 |
| Example 15 | 12.2 | 2.6 | 0.33 | 0.73 | 2.15 | 1.82 | 4.7 | 2.9 |
| Example 16 | 11.7 | 1.8 | 0.35 | 0.74 | 2.10 | 1.75 | 4.6 | 2.8 |
| Example 17 | 11.2 | 1.9 | 0.33 | 0.71 | 2.04 | 1.71 | 4.2 | 2.9 |
| Example 18 | 14.6 | 2.6 | 0.27 | 0.64 | 1.97 | 1.70 | 5.0 | 3.1 |
| Example 19 | 13.5 | 3.1 | 0.26 | 0.63 | 2.05 | 1.79 | 4.5 | 3.2 |
| Example 20 | 15.4 | 2.4 | 0.22 | 0.59 | 1.94 | 1.72 | 4.8 | 3.3 |
| Example 21 | 10.2 | 2.9 | 0.45 | 0.93 | 2.23 | 1.78 | 5.0 | 2.4 |
| Example 22 | 12.3 | 3.8 | 0.26 | 0.62 | 1.96 | 1.70 | 4.0 | 3.2 |
| Example 23 | 8.7 | 0.6 | 0.47 | 0.92 | 2.36 | 1.89 | 4.2 | 2.6 |
| Example 24 | 7.4 | 2.0 | 0.54 | 0.99 | 2.53 | 1.99 | 3.9 | 2.5 |
| Example 25 | 15.5 | 9.4 | 0.26 | 0.69 | 2.39 | 2.13 | 5.6 | 3.5 |

(continued)

| | Specific surface area | X-ray diffraction | Particle size distribution | | | | | |
|---|---|---|---|---|---|---|---|---|
| | BET specific surface area SA $(m^2/g)$ | Crystal phase $\beta/(\alpha + \beta)$ (mass%) | Cumulative 10% diameter $D_{10}$ ($\mu$m) | Cumulative 50% diameter $D_{50}$ ($\mu$m) | Cumulative 90% diameter $D_{90}$ ($\mu$m) | $D_{90}$-$D_{10}$ ($\mu$m) | First cohesion index D50/DBET | Second cohesion index $D_{90}/D_{50}$ |
| Example 26 | 11.9 | 3.4 | 0.32 | 0.81 | 2.35 | 2.03 | 5.1 | 2.9 |
| Example 27 | 11.5 | 5.6 | 0.30 | 0.76 | 2.20 | 1.90 | 4.6 | 2.9 |
| Example 28 | 6.6 | 2.8 | 0.51 | 0.93 | 2.23 | 1.72 | 3.2 | 2.4 |
| Example 29 | 4.2 | 3.4 | 0.52 | 0.94 | 2.37 | 1.85 | 2.1 | 2.5 |
| Comp. Ex. 1 | 16.4 | 10.8 | 0.16 | 0.46 | 1.74 | 1.58 | 4.0 | 3.8 |
| Comp. Ex. 2 | 10.2 | 3.4 | 0.49 | 0.94 | 2.47 | 1.98 | 5.1 | 2.6 |
| Comp. Ex. 3 | 13.5 | 3.3 | 0.16 | 0.47 | 1.83 | 1.67 | 3.4 | 3.9 |
| Comp. Ex. 4 | 8.8 | 2.8 | 0.53 | 1.01 | 2.57 | 2.04 | 4.7 | 2.5 |
| Comp. Ex. 5 | 10.3 | 5.0 | 0.46 | 0.95 | 2.45 | 1.99 | 5.2 | 2.6 |
| Comp. Ex. 6 | 12.4 | 4.5 | 0.46 | 0.86 | 2.25 | 1.79 | 5.7 | 2.6 |
| Comp. Ex. 7 | 11.9 | 5.6 | 0.40 | 0.85 | 2.38 | 1.98 | 5.4 | 2.8 |
| Comp. Ex. 8 | 2.6 | 1.9 | 0.63 | 1.07 | 2.40 | 1.77 | 1.5 | 2.2 |
| Comp. Ex. 9 | 6.8 | 2.7 | 0.52 | 0.97 | 2.40 | 1.88 | 3.5 | 2.4 |
| Comp. Ex. 10 | 13.8 | 3.2 | 0.18 | 0.50 | 1.81 | 1.63 | 3.6 | 3.6 |
| Comp. Ex. 11 | 12.3 | 5.9 | 0.20 | 0.54 | 1.94 | 1.74 | 3.5 | 3.6 |
| Comp. Ex. 12 | 16.8 | 15.0 | 0.14 | 0.42 | 1.71 | 1.57 | 3.8 | 4.0 |

(Example 30)

Silicon nitride powder was produced by the following production method (direct nitriding method) under the production conditions listed in [Table 5] and [Table 6]. The powder properties of the obtained crystalline silicon nitride powder are shown in [Table 7], [Table 8] and [Table 9].

[Method for producing silicon nitride powder by direct nitriding]

Crystalline silicon nitride powder (mean particle size $D_{50}$: 0.7 μm, oxygen content: 0.9 mass%, β/(α + β) = 6.0 (mass%)) was added in an amount of 3.7 mass% to commercially available metal silicon powder (mean particle size $D_{50}$: 4.0 μm, oxygen content: 0.40 mass%), calcium fluoride was added at 0.03 mass%, and an organic binder (polyvinyl alcohol) was further added at 1.6 parts by mass to 100 parts by mass of the mixture in a slurry state, after which the mixture was dried to prepare a starting powder. The starting powder was used to fabricate an almond-shaped molded article of approximately 4 mm thickness × 5 mm short axis diameter × 8 mm long axis diameter using a briquette machine, which was then packed into a silicon nitride firing vessel. The packing density was 1.0 g/cm³. The almond-shaped molded article was heated to 1540°C using an electric furnace for firing, to fabricate a silicon nitride ingot. The heating program was a temperature-elevating rate of 9.2°C/h from 1100°C up to the 50% nitriding rate temperature, with the temperature-elevating rate set to 33°C/h from the 50% nitriding rate temperature up to 1540°C, followed by holding for 1 hour at the maximum temperature (1540°C) and then temperature decrease. The atmosphere during firing was a nitrogen/ammonia mixed atmosphere ($N_2$:$NH_3$ = 96.5:3.5 (by volume)). The water concentration of the supply gas was 80 ppm (V), and the oxygen concentration was 18 ppm (V).

After nitriding was complete, the article was cooled and the produced ingot was removed and pulverized to coarse and medium sizes using a jaw crusher and roll crusher, after which a grinding agent (methyl ethyl ketone) was added and dry grinding was carried out in a vibrating mill packed with silicon nitride balls (SUS304 vessel), to produce silicon nitride powder. The mill amplitude was 8.2 mm and the milling time was 100 minutes.

The silicon nitride powder obtained by dry grinding was post-treated by immersion for 7 hours in a mixed acid of hydrofluoric acid (concentration: 0.38 mass%)-hydrochloric acid (concentration: 3.5 mass%) heated to 70°C. The mixed acid slurry was then repeatedly washed and filtered in ion-exchanged water that had been heated to 47°C. At the washing end point, as the time point when the washing solution reached a pH of 4.1, the filter cake was removed out and dried in a drier at 95°C. A crystalline silicon nitride powder was thus obtained for Example 30.

(Examples 31 to 51)

Commercially available metal silicon powder was subjected to milling treatment using a vibrating mill (having the inner walls coated with polyurethane) packed with silicon nitride balls, to prepare metal silicon powders with different mean particle diameters and oxygen contents. After adding crystalline silicon nitride powder (mean particle size $D_{50}$: 0.7 μm, oxygen content: 0.9 mass%, β/(α + β) = 6.0 (mass%)), calcium fluoride and an organic binder (polyvinyl alcohol), silicon nitride ingots were produced by direct nitriding according to the same method as Example 30, except that the production conditions (firing starting material, and nitriding conditions with high-temperature firing) were as listed in [Table 5]. Silicon nitride powders were produced by the same method as Example 30, except that the obtained silicon nitride ingots were treated under the post-treatment conditions (pulverizing conditions, mixed acid treatment conditions and washing/drying conditions) listed in [Table 6].

The chemical compositions of the obtained crystalline silicon nitride powders (surface oxygen amount, internal oxygen amount, total oxygen content, carbon content, fluorine content, surface fluorine content, chlorine content and othrs) are shown in [Table 7] and [Table 8], and the properties (specific surface area and β/(α + β) ratio) and particle size distributions are shown in [Table 9].

Examples 50 and 51 had a specific surface area (SA) of lower than 7 m²/g, Examples 30 and 31 had a specific surface area (SA) of 7.4 to 8.1 m²/g, and Examples 43, 45 and 48 had a specific surface area (SA) of higher than 14.0 m²/g.

Example 48 had a surface oxygen amount (FSOA) from the silicon oxide layer on the particle surfaces of 0.09 mass%, and Example 39 had an FSOA of 0.40 mass%. Examples 30, 31, 35, 39, 44 and 47 had a surface oxygen amount (FSOB) from the silicon oxynitride layer on the particle surfaces of 0.06 mass% or lower, while Example 45 had an FSOB of 0.45 mass%.

Examples 46 and 48 had a surface oxygen amount/specific surface area ratio (FSO/SA) of 0.27 mg/m² or lower, and Examples 32, 47, 49 and 51 had a surface oxygen amount/specific surface area ratio (FSO/SA) of 0.45 mg/m² or higher.

Examples 30, 31, 44, 46, 48 and 50 had an internal oxygen amount/specific surface area ratio (FIO/SA) of 0.62 mg/m² or lower, and Examples 41 and 51 had an internal oxygen amount/specific surface area ratio (FIO/SA) of higher than 0.90 mg/m².

Examples 43, 45 and 46 had a median diameter $D_{50}$ of 0.62 μm or smaller, and Examples 31, 44 and 47 had a median diameter $D_{50}$ of 0.92 μm or larger.

Examples 43 and 45 had a cumulative 90% diameter $D_{90}$ of 1.93 μm or smaller, and Examples 47 and 48 had a cumulative 90% diameter $D_{90}$ of 2.36 μm or larger.

Examples 44 and 48 had a first cohesion index $D_{50}/D_{BET}$ of 5.0 or higher. Examples 31, 44, 50 and 51 had a second cohesion index $D_{90}/D_{50}$ of 2.4 or lower. Examples 45 and 46 had a second cohesion index $D_{90}/D_{50}$ of 3.2 or higher, and Example 48 had a second cohesion index $D_{90}/D_{50}$ of 3.5 or higher.

Example 47 had a $\beta/(\alpha + \beta)$ ratio of 1.0 mass% or lower, and Examples 30, 31, 39, 44, 48 and 49 had $\beta/(\alpha + \beta)$ ratios of 10.5 mass% or higher.

Examples 30, 31 and 47 had carbon contents of 0.16 mass% or higher.

Examples 43, 45, 46, 48 and 51 had halogen (F + Cl) contents of greater than 120 ppm.

(Comparative Examples 13 to 22)

Commercially available metal silicon powder was subjected to milling treatment using a vibrating mill (having the inner walls coated with polyurethane) packed with silicon nitride balls, to prepare metal silicon powders with different mean particle diameters and oxygen contents. After adding crystalline silicon nitride powder (mean particle size $D_{50}$: 0.7 μm, oxygen content: 0.9 mass%, $\beta/(\alpha + \beta)$ = 6.0 (mass%)), calcium fluoride and an organic binder (polyvinyl alcohol), silicon nitride ingots were produced by direct nitriding according to the same method as Example 30, except that the production conditions (firing starting material, and nitriding conditions with high-temperature firing) were as listed in [Table 5]. Silicon nitride powders were produced by the same method as Example 30, except that the obtained silicon nitride ingots were treated under the post-treatment conditions (pulverizing conditions, mixed acid treatment conditions and washing/drying conditions) listed in [Table 6].

The chemical compositions of the obtained crystalline silicon nitride powders (surface oxygen amount, internal oxygen amount, total oxygen content, carbon content, fluorine content, surface fluorine content, chlorine content and others) are shown in [Table 7] and [Table 8], and the properties (specific surface area and $\beta/(\alpha + \beta)$ ratio) and particle size distributions are shown in [Table 9].

Comparative Example 22 had a specific surface area (SA) of lower than 3 $m^2/g$, and Comparative Example 18 had a specific surface area (SA) of higher than 16.0 $m^2/g$.

Comparative Example 22 had a surface oxygen amount (FSO) of 0.19 mass% or lower, Comparative Examples 16, 19, 20 and 21 had a surface oxygen amount (FSO) of 0.29 mass% or lower, and Comparative Example 18 had a surface oxygen amount (FSO) of 0.61 mass% or higher. Comparative Example 22 had an internal oxygen amount (FIO) of 0.29 mass% or lower, and Comparative Example 17 had an internal oxygen amount (FIO) of 1.31 mass% or higher. Comparative Example 22 had a total oxygen content (TO) of 0.41 mass%, and Comparative Example 17 had a total oxygen content (TO) of greater than 1.90 mass%. Comparative Examples 19, 20 and 21 had a surface oxygen amount/specific surface area ratio (FSO/SA) of 0.22 $mg/m^2$ or lower, and Comparative Examples 13, 14, 15 and 22 had a surface oxygen amount/specific surface area ratio (FSO/SA) of 0.51 $mg/m^2$ or higher. Comparative Examples 20 and 21 had an internal oxygen amount/specific surface area ratio (FIO/SA) of 0.59 $mg/m^2$ or lower, and Comparative Examples 13, 14, 15, 16 and 17 had an internal oxygen amount/specific surface area ratio (FIO/SA) of higher than 1.0 $mg/m^2$. Comparative Examples 20 and 21 had a total oxygen content/specific surface area ratio (TO/SA) of lower than 0.80 $mg/m^2$, and Comparative Examples 13, 14, 15, 17 and 22 had a total oxygen content/specific surface area ratio (TO/SA) of higher than 1.4 $mg/m^2$.

Comparative Examples 17 and 18 had a median diameter $D_{50}$ of 0.49 μm or smaller, and Comparative Examples 13 and 22 had a median diameter $D_{50}$ of larger than 1.00 μm.

Comparative Example 18 had a cumulative 90% diameter $D_{90}$ of 1.74 μm or smaller, and Comparative Examples 13, 14, 16, 20 and 22 had a cumulative 90% diameter $D_{90}$ of 2.36 μm or larger.

Comparative Examples 15, 19 and 20 had a first cohesion index $D_{50}/D_{BET}$ of 5.0 or higher. Comparative Examples 19 and 22 had a second cohesion index $D_{90}/D_{50}$ of 2.4 or lower, and Comparative Examples 17, 18 and 21 had a second cohesion index $D_{90}/D_{50}$ of 3.6 or higher.

Comparative Examples 14 to 21 had $\beta/(\alpha + \beta)$ ratios of greater than 10 mass%, Comparative Example 15 in particular having a $\beta/(\alpha + \beta)$ ratio of greater than 40 mass%.

Comparative Examples 20 and 21 had carbon contents of 0.21 mass% or higher. Comparative Examples 14, 15, 16, 17, 19, 20, 21 and 22 had fluorine contents of 83 ppm or higher, and Comparative Examples 14, 15, 16, 17, 18, 20, 21 and 22 had halogen (F + Cl) contents of higher than 120 ppm.

Metal silicon was not detected in the obtained silicon nitride powders of any of Examples 30 to 51 or Comparative Examples 13 to 22. That is, the metal silicon contents of the obtained silicon nitride powders were lower than 0.01 mass%.

[Table 5]

| | | Firing starting material | | | | | Nitriding conditions with high-temperature firing | | | | | |
| | | Silicon powder | | Additive | | | Atmosphere gas composition | | | | Temperature-elevating rate and maximum temperature | | |
| | | Mean particle size D50 (μm) | Oxygen content (mass%) | Dilution material (Si$_3$N$_4$) addition (mass%) | Calcium fluoride addition (mass%) | Organic binder addition (mass%) | Packing density (g/cm$^3$) | Nitrogen (vol%) | Ammonia (vol%) | Water conc. (ppm(V)) | Oxygen conc. (ppm(V)) | Temperature-elevating rate up to 50% nitriding rate (°C/h) | Temperature-elevating rate at ≥50% nitriding rate (°C/h) | Maximum temp. (°C) |
|---|---|---|---|---|---|---|---|---|---|---|---|---|---|---|
| Example | 30 | 4.0 | 0.40 | 3.7 | 0.03 | 1.6 | 1.0 | 96.5 | 3.5 | 80 | 18 | 9.2 | 33 | 1540 |
| Example | 31 | 3.7 | 0.42 | 5.6 | 0.02 | 1.5 | 1.0 | 97.0 | 3.0 | 105 | 16 | 8.9 | 31 | 1545 |
| Example | 32 | 2.6 | 0.55 | 7.7 | 0 | 1.2 | 0.9 | 97.5 | 2.5 | 305 | 46 | 7.9 | 22 | 1510 |
| Example | 33 | 2.2 | 0.64 | 8.4 | 0 | 1.4 | 0.7 | 97.0 | 3.0 | 387 | 88 | 6.6 | 28 | 1530 |
| Example | 34 | 2.4 | 0.60 | 10.1 | 0 | 1.0 | 0.8 | 98.0 | 2.0 | 390 | 49 | 7.0 | 26 | 1525 |
| Example | 35 | 2.5 | 0.59 | 10.7 | 0 | 1.2 | 0.7 | 97.5 | 2.5 | 375 | 39 | 6.2 | 22 | 1510 |
| Example | 36 | 1.8 | 0.75 | 12.1 | 0 | 0.8 | 0.7 | 98.4 | 1.5 | 600 | 97 | 5.7 | 20 | 1505 |
| Example | 37 | 1.8 | 0.76 | 14.0 | 0 | 1.2 | 0.7 | 97.4 | 2.5 | 575 | 81 | 6.4 | 29 | 1530 |
| Example | 38 | 2.2 | 0.66 | 16.9 | 0 | 0.8 | 0.9 | 98.0 | 2.0 | 440 | 23 | 7.7 | 28 | 1530 |
| Example | 39 | 2.5 | 0.58 | 13.2 | 0 | 1.0 | 1.0 | 98.0 | 2.0 | 410 | 24 | 8.6 | 31 | 1535 |
| Example | 40 | 0.9 | 0.86 | 16.4 | 0 | 1.0 | 0.8 | 97.9 | 2.0 | 800 | 79 | 7.6 | 26 | 1525 |
| Example | 41 | 0.9 | 0.87 | 14.3 | 0 | 0.6 | 0.9 | 98.4 | 1.5 | 785 | 116 | 7.9 | 23 | 1520 |
| Example | 42 | 0.9 | 0.88 | 17.7 | 0 | 0.6 | 0.8 | 98.9 | 1.0 | 830 | 65 | 7.5 | 20 | 1505 |
| Example | 43 | 0.8 | 0.98 | 19.3 | 0 | 0.6 | 0.9 | 98.9 | 1.0 | 930 | 78 | 8.1 | 19 | 1500 |
| Example | 44 | 3.1 | 0.48 | 11.3 | 0.02 | 1.2 | 1.1 | 97.5 | 2.5 | 180 | 14 | 10.3 | 31 | 1540 |
| Example | 45 | 0.8 | 0.93 | 20.4 | 0.03 | 0.6 | 0.8 | 98.4 | 1.5 | 945 | 41 | 7.3 | 17 | 1495 |
| Example | 46 | 2.4 | 0.61 | 16.7 | 0.03 | 0.6 | 0.9 | 99.0 | 1.0 | 325 | 18 | 7.7 | 19 | 1500 |
| Example | 47 | 3.2 | 0.46 | 6.8 | 0.04 | 1.5 | 0.6 | 97.0 | 3.0 | 205 | 22 | 4.1 | 36 | 1545 |
| Example | 48 | 1.9 | 0.73 | 20.4 | 0.05 | 1.2 | 1.3 | 97.4 | 2.5 | 510 | 13 | 14.4 | 37 | 1515 |
| Example | 49 | 2.4 | 0.59 | 13.2 | 0 | 1.0 | 1.0 | 97.9 | 2.1 | 850 | 42 | 8.3 | 31 | 1540 |
| Example | 50 | 4.5 | 0.33 | 2.8 | 0 | 1.3 | 1.0 | 97.7 | 2.3 | 190 | 44 | 7.0 | 20 | 1505 |

(continued)

| | Firing starting material | | | | | | Nitriding conditions with high-temperature firing | | | | | | |
| | Silicon powder | | Additive | | | Packing density | Atmosphere gas composition | | | | Temperature-elevating rate and maximum temperature | | |
| | Mean particle size D50 ($\mu$m) | Oxygen content (mass%) | Dilution material ($Si_3N_4$) addition (mass%) | Calcium fluoride addition (mass%) | Organic binder addition (mass%) | (g/cm$^3$) | Nitrogen (vol%) | Ammonia (vol%) | Water conc. (ppm(V)) | Oxygen conc. (ppm(V)) | Temperature-elevating rate up to 50% nitriding rate (°C/h) | Temperature-elevating rate at ≥50% nitriding rate (°C/h) | Maximum temp. (°C) |
|---|---|---|---|---|---|---|---|---|---|---|---|---|---|
| Example 51 | 0.6 | 0.29 | 2.5 | 0.05 | 1.2 | 1.0 | 98.4 | 1.6 | 114 | 124 | 7.2 | 24 | 1520 |
| Comp. Ex. 13 | 1.8 | 0.74 | 7.4 | 0.03 | 1.4 | 0.9 | 96.9 | 3.0 | 635 | 170 | 7.9 | 42 | 1570 |
| Comp. Ex. 14 | 0.9 | 0.88 | 11.6 | 0.07 | 1.2 | 1.1 | 97.4 | 2.5 | 850 | 156 | 8.9 | 40 | 1560 |
| Comp. Ex. 15 | 0.8 | 0.97 | 15.8 | 0.05 | 1.4 | 1.4 | 96.9 | 3.0 | 1007 | 156 | 15.9 | 35 | 1535 |
| Comp. Ex. 16 | 0.9 | 0.88 | 11.9 | 0.06 | 1.2 | 0.9 | 97.4 | 2.5 | 590 | 162 | 8.6 | 39 | 1555 |
| Comp. Ex. 17 | 0.6 | 1.18 | 19.5 | 0.05 | 1.8 | 1.1 | 95.9 | 4.0 | 1080 | 160 | 10.0 | 12 | 1480 |
| Comp. Ex. 18 | 0.9 | 0.87 | 23.0 | 0.04 | 1.2 | 1.0 | 97.4 | 2.5 | 940 | 18 | 8.5 | 8 | 1460 |
| Comp. Ex. 19 | 0.7 | 1.00 | 18.0 | 0.05 | 1.8 | 1.0 | 95.9 | 4.0 | 765 | 123 | 8.7 | 28 | 1535 |
| Comp. Ex. 20 | 2.5 | 0.57 | 16.4 | 0.10 | 2.2 | 1.2 | 95.5 | 4.5 | 195 | 15 | 10.5 | 37 | 1540 |
| Comp. Ex. 21 | 2.3 | 0.64 | 20.2 | 0.08 | 2.4 | 1.1 | 95.0 | 5.0 | 295 | 13 | 11.1 | 10 | 1465 |
| Comp. Ex. 22 | 9.9 | 0.20 | 2.4 | 0.07 | 1.6 | 0.9 | 96.5 | 3.5 | 37 | 82 | 7.8 | 42 | 1575 |

[Table 6]

| | | Post-treatment conditions | | | | | | | |
| | | Pulverizing conditions | | Mixed acid treatment conditions | | | | Washing/drying conditions | | |
| | | Mill amplitude (mm) | Milling time (min) | Fluorine conc. (mass%) | HCl conc. (mass%) | Temp. (°C) | Treatment time (h) | Washing/filtration temp. (°C) | Washing end point pH | Drying temp. (°C) |
|---|---|---|---|---|---|---|---|---|---|---|
| Example | 30 | 8.2 | 100 | 0.4 | 3.5 | 70 | 7 | 47 | 4.1 | 95 |
| Example | 31 | 8.5 | 110 | 0.6 | 4.5 | 70 | 6 | 47 | 4.0 | 90 |
| Example | 32 | 9.0 | 130 | 0.5 | 5.9 | 70 | 6 | 59 | 3.9 | 85 |
| Example | 33 | 8.8 | 120 | 0.4 | 5.6 | 65 | 7 | 65 | 3.7 | 90 |
| Example | 34 | 8.8 | 125 | 0.4 | 6.5 | 65 | 7 | 63 | 3.8 | 90 |
| Example | 35 | 9.0 | 130 | 0.4 | 7.0 | 65 | 7 | 57 | 3.8 | 85 |
| Example | 36 | 9.4 | 135 | 0.6 | 7.5 | 65 | 6 | 60 | 3.7 | 82 |
| Example | 37 | 8.5 | 150 | 1.2 | 9.5 | 60 | 7 | 68 | 3.6 | 90 |
| Example | 38 | 8.8 | 170 | 4.4 | 11.6 | 55 | 5 | 57 | 3.7 | 90 |
| Example | 39 | 8.5 | 145 | 0.6 | 9.0 | 65 | 6 | 60 | 3.7 | 90 |
| Example | 40 | 8.8 | 165 | 1.6 | 12.0 | 60 | 7 | 60 | 3.5 | 85 |
| Example | 41 | 9.0 | 150 | 1.0 | 9.5 | 65 | 5 | 55 | 3.6 | 85 |
| Example | 42 | 9.5 | 175 | 2.7 | 13.5 | 60 | 7 | 60 | 3.4 | 82 |
| Example | 43 | 9.7 | 195 | 9.7 | 16.6 | 48 | 5 | 57 | 3.3 | 82 |
| Example | 44 | 8.5 | 135 | 0.6 | 7.5 | 65 | 5 | 48 | 3.6 | 90 |
| Example | 45 | 9.5 | 215 | 10.8 | 17.8 | 50 | 6 | 47 | 3.4 | 80 |
| Example | 46 | 9.5 | 165 | 4.3 | 12.0 | 55 | 5 | 48 | 3.4 | 82 |
| Example | 47 | 7.9 | 110 | 0.5 | 4.5 | 70 | 7 | 47 | 3.9 | 97 |
| Example | 48 | 7.8 | 215 | 12.1 | 17.8 | 45 | 5 | 43 | 3.4 | 98 |
| Example | 49 | 8.6 | 150 | 9.6 | 9.2 | 65 | 6 | 58 | 3.6 | 90 |
| Example | 50 | 8.3 | 90 | 2.9 | 4.2 | 60 | 5 | 46 | 3.9 | 83 |
| Example | 51 | 7.8 | 60 | 4.2 | 3.6 | 60 | 5 | 40 | 4.0 | 84 |
| Comp. Ex. | 13 | 7.6 | 110 | 0.5 | 5.5 | 70 | 7 | 49 | 3.5 | 105 |

(continued)

| | | Post-treatment conditions | | | | | | | |
|---|---|---|---|---|---|---|---|---|---|
| | | Pulverizing conditions | | Mixed acid treatment conditions | | | | Washing/drying conditions | | |
| | | Mill amplitude (mm) | Milling time (min) | **Fluorine** conc. (mass%) | HCl conc. (mass%) | Temp. (°C) | Treatment time (h) | Washing/filtration temp. (°C) | Washing end point pH | Drying temp. (°C) |
| Comp. Ex. | 14 | 7.8 | 135 | 0.4 | 8.3 | 70 | 6 | 40 | 3.1 | 100 |
| Comp. Ex. | 15 | 8.2 | 160 | 0.9 | 10.8 | 70 | *5* | 39 | 3.5 | 95 |
| Comp. Ex. | 16 | 7.8 | 135 | 1.0 | 9.0 | 60 | 6 | 38 | 3.1 | 100 |
| Comp. Ex. | 17 | 10.0 | 220 | 4.2 | 20.2 | 60 | 6 | 44 | 3.0 | 76 |
| Comp. Ex. | 18 | *10.5* | 250 | 9.7 | 21.0 | *50* | 7 | 46 | 3.4 | 70 |
| Comp. Ex. | 19 | 8.5 | 175 | *5.5* | 12.3 | *50* | 7 | 44 | 4.3 | 90 |
| Comp. Ex. | 20 | 7.9 | 165 | 4.6 | 12.0 | *50* | 7 | 35 | 3.4 | 98 |
| Comp. Ex. | 21 | 10.0 | 225 | 10.3 | 19.3 | 45 | 6 | 35 | 3.4 | 74 |
| Comp. Ex. | 22 | 7.3 | 40 | 0.3 | 3.0 | 70 | 7 | 35 | 3.8 | 100 |

[Table 7]

| | | Presence of oxygen impurities | | | | | Surface oxygen amount/ specific surface area ratio FSO/SA (mg/m$^2$) | Internal oxygen amount/ specific surface area ratio FIO/SA (mg/m$^2$) | Total oxygen content /specific surface area ratio TO/SA (mg/m$^2$) |
| --- | --- | --- | --- | --- | --- | --- | --- | --- | --- |
| | | Oxygen content and distribution | | | | | | | |
| | | Surface oxygen amount FSO (mass%) | Surface oxygen amount A FSOA (mass%) | Surface oxygen amount B FSOB (mass%) | **Internal** oxygen amount FIO (mass%) | Total oxygen content TO (mass%) | | | |
| Example | 30 | 0.32 | 0.29 | 0.03 | 0.46 | 0.78 | 0.43 | 0.62 | 1.05 |
| Example | 31 | 0.33 | 0.29 | 0.04 | 0.49 | 0.82 | 0.41 | 0.60 | 1.01 |
| Example | 32 | 0.40 | 0.30 | 0.10 | 0.66 | 1.06 | 0.45 | 0.75 | 1.20 |
| Example | 33 | 0.35 | 0.27 | 0.08 | 0.79 | 1.14 | 0.39 | 0.87 | 1.26 |
| Example | 34 | 0.41 | 0.32 | 0.09 | 0.73 | 1.14 | 0.43 | 0.76 | 1.19 |
| Example | 35 | 0.42 | 0.38 | 0.04 | 0.71 | 1.13 | 0.43 | 0.72 | 1.15 |
| Example | 36 | 0.41 | 0.32 | 0.09 | 0.92 | 1.33 | 0.40 | 0.89 | 1.29 |
| Example | 37 | 0.37 | 0.25 | 0.12 | 0.94 | 1.31 | 0.34 | 0.85 | 1.19 |
| Example | 38 | 0.38 | 0.18 | 0.20 | 0.81 | 1.19 | 0.31 | 0.65 | 0.96 |
| Example | 39 | 0.46 | 0.40 | 0.06 | 0.70 | 1.16 | 0.43 | 0.65 | 1.08 |
| Example | 40 | 0.50 | 0.30 | 0.20 | 1.02 | 1.52 | 0.42 | 0.85 | 1.27 |
| Example | 41 | 0.46 | 0.33 | 0.13 | 1.04 | 1.50 | 0.41 | 0.94 | 1.35 |
| Example | 42 | 0.52 | 0.26 | 0.26 | 1.03 | 1.55 | 0.41 | 0.81 | 1.22 |
| Example | 43 | 0.45 | 0.10 | 0.35 | 1.22 | 1.67 | 0.31 | 0.85 | 1.16 |
| Example | 44 | 0.33 | 0.29 | 0.04 | 0.59 | 0.92 | 0.33 | 0.59 | 0.92 |
| Example | 45 | 0.55 | 0.10 | 0.45 | 1.15 | 1.70 | 0.35 | 0.73 | 1.09 |
| Example | 46 | 0.33 | 0.17 | 0.16 | 0.75 | 1.08 | 0.27 | 0.62 | 0.89 |
| Example | 47 | 0.40 | 0.34 | 0.06 | 0.55 | 0.95 | 0.47 | 0.65 | 1.12 |
| Example | 48 | 0.39 | 0.09 | 0.30 | 0.88 | 1.27 | 0.25 | 0.57 | 0.81 |
| Example | 49 | 0.48 | 0.10 | 0.38 | 0.71 | 1.19 | 0.45 | 0.66 | 1.11 |
| Example | 50 | 0.30 | 0.17 | 0.13 | 0.42 | 0.71 | 0.44 | 0.62 | 1.06 |
| Example | 51 | 0.22 | 0.12 | 0.10 | 0.40 | 0.62 | 0.49 | 0.91 | 1.40 |
| Comp. Ex. 13 | | 0.45 | 0.39 | 0.06 | 0.91 | 1.36 | 0.52 | 1.05 | 1.56 |
| Comp. Ex. 14 | | 0.53 | 0.45 | 0.08 | 1.03 | 1.56 | 0.52 | 1.02 | 1.54 |
| Comp. Ex. 15 | | 0.60 | 0.40 | 0.20 | 1.19 | 1.79 | 0.51 | 1.02 | 1.53 |
| Comp. Ex. 16 | | 0.25 | 0.19 | 0.06 | 1.06 | 1.31 | 0.24 | 1.04 | 1.28 |
| Comp. Ex. 17 | | 0.56 | 0.18 | 0.38 | 1.38 | 1.94 | 0.42 | 1.03 | 1.44 |
| Comp. Ex. 18 | | 0.66 | 0.11 | 0.55 | 1.00 | 1.66 | 0.41 | 0.62 | 1.02 |
| Comp. Ex. 19 | | 0.28 | 0.10 | 0.18 | 1.20 | 1.48 | 0.22 | 0.95 | 1.17 |
| Comp. Ex. 20 | | 0.23 | 0.12 | 0.11 | 0.71 | 0.94 | 0.19 | 0.59 | 0.78 |
| Comp. Ex. 21 | | 0.26 | 0.08 | 0.18 | 0.79 | 1.05 | 0.19 | 0.57 | 0.76 |
| Comp. Ex. 22 | | 0.17 | 0.16 | 0.01 | 0.24 | 0.41 | 0.61 | 0.86 | 1.46 |

[Table 8]

| | | Carbon impurities or halogen impurities | | | | | |
|---|---|---|---|---|---|---|---|
| | | **Carbon content** (mass%) | Fluorine content (ppm) | Surface fluorine amount (ppm) | Surface fluorine amount/ total fluorine content | Chlorine content (ppm) | Halogens (F+Cl) (ppm) |
| Example | 30 | 0.17 | 71 | 60 | 0.85 | 16 | 87 |
| Example | 31 | 0.16 | 68 | 59 | 0.87 | 22 | 90 |
| Example | 32 | 0.13 | 35 | 32 | 0.93 | 24 | 59 |
| Example | 33 | 0.14 | 21 | 19 | 0.92 | 35 | 56 |
| Example | 34 | 0.11 | 28 | 27 | 0.96 | 30 | 58 |
| Example | 35 | 0.13 | 39 | 37 | 0.95 | 33 | 72 |
| Example | 36 | 0.08 | 33 | 31 | 0.93 | 37 | 70 |
| Example | 37 | 0.12 | 17 | 16 | 0.95 | 48 | 65 |
| Example | 38 | 0.09 | 45 | 41 | 0.94 | 40 | 83 |
| Example | 39 | 0.11 | 40 | 36 | 0.94 | 40 | 79 |
| Example | 40 | 0.10 | 35 | 32 | 0.94 | 55 | 89 |
| Example | 41 | 0.07 | 50 | 46 | 0.93 | 43 | 93 |
| Example | 42 | 0.05 | 36 | 34 | 0.94 | 58 | 94 |
| Example | 43 | 0.05 | 55 | 51 | 0.93 | 66 | 121 |
| Example | 44 | 0.12 | 67 | 60 | 0.89 | 45 | 112 |
| Example | 45 | 0.07 | 71 | 60 | 0.84 | 63 | 134 |
| Example | 46 | 0.06 | 67 | 56 | 0.84 | 58 | 125 |
| Example | 47 | 0.16 | 73 | 60 | 0.83 | 28 | 101 |
| Example | 48 | 0.12 | 82 | 65 | 0.79 | 60 | 142 |
| Example | 49 | 0.11 | 47 | 44 | 0.94 | 50 | 97 |
| Example | 50 | 0.15 | 83 | 69 | 0.83 | 30 | 113 |
| Example | 51 | 0.14 | 104 | 86 | 0.83 | 26 | 130 |
| Comp. Ex. | 13 | 0.15 | 66 | 56 | 0.85 | 50 | 116 |
| Comp. Ex. | 14 | 0.13 | 95 | 70 | 0.73 | 85 | 180 |
| Comp. Ex. | 15 | 0.14 | 96 | 76 | 0.79 | 55 | 151 |
| Comp. Ex. | 16 | 0.13 | 97 | 72 | 0.74 | 80 | 177 |
| Comp. Ex. | 17 | 0.19 | 87 | 66 | 0.76 | 87 | 174 |
| Comp. Ex. | 18 | 0.12 | 78 | 63 | 0.81 | 60 | 138 |
| Comp. Ex. | 19 | 0.20 | 83 | 66 | 0.79 | 12 | 95 |
| Comp. Ex. | 20 | 0.23 | 110 | 77 | 0.70 | 58 | 168 |
| Comp. Ex. | 21 | 0.26 | 102 | 74 | 0.72 | 65 | 167 |
| Comp. Ex. | 22 | 0.17 | 105 | 77 | 0.73 | 90 | 195 |

[Table 9]

| | | Specific surface area | X-ray diffraction | Particle size distribution | | | | | |
|---|---|---|---|---|---|---|---|---|---|
| | | BET specific surface area SA ($m^2$/g) | Crystal phase $\beta/(\alpha+\beta)$ (mass%) | Cumulative 10% diameter $D_{10}$ ($\mu$m) | Cumulative 50% diameter $D_{50}$ ($\mu$m) | Cumulative 90% diameter $D_{90}$ ($\mu$m) | $D_{90}$-$D_{10}$ ($\mu$m) | First cohesion index $D_{50}/D_{BET}$ | Second cohesion index $D_{90}/D_{50}$ |
| Example | 30 | 7.4 | 13.5 | 0.48 | 0.91 | 2.30 | 1.82 | 3.6 | 2.5 |
| Example | 31 | 8.1 | 12.5 | 0.49 | 0.92 | 2.23 | 1.74 | 3.9 | 2.4 |
| Example | 32 | 8.8 | 9.5 | 0.28 | 0.67 | 2.04 | 1.76 | 3.1 | 3.0 |
| Example | 33 | 9.0 | 6.0 | 0.42 | 0.83 | 2.16 | 1.74 | 4.0 | 2.6 |
| Example | 34 | 9.6 | 7.0 | 0.37 | 0.77 | 2.12 | 1.75 | 3.9 | 2.8 |
| Example | 35 | 9.8 | 5.0 | 0.28 | 0.67 | 2.03 | 1.75 | 3.5 | 3.0 |
| Example | 36 | 10.3 | 4.0 | 0.23 | 0.64 | 1.96 | 1.73 | 3.5 | 3.1 |
| Example | 37 | 11.0 | 5.5 | 0.39 | 0.75 | 2.19 | 1.80 | 4.4 | 2.9 |
| Example | 38 | 12.4 | 8.8 | 0.34 | 0.71 | 2.15 | 1.81 | 4.6 | 3.0 |
| Example | 39 | 10.7 | 11.5 | 0.45 | 0.84 | 2.24 | 1.79 | 4.7 | 2.6 |
| Example | 40 | 12.0 | 8.5 | 0.36 | 0.73 | 2.12 | 1.76 | 4.6 | 2.9 |
| Example | 41 | 11.1 | 9.5 | 0.32 | 0.70 | 2.05 | 1.73 | 4.1 | 2.9 |
| Example | 42 | 12.7 | 8.2 | 0.24 | 0.64 | 1.95 | 1.71 | 4.3 | 3.1 |
| Example | 43 | 14.4 | 9.8 | 0.25 | 0.61 | 1.82 | 1.57 | 4.7 | 3.0 |
| Example | 44 | 10.0 | 17.5 | 0.46 | 0.95 | 2.23 | 1.77 | 5.0 | 2.4 |
| Example | 45 | 15.6 | 7.8 | 0.23 | 0.59 | 1.93 | 1.70 | 4.9 | 3.3 |
| Example | 46 | 12.1 | 9.0 | 0.27 | 0.62 | 1.97 | 1.70 | 4.0 | 3.2 |
| Example | 47 | 8.5 | 0.7 | 0.48 | 0.93 | 2.36 | 1.88 | 4.2 | 2.6 |
| Example | 48 | 15.6 | 36.0 | 0.25 | 0.67 | 2.38 | 2.13 | 5.5 | 3.6 |
| Example | 49 | 10.7 | 10.5 | 0.45 | 0.84 | 2.24 | 1.79 | 4.7 | 2.7 |
| Example | 50 | 6.7 | 6.0 | 0.50 | 0.86 | 1.97 | 1.47 | 3.1 | 2.3 |
| Example | 51 | 4.4 | 9.2 | 0.53 | 0.90 | 2.03 | 1.50 | 2.1 | 2.3 |
| Comp. Ex. | 13 | 8.7 | 9.5 | 0.52 | 1.04 | 2.58 | 2.06 | 4.8 | 2.5 |

(continued)

| | Specific surface area | X-ray diffraction | Particle size distribution | | | | | |
|---|---|---|---|---|---|---|---|---|
| | BET specific surface area SA ($m^2/g$) | Crystal phase $\beta/(\alpha+\beta)$ (mass%) | Cumulative 10% diameter $D_{10}$ ($\mu m$) | Cumulative 50% diameter $D_{50}$ ($\mu m$) | Cumulative 90% diameter $D_{90}$ ($\mu m$) | $D_{90}$-$D_{10}$ ($\mu m$) | First cohesion index $D_{50}/D_{BET}$ | Second cohesion index $D_{90}/D_{50}$ |
| Comp. Ex. 14 | 10.1 | 12.5 | 0.48 | 0.92 | 2.46 | 1.98 | 4.9 | 2.7 |
| Comp. Ex. 15 | 11.7 | 42.3 | 0.35 | 0.84 | 2.34 | 1.99 | 5.2 | 2.8 |
| Comp. Ex. 16 | 10.2 | 11.5 | 0.45 | 0.90 | 2.45 | 2.00 | 4.9 | 2.7 |
| Comp. Ex. 17 | 13.4 | 16.5 | 0.17 | 0.49 | 1.84 | 1.67 | 3.5 | 3.8 |
| Comp. Ex. 18 | 16.2 | 11.3 | 0.15 | 0.44 | 1.73 | 1.58 | 3.8 | 3.9 |
| Comp. Ex. 19 | 12.6 | 12.0 | 0.45 | 0.86 | 2.09 | 1.64 | 5.8 | 2.4 |
| Comp. Ex. 20 | 12.0 | 18.5 | 0.41 | 0.86 | 2.38 | 1.97 | 5.5 | 2.8 |
| Comp. Ex. 21 | 13.9 | 21.0 | 0.18 | 0.50 | 1.80 | 1.62 | 3.7 | 3.6 |
| Comp. Ex. 22 | 2.8 | 9.0 | 0.75 | 1.26 | 2.63 | 1.88 | 1.9 | 2.1 |

Use test examples

[Sintering test for silicon nitride powder produced by imide pyrolysis]

The silicon nitride powders obtained in Examples 1 to 29 and Comparative Examples 1 to 12 were used as starting materials for imide pyrolysis to fabricate silicon nitride sintered bodies for structural members by the method described above under (Method of fabricating and evaluating high-strength sintered body for structural member), and the strength properties were evaluated. The measurement results for achieved density (relative density) and flexural strength (room-temperature strength, high-temperature strength and post-oxidation strength) of the sintered bodies are shown in [Table 10] below.

The silicon nitride powders obtained in Examples 1 to 29 and Comparative Examples 1 to 12 were used as starting materials in the same manner, to fabricate silicon nitride sintered bodies for circuit boards by the method described above under (Method of fabricating and evaluating high heat conduction sintered body for circuit board), and the strength properties and thermal conductivities were evaluated. The measurement results for achieved density (relative density), flexural strength (room temperature) and thermal conductivity (room temperature) of the sintered bodies are shown in [Table 10] below.

[Table 10]

| | | High-strength material | | | | High thermal conductive material | | |
| | | $Y_2O_3$-$Al_2O_3$ based sintered body | | | | $Y_2O_3$-MgO based sintered body | | |
| | | Achieved density (%) | Flexural strength (room temp.) (MPa) | Flexural strength (1250°C) (MPa) | Post-oxidation strength (room temp.) (MPa) | Achieved density (%) | Flexural strength (room temp.) (MPa) | Thermal conductivity (room temp.) (W/(m·K)) |
|---|---|---|---|---|---|---|---|---|
| Example | 1 | 97.2 | 1020 | 715 | 710 | 98.1 | 775 | 116 |
| Example | 2 | 97.7 | 1045 | 725 | 720 | 98.5 | 795 | 118 |
| Example | 3 | 98.5 | 1140 | 785 | 805 | 99.1 | 845 | 116 |
| Example | 4 | 98.7 | 1170 | 775 | 808 | 99.2 | 855 | 117 |
| Example | 5 | 99.4 | 1240 | 815 | 855 | 99.6 | 895 | 130 |
| Example | 6 | 99.2 | 1250 | 820 | 845 | 99.5 | 905 | 131 |
| Example | 7 | 99.5 | 1210 | 810 | 840 | 99.7 | 900 | 123 |
| Example | 8 | 98.9 | 1175 | 790 | 810 | 99.4 | 860 | 118 |
| Example | 9 | 99.0 | 1205 | 800 | 825 | 99.4 | 895 | 120 |
| Example | 10 | 98.8 | 1175 | 795 | 810 | 99.2 | 875 | 117 |
| Example | 11 | 99.7 | 1100 | 825 | 840 | 99.8 | 920 | 132 |
| Example | 12 | 99.1 | 1175 | 820 | 850 | 99.3 | 910 | 127 |
| Example | 13 | 99.8 | 1200 | 830 | 870 | 99.9 | 925 | 128 |
| Example | 14 | 99.0 | 1100 | 780 | 800 | 99.2 | 850 | 119 |
| Example | 15 | 98.9 | 1110 | 790 | 805 | 99.2 | 870 | 119 |
| Example | 16 | 99.0 | 1125 | 785 | 790 | 99.1 | 850 | 118 |
| Example | 17 | 99.1 | 1150 | 765 | 775 | 99.3 | 835 | 110 |
| Example | 18 | 97.8 | 1000 | 760 | 785 | 98.4 | 770 | 118 |
| Example | 19 | 98.0 | 1065 | 630 | 740 | 98.6 | 785 | 119 |
| Example | 20 | 97.7 | 1010 | 725 | 760 | 98.2 | 795 | 115 |
| Example | 21 | 98.2 | 980 | 705 | 675 | 98.6 | 750 | 112 |
| Example | 22 | 97.6 | 1055 | 717 | 700 | 98.4 | 795 | 114 |

(continued)

| | | High-strength material | | | | High thermal conductive material | | |
| | | Y$_2$O$_3$-Al$_2$O$_3$ based sintered body | | | | Y$_2$O$_3$-MgO based sintered body | | |
| | | Achieved density (%) | Flexural strength (room temp.) (MPa) | Flexural strength (1250°C) (MPa) | Post-oxidation strength (room temp.) (MPa) | Achieved density (%) | Flexural strength (room temp.) (MPa) | Thermal conductivity (room temp.) (W/(m·K)) |
|---|---|---|---|---|---|---|---|---|
| Example | 23 | 97.6 | 1035 | 710 | 715 | 98.3 | 780 | 111 |
| Example | 24 | 96.9 | 1000 | 690 | 685 | 97.6 | 765 | 108 |
| Example | 25 | 97.0 | 930 | 670 | 670 | 97.7 | 725 | 107 |
| Example | 26 | 97.2 | 960 | 620 | 660 | 97.6 | 730 | 107 |
| Example | 27 | 97.1 | 990 | 650 | 670 | 97.7 | 745 | 100 |
| Example | 28 | 96.5 | 970 | 675 | 690 | 97.3 | 720 | 111 |
| Example | 29 | 96.1 | 910 | 660 | 660 | 96.6 | 700 | 108 |
| Comp. Ex. | 1 | 96.8 | 855 | 585 | 635 | 97.1 | 665 | 87 |
| Comp. Ex. | 2 | 97.0 | 780 | 535 | 655 | 97.1 | 635 | 96 |
| Comp. Ex. | 3 | 97.0 | 860 | 530 | 620 | 97.2 | 675 | 87 |
| Comp. Ex. | 4 | 96.7 | 850 | 610 | 645 | 97.3 | 675 | 95 |
| Comp. Ex. | 5 | 96.0 | 765 | 530 | 660 | 97.0 | 625 | 97 |
| Comp. Ex. | 6 | 96.0 | 770 | 530 | 635 | 96.9 | 615 | 96 |
| Comp. Ex. | 7 | 95.5 | 780 | 500 | 585 | 96.1 | 615 | 98 |
| Comp. Ex. | 8 | 89.5 | 470 | 300 | 310 | 90.9 | 430 | 72 |
| Comp. Ex. | 9 | 95.1 | 800 | 500 | 580 | 96.1 | 640 | 96 |
| Comp. Ex. | 10 | 95.5 | 810 | 530 | 625 | 96.3 | 655 | 90 |
| Comp. Ex. | 11 | 96.2 | 825 | 565 | 625 | 96.6 | 650 | 93 |
| Comp. Ex. | 12 | 95.4 | 770 | 480 | 545 | 96.1 | 625 | 74 |

(Results of sintering test for silicon nitride powders of Examples 1 to 29)

The crystalline silicon nitride powders of Examples 1 and 2, presumably due to having a surface oxygen amount (FSO) of 0.34 mass% or lower, an internal oxygen amount/specific surface area ratio (FIO/SSA) of 0.62 mg/m$^2$ or lower, a specific surface area of 8.2 m$^2$/g or lower and a second cohesion index D$_{90}$/D$_{50}$ of 2.5, exhibited, as high-strength materials (Y$_2$O$_3$-Al$_2$O$_3$ auxiliary agent-based sintered bodies), flexural strength of 1020 to 1045 MPa at room temperature and about 720 MPa at high temperature (1250°C), while having post-oxidation strength (room temperature) of about 715 MPa. The flexural strength of high heat-conductive materials (Y$_2$O$_3$-MgO auxiliary agent-based sintered bodies) (room temperature) was 775 to 795 MPa, and the thermal conductivity was about 117 W/(m·K).

The crystalline silicon nitride powders of Examples 3 and 4, presumably due to having a surface oxygen amount (FSO) of 0.38 to 0.39 mass%, an internal oxygen amount/specific surface area ratio (FIO/SSA) of about 0.74 mg/m$^2$, a specific surface area of 8.2 to 8.7 m$^2$/g and a carbon content of 0.14 to 0.16 mass%, exhibited, as high-strength materials (Y$_2$O$_3$-Al$_2$O$_3$ auxiliary agent-based sintered bodies), flexural strength of 1140 to 1170 MPa at room temperature and about 780 MPa at high temperature (1250°C), while the post-oxidation strength (room temperature) was increased to about 805 MPa. The flexural strength of high heat-conductive materials (Y$_2$O$_3$-MgO auxiliary agent-based sintered bodies) (room temperature) was increased to about 850 MPa.

The crystalline silicon nitride powders of Examples 5 to 7, 9 and 11 to 13, presumably due to having a surface oxygen amount (FSO) of 0.35 mass% or greater, an internal oxygen amount/specific surface area ratio (FIO/SSA) of 0.74 mg/m$^2$ or higher, a carbon content of 0.13 mass% or lower, a specific surface area of 9.2 to 11.8 m$^2$/g, a first cohesion index

$D_{50}/D_{BET}$ of 3.4 to 4.7 and a second cohesion index $D_{90}/D_{50}$ of 2.6 to 3.1, exhibited, as high-strength materials ($Y_2O_3$-$Al_2O_3$ auxiliary agent-based sintered bodies), flexural strength of 1100 MPa or greater at room temperature and 800 MPa or greater at high temperature (1250°C), while having post-oxidation strength (room temperature) of 825 MPa or higher. The flexural strength (room temperature) of high heat-conductive materials ($Y_2O_3$-MgO auxiliary agent-based sintered bodies) was 895 MPa or higher and the thermal conductivity was 120 W/(m·K) or higher, indicating excellent thermal and mechanical properties. The crystalline silicon nitride powder of Example 11 had the first cohesion index $D_{50}/D_{BET}$ increased to 4.7, and therefore the room temperature flexural strength of the high-strength material ($Y_2O_3$-$Al_2O_3$ auxiliary agent-based sintered body) was lowered to 1100 MPa, whereas the high-strength materials ($Y_2O_3$-$Al_2O_3$ auxiliary agent-based sintered bodies) of Examples 5 to 7, 9, 12 and 13 had room temperature flexural strength of 1175 MPa or higher.

The crystalline silicon nitride powders of Examples 8 and 10, presumably due to having an internal oxygen amount/specific surface area ratio (FIO/SSA) of 0.86 mg/m$^2$ or higher, a median diameter $D_{50}$ of 0.62 to 0.63 $\mu$m, a cumulative 90% diameter $D_{90}$ of about 1.95 $\mu$m and a cumulative 10% diameter of 0.23 $\mu$m, exhibited, as high-strength materials ($Y_2O_3$-$Al_2O_3$ auxiliary agent-based sintered bodies), flexural strength of 1175 MPa at room temperature and about 790 MPa at high temperature (1250°C), while having post-oxidation strength of 810 MPa. The flexural strength of high heat-conductive materials ($Y_2O_3$-MgO auxiliary agent-based sintered bodies) (room temperature) was 860 to 875 MPa, and the thermal conductivity was about 118 W/(m·K).

The crystalline silicon nitride powders of Examples 14 and 15, presumably due to having an internal oxygen amount/specific surface area ratio (FIO/SSA) of 0.65 mg/m$^2$ and a first cohesion index $D_{50}/D_{BET}$ of 4.7 to 4.8, exhibited, as high-strength materials ($Y_2O_3$-$Al_2O_3$ auxiliary agent-based sintered bodies), flexural strength of about 1105 MPa at room temperature and about 785 MPa at high temperature (1250°C), while having post-oxidation strength of about 803 MPa. The flexural strength of high heat-conductive materials ($Y_2O_3$-MgO auxiliary agent-based sintered bodies) (room temperature) was about 860 MPa, and the thermal conductivity was 119 W/(m·K).

The crystalline silicon nitride powders of Examples 16 and 17 had an internal oxygen amount (FIO) of 1.0 mass% or higher, but presumably due to having an internal oxygen amount/specific surface area ratio (FIO/SSA) of 0.86 to 0.94 mg/m$^2$, a first cohesion index $D_{50}/D_{BET}$ of 4.2 to 4.6 and a second cohesion index $D_{90}/D_{50}$ of about 2.8, exhibited, as high-strength materials ($Y_2O_3$-$Al_2O_3$ auxiliary agent-based sintered bodies), flexural strength of 1125 to 1150 MPa at room temperature and 765 to 785 MPa at high temperature (1250°C), while having post-oxidation strength (room temperature) of 775 to 790 MPa. The flexural strength of high heat-conductive materials ($Y_2O_3$-MgO auxiliary agent-based sintered bodies) (room temperature) was about 840 MPa, and the thermal conductivity was 110 to 118 W/(m·K).

The crystalline silicon nitride powder of Example 18, presumably due to having an internal oxygen amount (FIO) of 1.15 mass%, a specific surface area of 14 m$^2$/g or greater and a first cohesion index $D_{50}/D_{BET}$ of 5.0, exhibited, as a high-strength material ($Y_2O_3$-$Al_2O_3$ auxiliary agent-based sintered body), lowered flexural strength of 1000 MPa at room temperature and 760 MPa at high temperature (1250°C). The flexural strength of the high heat-conductive material ($Y_2O_3$-MgO auxiliary agent-based sintered body) (room temperature) was lowered to 770 MPa.

The crystalline silicon nitride powder of Example 19, presumably due to having a surface oxygen amount/specific surface area ratio (FSO/SSA) ratio of 0.27 mg/m$^2$ and a fluorine content of 85 ppm, exhibited flexural strength drastically lowered to 630 MPa at high temperature (1250°C) and post-oxidation strength (room temperature) drastically lowered to 740 MPa.

The crystalline silicon nitride powder of Example 20, presumably due to having a surface oxygen amount (FSO) of 0.57 mass%, an internal oxygen amount (FIO) of 1.2 mass% or greater, a specific surface area of 15 m$^2$/g or greater, a cumulative 10% diameter $D_{10}$ of 0.22 $\mu$m and a cumulative 90% diameter $D_{90}$ of 1.94 $\mu$m, with a first cohesion index $D_{50}/D_{BET}$ of 4.8 and a second cohesion index $D_{90}/D_{50}$ of 3.3, exhibited, as a high-strength material ($Y_2O_3$-$Al_2O_3$ auxiliary agent-based sintered body), flexural strength of 1010 MPa at room temperature and 725 MPa at high temperature (1250°C), while having post-oxidation strength (room temperature) of 760 MPa.

The crystalline silicon nitride powders of Examples 21 and 24, presumably due to having a surface oxygen amount (FSO) of 0.33 mass% or lower, an internal oxygen amount/specific surface area ratio (FIO/SSA) of 0.57 mg/m$^2$ and a second cohesion index $D_{90}/D_{50}$ of 2.4 to 2.5, exhibited, as high-strength materials ($Y_2O_3$-$Al_2O_3$ auxiliary agent-based sintered bodies), flexural strength drastically lowered to about 990 MPa at room temperature and about 700 MPa at high temperature (1250°C), while having post-oxidation strength (room temperature) drastically lowered to about 680 MPa. The flexural strength of high heat-conductive materials ($Y_2O_3$-MgO auxiliary agent-based sintered bodies) (room temperature) was lowered to 750 to 765 MPa. The specific surface area of the crystalline silicon nitride powder of Example 21 was 10.2 m$^2$/g, and the first cohesion index $D_{50}/D_{BET}$ was 5.0. The crystalline silicon nitride powder of Example 24 was coarse with a low specific surface area (7.4 m$^2$/g), and with a median diameter $D_{50}$ of 1.00 $\mu$m, a cumulative 10% diameter $D_{10}$ of 0.54 $\mu$m and a cumulative 90% diameter $D_{90}$ of 2.53 $\mu$m, the first cohesion index $D_{50}/D_{BET}$ being 3.9.

The crystalline silicon nitride powder of Example 22, presumably due to having a surface oxygen amount/specific surface area ratio (FSO/SSA) ratio of 0.27 mg/m$^2$, an internal oxygen amount/specific surface area ratio (FIO/SSA) of 0.60

mg/m$^2$ and a cumulative 90% diameter $D_{90}$ of 1.96 $\mu$m, exhibited, as a high-strength material ($Y_2O_3$-$Al_2O_3$ auxiliary agent-based sintered body), flexural strength of 1055 MPa at room temperature and 717 MPa at high temperature (1250°C), while having post-oxidation strength (room temperature) of 700 MPa.

The crystalline silicon nitride powder of Example 23, presumably due to an internal oxygen amount/specific surface area ratio (FIO/SSA) of 0.62 mg/m$^2$ or lower, being coarse with a cumulative 10% diameter $D_{10}$ of 0.47 $\mu$m and a cumulative 90% diameter $D_{90}$ of 2.36 $\mu$m, and having a second cohesion index $D_{90}/D_{50}$ of 2.6, exhibited, as a high-strength material ($Y_2O_3$-$Al_2O_3$ auxiliary agent-based sintered body), flexural strength of 1035 MPa at room temperature and 710 MPa at high temperature (1250°C), while having post-oxidation strength (room temperature) of 715 MPa.

The crystalline silicon nitride powder of Example 25, presumably due to having a surface oxygen amount (FSO) of 0.38 mass%, an internal oxygen amount/specific surface area (FIO/SSA) of 0.58 mg/m$^2$, a total oxygen content/specific surface area ratio (TO/SA) of 0.83 mg/m$^2$, a high specific surface area (15.5 m$^2$/g), having large values of the cumulative 90% diameter $D_{90}$ of 2.39 $\mu$m, a first cohesion index $D_{50}/D_{BET}$ of 5.6 and a second cohesion index $D_{90}/D_{50}$ of 3.5 (strong aggregation and a wide particle size distribution), exhibited, as a high-strength material ($Y_2O_3$-$Al_2O_3$ auxiliary agent-based sintered body), flexural strength of 930 MPa at room temperature and 670 MPa at high temperature (1250°C), while having post-oxidation strength (room temperature) of 670 MPa. The flexural strength of the high heat-conductive material ($Y_2O_3$-MgO auxiliary agent-based sintered body) (room temperature) was 725 MPa, and the thermal conductivity was 107 W/(m·K).

The crystalline silicon nitride powder of Example 26, presumably due to having an FSOA of 0.52 mass%, an FSOB of 0.06 mass%, a surface oxygen amount/specific surface area ratio (FSO/SA) of 0.49 mg/m$^2$ and an internal oxygen amount/specific surface area ratio (FIO/SA) of 0.86 mg/m$^2$, and being somewhat large with a cumulative 90% diameter $D_{90}$ of 2.35 $\mu$m and a first cohesion index $D_{50}/D_{BET}$ of 5.1, exhibited, as a high-strength material ($Y_2O_3$-$Al_2O_3$ auxiliary agent-based sintered body), flexural strength of 960 MPa at room temperature and 620 MPa at high temperature (1250°C), while having post-oxidation strength (room temperature) of 660 MPa. The flexural strength of the high heat-conductive material ($Y_2O_3$-MgO auxiliary agent-based sintered body) (room temperature) was 730 MPa, and the thermal conductivity was 107 W/(m·K).

The crystalline silicon nitride powder of Example 27, presumably due to having an FSOA of 0.08 mass%, an FSOB of 0.49 mass%, a surface oxygen amount/specific surface area ratio (FSO/SA) of 0.49 mg/m$^2$ and an internal oxygen amount/specific surface area ratio (FIO/SA) of 1.01 mg/m$^2$, and with a cumulative 90% diameter $D_{90}$ of 2.20 $\mu$m and a first cohesion index $D_{50}/D_{BET}$ of 4.6, exhibited, as a high-strength material ($Y_2O_3$-$Al_2O_3$ auxiliary agent-based sintered body), flexural strength of 990 MPa at room temperature and 650 MPa at high temperature (1250°C), while having post-oxidation strength (room temperature) of 670 MPa. The flexural strength of the high heat-conductive material ($Y_2O_3$-MgO auxiliary agent-based sintered body) (room temperature) was 745 MPa, and the thermal conductivity was 100 W/(m·K). When Example 26 and Example 27 are compared they are found to have almost the same surface oxygen amount, but the sintered body of Example 26 which had a greater FSOA exhibited somewhat higher thermal conductivity, while the sintered body of Example 27 which had a greater FSOB exhibited somewhat higher flexural strength, indicating the effects of FSOA and FSOB on the thermal properties and strength properties.

The crystalline silicon nitride powders of Examples 28 and 29 had a specific surface area of lower than 7 m$^2$/g and therefore tended to have somewhat lower achieved density, strength properties and thermal conductivity.

(Results of sintering test for silicon nitride powders of Comparative Examples 1 to 12)

Reflecting the powder properties listed in [Table 2] and [Table 3], the crystalline silicon nitride powders of Comparative Examples 1 to 12 exhibited, as high-strength materials ($Y_2O_3$-$Al_2O_3$ auxiliary agent-based sintered bodies), flexural strength of 860 MPa or lower at room temperature and 610 MPa or lower at high temperature (1250°C), with post-oxidation strength (room temperature) of 660 MPa or lower. The flexural strength (room temperature) of the high heat-conductive materials ($Y_2O_3$-MgO auxiliary agent-based sintered bodies) was 675 MPa or lower and the thermal conductivity was 98 W/(m·K) or lower, and therefore the properties of the obtained sintered bodies were inferior to Examples 1 to 29.

[Sintering test for silicon nitride powders produced by direct nitriding]

The silicon nitride powders obtained by direct nitriding in Examples 30 to 51 and Comparative Examples 13 to 22 were used as starting materials to fabricate silicon nitride sintered bodies for structural members by the method described above under (Method of fabricating and evaluating high-strength sintered body for structural member), and the strength properties were evaluated. The measurement results for achieved density (relative density) and flexural strength (room-temperature strength, high-temperature strength and post-oxidation strength) of the sintered bodies are shown in [Table 11] below.

The silicon nitride powders obtained in Examples 30 to 51 and Comparative Examples 13 to 22 were used as starting materials in the same manner, to fabricate silicon nitride sintered bodies for circuit boards by the method described above under (Method of fabricating and evaluating high heat conduction sintered body for circuit board), and the strength properties and thermal conductivities were evaluated. The measurement results for achieved density (relative density), flexural strength (room temperature) and thermal conductivity (room temperature) of the sintered bodies are shown in [Table 11] below.

[Table 11]

| | | | High-strength material | | | | High thermal conductive material | | |
| | | | $Y_2O_3$-$Al_2O_3$ based sintered body | | | | $Y_2O_3$-MgO based sintered body | | |
| | | | Achieved density (%) | Flexural strength (room temp.) (MPa) | Flexural strength (1250°C) (MPa) | Post-oxidation strength (room temp.) (MPa) | Achieved density (%) | Flexural strength (room temp.) (MPa) | Thermal conductivity (room temp.) (W/(m·K)) |
|---|---|---|---|---|---|---|---|---|---|
| Example | 30 | | 97.1 | 860 | 570 | 585 | 98.0 | 710 | 108 |
| Example | 31 | | 97.4 | 855 | 575 | 580 | 98.3 | 705 | 108 |
| Example | 32 | | 98.6 | 960 | 635 | 650 | 99.3 | 775 | 110 |
| Example | 33 | | 99.2 | 985 | 650 | 665 | 99.6 | 805 | 120 |
| Example | 34 | | 99.3 | 995 | 645 | 675 | 99.4 | 820 | 118 |
| Example | 35 | | 99.1 | 975 | 630 | 640 | 99.3 | 800 | 113 |
| Example | 36 | | 99.2 | 920 | 635 | 665 | 99.1 | 795 | 112 |
| Example | 37 | | 99.2 | 980 | 650 | 655 | 99.5 | 810 | 117 |
| Example | 38 | | 98.9 | 970 | 620 | 640 | 99.4 | 780 | 110 |
| Example | 39 | | 98.8 | 920 | 610 | 620 | 99.2 | 755 | 109 |
| Example | 40 | | 99.2 | 960 | 635 | 640 | 99.4 | 785 | 111 |
| Example | 41 | | 98.9 | 950 | 610 | 625 | 99.1 | 775 | 107 |
| Example | 42 | | 98.6 | 915 | 630 | 655 | 99.0 | 780 | 105 |
| Example | 43 | | 98.1 | 900 | 600 | 635 | 98.6 | 760 | 96 |
| Example | 44 | | 98.2 | 840 | 560 | 575 | 98.6 | 705 | 110 |
| Example | 45 | | 97.4 | 860 | 565 | 610 | 98.1 | 725 | 103 |
| Example | 46 | | 97.8 | 880 | 570 | 580 | 98.6 | 745 | 107 |
| Example | 47 | | 97.4 | 865 | 580 | 585 | 98.2 | 725 | 108 |
| Example | 48 | | 96.9 | 805 | 540 | 550 | 97.8 | 685 | 108 |
| Example | 49 | | 98.7 | 940 | 630 | 645 | 99.0 | 770 | 99 |
| Example | 50 | | 95.5 | 805 | 540 | 525 | 96.9 | 710 | 98 |
| Example | 51 | | 94.9 | 750 | 510 | 520 | 95.6 | 685 | 93 |
| Comp. Ex. | 13 | | 96.6 | 730 | 490 | 530 | 97.4 | 640 | 89 |
| Comp. Ex. | 14 | | 96.5 | 730 | 440 | 525 | 97.3 | 635 | 87 |
| Comp. Ex. | 15 | | 96.2 | 710 | 425 | 520 | 97.1 | 620 | 90 |
| Comp. Ex. | 16 | | 96.3 | 740 | 430 | 505 | 97.4 | 630 | 88 |
| Comp. Ex. | 17 | | 96.5 | 690 | 440 | 520 | 97.1 | 625 | 80 |
| Comp. Ex. | 18 | | 96.6 | 680 | 460 | 525 | 97.3 | 610 | 83 |
| Comp. Ex. | 19 | | 95.7 | 695 | 445 | 510 | 96.9 | 605 | 85 |
| Comp. Ex. | 20 | | 95.3 | 690 | 410 | 430 | 96.6 | 590 | 92 |

(continued)

| | | High-strength material | | | | High thermal conductive material | | |
|---|---|---|---|---|---|---|---|---|
| | | $Y_2O_3$-$Al_2O_3$ based sintered body | | | | $Y_2O_3$-MgO based sintered body | | |
| | | Achieved density (%) | Flexural strength (room temp.) (MPa) | Flexural strength (1250°C) (MPa) | Post-oxidation strength (room temp.) (MPa) | Achieved density (%) | Flexural strength (room temp.) (MPa) | Thermal conductivity (room temp.) (W/(m·K)) |
| Comp. Ex. | 21 | 96.0 | 685 | 405 | 470 | 96.6 | 595 | 86 |
| Comp. Ex. | 22 | 87.0 | 480 | 290 | 300 | 90.5 | 500 | 70 |

(Results of sintering test for silicon nitride powders of Examples 30 to 51)

The crystalline silicon nitride powders of Examples 30 and 31, presumably due to having a surface oxygen amount (FSO) of 0.33 mass% or lower, an internal oxygen amount/specific surface area ratio (FIO/SSA) of 0.62 mg/m$^2$ or lower, a carbon content of 0.16 mass% or higher, a specific surface area of 8.3 m$^2$/g or lower and a second cohesion index $D_{90}/D_{50}$ of 2.4 or 2.5, exhibited, as high-strength materials ($Y_2O_3$-$Al_2O_3$ auxiliary agent-based sintered bodies), flexural strength of about 860 MPa at room temperature and about 570 MPa at high temperature (1250°C), with post-oxidation strength (room temperature) of about 580 MPa.

The crystalline silicon nitride powders of Examples 32 to 37, presumably due to having a surface oxygen amount (FSO) of 0.35 mass% or greater, a surface oxygen amount/specific surface area ratio (FSO/SSA) of 0.34 to 0.45 mg/m$^2$, an internal oxygen amount/specific surface area ratio (FIO/SSA) of 0.72 mg/m$^2$ or higher, a carbon content of 0.14 mass% or lower and a specific surface area of 8.8 to 11.0 m$^2$/g, exhibited, as high-strength materials ($Y_2O_3$-$Al_2O_3$ auxiliary agent-based sintered bodies), flexural strength of 920 MPa or higher at room temperature and 630 MPa or higher at high temperature (1250°C), while the post-oxidation strength (room temperature) was 640 MPa or higher. The flexural strength (room temperature) of high heat-conductive materials ($Y_2O_3$-MgO auxiliary agent-based sintered bodies) was 775 MPa or higher and the thermal conductivity was 110 W/(m·K) or higher, indicating excellent thermal and mechanical properties. The cumulative 90% diameter $D_{90}$ of each of the crystalline silicon nitride powders of Examples 32 to 37 was 1.96 to 2.19 μm, the first cohesion index $D_{50}/D_{BET}$ was 3.1 to 4.4, and the second cohesion index $D_{90}/D_{50}$ was 2.6 to 3.1.

The crystalline silicon nitride powders of Examples 38 and 39, presumably due to having a surface oxygen amount of 0.38 to 0.46 mass%, a surface oxygen amount/specific surface area ratio (FSO/SSA) of 0.31 to 0.43 mg/m$^2$, an internal oxygen amount/specific surface area ratio (FIO/SSA) of 0.65 mg/m$^2$ and a first cohesion index $D_{50}/D_{BET}$ of 4.6 to 4.7, exhibited, as high-strength materials ($Y_2O_3$-$Al_2O_3$ auxiliary agent-based sintered bodies), flexural strength of 920 to 970 MPa at room temperature and about 615 MPa at high temperature (1250°C), while having post-oxidation strength of about 620 to 640 MPa. The flexural strength of high heat-conductive materials ($Y_2O_3$-MgO auxiliary agent-based sintered bodies) (room temperature) was 755 to 780 MPa (tending to be somewhat lower than Examples 32 to 37).

The crystalline silicon nitride powders of Examples 40 and 41, presumably due to having an internal oxygen amount (FIO) of 1.0 mass% or greater, an internal oxygen amount/specific surface area ratio (FIO/SSA) of 0.85 to 0.94 mg/m$^2$ and a cumulative 90% diameter $D_{90}$ of 2.05 to 2.12 μm, exhibited, as high-strength materials ($Y_2O_3$-$Al_2O_3$ auxiliary agent-based sintered bodies), flexural strength of about 955 MPa at room temperature and 610 to 635 MPa at high temperature (1250°C), while the post-oxidation strength (room temperature) was 625 to 640 MPa. The flexural strength of high heat-conductive materials ($Y_2O_3$-MgO auxiliary agent-based sintered bodies) (room temperature) was about 780 MPa, and the thermal conductivity was 107 to 111 W/(m·K).

The crystalline silicon nitride powder of Example 42, presumably due to having an internal oxygen amount (FIO) of 1.0 mass% or greater, a cumulative 90% diameter $D_{90}$ of 1.95 μm and a cumulative 10% diameter $D_{10}$ of 0.24 μm, exhibited, as a high-strength material ($Y_2O_3$-$Al_2O_3$ auxiliary agent-based sintered body), flexural strength of 915 MPa at room temperature and 630 MPa at high temperature (1250°C), while having post-oxidation strength (room temperature) of 655 MPa. The flexural strength of the high heat-conductive material ($Y_2O_3$-MgO auxiliary agent-based sintered body) (room temperature) was 780 MPa, and the thermal conductivity was 105 W/(m·K).

The crystalline silicon nitride powder of Example 43, presumably due to having an internal oxygen amount (FIO) of 1.22 mass%, a cumulative 90% diameter $D_{90}$ of 1.82 μm and a first cohesion index $D_{50}/D_{BET}$ of 4.7, with a halogen (F + Cl) content exceeding 120 ppm, exhibited, as a high-strength material ($Y_2O_3$-$Al_2O_3$ auxiliary agent-based sintered body), flexural strength of 900 MPa at room temperature and 600 MPa at high temperature (1250°C), while having post-oxidation strength (room temperature) lowered to 635 MPa. The flexural strength of the high heat-conductive material ($Y_2O_3$-MgO

auxiliary agent-based sintered body) (room temperature) was 760 MPa, and the thermal conductivity was 96 W/(m·K).

The crystalline silicon nitride powder of Example 44, presumably due to having an internal oxygen amount/-specific surface area ratio (FIO/SSA) of 0.59 mg/m$^2$, a first cohesion index $D_{50}/D_{BET}$ of 5.0 (somewhat high) and a second cohesion index $D_{90}/D_{50}$ of 2.4, exhibited, as a high-strength material ($Y_2O_3$-$Al_2O_3$ auxiliary agent-based sintered body), very reduced flexural strength of 840 MPa at room temperature and 560 MPa at high temperature (1250°C), while having very reduced post-oxidation strength (room temperature) of 575 MPa. The flexural strength of the high heat-conductive material ($Y_2O_3$-MgO auxiliary agent-based sintered body)

(room temperature) was also lowered to 705 MPa.

The crystalline silicon nitride powder of Example 45, presumably due to having a surface oxygen amount (FSO) of 0.55 mass%, an internal oxygen amount (FIO) of 1.15 mass%, a specific surface area of 15 m$^2$/g or greater, a cumulative 10% diameter $D_{10}$ of 0.23 $\mu$m and a cumulative 90% diameter $D_{90}$ of 1.93 $\mu$m, with a first cohesion index $D_{50}/D_{BET}$ of 4.9, exhibited, as a high-strength material ($Y_2O_3$-$Al_2O_3$ auxiliary agent-based sintered body), flexural strength of 860 MPa at room temperature and 565 MPa at high temperature (1250°C), while having post-oxidation strength (room temperature) of 610 MPa. Example 45 had a halogen (F + Cl) content of greater than 120 ppm.

The crystalline silicon nitride powder of Example 46, presumably due to having a surface oxygen amount (FSO) of 0.33 mass%, an internal oxygen amount/specific surface area ratio (FIO/SSA) of 0.62 mg/m$^2$ and a halogen (F + Cl) content of greater than 120 ppm, exhibited, as a high-strength material ($Y_2O_3$-$Al_2O_3$ auxiliary agent-based sintered body), flexural strength of 880 MPa at room temperature and 570 MPa at high temperature (1250°C), while having post-oxidation strength (room temperature) lowered to 580 MPa. The cumulative 10% diameter $D_{10}$ of Example 46 was 0.27 $\mu$m and the cumulative 90% diameter $D_{90}$ was 1.97 $\mu$m.

The crystalline silicon nitride powder of Example 47, presumably due to having an internal oxygen amount/-specific surface area ratio (FIO/SSA) of 0.65 mg/m$^2$, and being coarse with a cumulative 10% diameter $D_{10}$ of 0.48 $\mu$m, a median diameter of 0.93 $\mu$m and a cumulative 90% diameter $D_{90}$ of 2.36 $\mu$m, exhibited, as a high-strength material ($Y_2O_3$-$Al_2O_3$ auxiliary agent-based sintered body), flexural strength of 865 MPa at room temperature and 580 MPa at high temperature (1250°C), while having post-oxidation strength (room temperature) lowered to 585 MPa.

The crystalline silicon nitride powder of Example 48, presumably due to having a surface oxygen amount/specific surface area ratio (FSO/SSA) of 0.25 mg/m$^2$, an internal oxygen amount/specific surface area ratio (FIO/SSA) of 0.57 mg/m$^2$, a total oxygen content/specific surface area ratio (TO/SA) of 0.81 mg/m$^2$, a high specific surface area (15.6 m$^2$/g), and a cumulative 90% diameter $D_{90}$ of greater than 2.35 $\mu$m, exhibited, as a high-strength material ($Y_2O_3$-$Al_2O_3$ auxiliary agent-based sintered body), flexural strength of 805 MPa at room temperature and 540 MPa at high temperature (1250°C), while having a low value of 550 MPa for the post-oxidation strength (room temperature). The flexural strength of the high heat-conductive material ($Y_2O_3$-MgO auxiliary agent-based sintered body) (room temperature) was 685 MPa, and the thermal conductivity was 108 W/(m·K).

The crystalline silicon nitride powder of Example 49, presumably due to having an FSOA of 0.10 mass%, an FSOB of 0.38 mass%, a surface oxygen amount/specific surface area ratio (FSO/SA) of 0.45 mg/m$^2$ and an internal oxygen amount/specific surface area ratio (FIO/SA) of 0.66 mg/m$^2$, and with a cumulative 90% diameter $D_{90}$ of 2.24 $\mu$m and a first cohesion index $D_{50}/D_{BET}$ of 4.7, exhibited, as a high-strength material ($Y_2O_3$-$Al_2O_3$ auxiliary agent-based sintered body), flexural strength of 940 MPa at room temperature and 630 MPa at high temperature (1250°C), while having post-oxidation strength (room temperature) of 645 MPa. The flexural strength of the high heat-conductive material ($Y_2O_3$-MgO auxiliary agent-based sintered body) (room temperature) was 770 MPa, and the thermal conductivity was 99 W/(m·K). When Example 39 and Example 49 are compared they are found to have almost the same surface oxygen amount, but the sintered body of Example 39 which had a greater FSOA exhibited somewhat higher thermal conductivity, while the sintered body of Example 49 which had a greater FSOB exhibited somewhat higher flexural strength, indicating the effects of FSOA and FSOB on the thermal properties and strength properties.

The crystalline silicon nitride powders of Examples 50 and 51 had a specific surface area of lower than 7 m$^2$/g and therefore tended to have somewhat lower achieved density, strength properties and thermal conductivity.

(Results of sintering test for silicon nitride powders of Comparative Examples 13 to 22)

Reflecting the powder properties listed in [Table 7] to [Table 9], the crystalline silicon nitride powders of Comparative Examples 13 to 22 exhibited, as high-strength materials ($Y_2O_3$-$Al_2O_3$ auxiliary agent-based sintered bodies), flexural strength of 740 MPa or lower at room temperature and 490 MPa or lower at high temperature (1250°C), with post-oxidation strength (room temperature) of 530 MPa or lower. The flexural strength (room temperature) of the high heat-conductive materials ($Y_2O_3$-MgO auxiliary agent-based sintered bodies) was 640 MPa or lower and the thermal conductivity was 92 W/(m·K) or lower, and therefore the properties of the obtained sintered bodies were inferior to Examples 30 to 51.

INDUSTRIAL APPLICABILITY

As explained above, the present invention can provide silicon nitride powder having suitable ranges for the ratio (FSO/SA) of surface oxygen amount to specific surface area and the ratio (FIO/SA) of internal oxygen amount to specific surface area, and that can yield silicon nitride sintered bodies that have both excellent mechanical properties and high thermal conductivity, as well as a method for production of the same. The invention can also provide a method for producing a silicon nitride sintered body which has high thermal conductivity in addition to the inherent mechanical property of high strength (high room-temperature strength, high-temperature strength and oxidized room-temperature strength) of a silicon nitride sintered body, and which therefore exhibits excellent mechanical properties and high thermal conductivity.

REFERENCE SIGNS LIST

1 Surface oxygen-derived peak
2 Internal oxygen-derived peak
3 Nitrogen peak
4 Temperature
$T_1$ Temperature at left end of peak 3 where nitrogen is initially detected (temperature where peak 3 rises)
$T_2$ Temperature at maximum depth of valley (minimum) between peaks 1 and 2 (temperature dividing peak 1 and peak 2)

**Claims**

1. A crystalline silicon nitride powder having a silicon oxide layer and/or silicon oxynitride layer on the particle surfaces, wherein the specific surface area (SA) measured by the BET method is 3 $m^2$/g to 16 $m^2$/g, the surface oxygen amount (FSO) measured by temperature increase mode analysis is 0.20 mass% to 0.60 mass%, the internal oxygen amount (FIO)s measured by temperature increase mode analysis is 0.40 mass% to 1.30 mass%, the ratio (FSO/SA) between the surface oxygen amount and the BET specific surface area is 0.25 mg/$m^2$ or higher and lower than 0.50 mg/$m^2$, and the median diameter $D_{50}$ in the volume-based cumulative particle size distribution measured by laser diffraction/-scattering is 0.5 $\mu$m to 1.0 $\mu$m.

2. The crystalline silicon nitride powder according to claim 1, wherein, in the surface oxygen amount (FSO) measured by temperature increase mode analysis, the surface oxygen amount (FSOA) from the silicon oxide layer on the particle surfaces is 0.10 mass% to 0.50 mass% and the surface oxygen amount (FSOB) from the silicon oxynitride layer on the particle surfaces is 0.08 mass% to 0.50 mass%.

3. The crystalline silicon nitride powder according to claim 1 or 2, wherein the ratio (FIO/SA) of the internal oxygen amount (FIO) measured by temperature increase mode analysis with respect to the BET specific surface area (SA) is 0.60 mg/$m^2$ to 1.00 mg/$m^2$.

4. The crystalline silicon nitride powder according to any one of claims 1 to 3, wherein the total oxygen content (TO) is 0.7 mass% to 1.8 mass%, and the ratio (TO/SA) of the total oxygen content (TO) with respect to the BET specific surface area (SA) is 0.85 mg/$m^2$ to 1.4 mg/$m^2$.

5. The crystalline silicon nitride powder according to any one of claims 1 to 4, wherein the BET specific surface area (SA) is 7 $m^2$/g to 13 $m^2$/g, and the surface oxygen amount (FSO) measured by temperature increase mode analysis is 0.30 mass% to 0.60 mass%.

6. The crystalline silicon nitride powder according to any one of claims 1 to 5, wherein $D_{90}$, as the cumulative 90% diameter in the cumulative particle size distribution, is 1.75 $\mu$m to 2.35 $\mu$m, the first cohesion index $D_{50}/D_{BET}$ as the ratio between the median diameter $D_{50}$ and the sphere-equivalent size $D_{BET}$ calculated from the BET specific surface area, is 3.0 to 4.9, and the second cohesion index $D_{90}/D_{50}$, as the ratio between the cumulative 90% diameter $D_{90}$ and the median diameter $D_{50}$, is 2.5 to 3.4.

7. The crystalline silicon nitride powder according to any one of claims 1 to 6, wherein the mass ratio of the $\beta$ phase with

respect to the total amount of the $\alpha$ phase and $\beta$ phase $\beta/(\alpha + \beta)$ is 40 mass% or lower, and the carbon content is 0.01 mass% to 0.20 mass%.

8.  A method for producing a silicon nitride sintered body comprising a step of molding and sintering a sintering material containing the crystalline silicon nitride powder according to any one of claims 1 to 7, and a sintering aid.

# Fig. 1

# Fig. 2

# Fig. 3

# INTERNATIONAL SEARCH REPORT

| | International application No. |
|---|---|
| | **PCT/JP2023/010125** |

**A. CLASSIFICATION OF SUBJECT MATTER**

***C01B 21/068***(2006.01)i; ***C04B 35/587***(2006.01)i
FI: C01B21/068 M; C04B35/587

According to International Patent Classification (IPC) or to both national classification and IPC

**B. FIELDS SEARCHED**

Minimum documentation searched (classification system followed by classification symbols)

C01B21/068; C04B35/587

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

JSTPlus/JSTChina/JST7580 (JDreamIII)

**C. DOCUMENTS CONSIDERED TO BE RELEVANT**

| Category* | Citation of document, with indication, where appropriate, of the relevant passages | Relevant to claim No. |
|---|---|---|
| X | JP 7-206409 A (DENKI KAGAKU KOGYO KK) 08 August 1995 (1995-08-08) paragraphs [0025], [0067]-[0071], tables 2, 11, examples 26, 27 | 1, 3-5, 8 |
| A | | 2, 6-7 |
| X | WO 2015/005390 A1 (UBE INDUSTRIES, LTD.) 15 January 2015 (2015-01-15) paragraphs [0058], [0077], table 1, example 20 | 1, 4-5, 7-8 |
| A | | 2-3, 6 |
| X | WO 2013/146713 A1 (UBE INDUSTRIES, LTD.) 03 October 2013 (2013-10-03) paragraphs [0058], [0088]-[0089], table 2, comparative example 2 | 1, 4-5, 8 |
| A | | 2-3, 6-7 |
| A | JP 8-119609 A (UBE INDUSTRIES, LTD.) 14 May 1996 (1996-05-14) claims, paragraphs [0005]-[0018], [0021]-[0026], table 3 | 1-8 |
| A | JP 8-012306 A (UBE INDUSTRIES, LTD.) 16 January 1996 (1996-01-16) paragraphs [0014], [0020]-[0029], tables 2, 3, example 2 | 1-8 |

☐ Further documents are listed in the continuation of Box C.  ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **16 May 2023** | **30 May 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

INTERNATIONAL SEARCH REPORT
Information on patent family members

International application No.

**PCT/JP2023/010125**

| Patent document cited in search report | | | Publication date (day/month/year) | Patent family member(s) | Publication date (day/month/year) |
|---|---|---|---|---|---|
| JP | 7-206409 | A | 08 August 1995 | (Family: none) | |
| WO | 2015/005390 | A1 | 15 January 2015 | US 2016/0159648 A1 paragraphs [0078], [0097], table 1, example 20 EP 3020686 A1 CN 105377756 A TW 201512080 A | |
| WO | 2013/146713 | A1 | 03 October 2013 | US 2015/0056121 A1 paragraphs [0066], [0100], [0101], table 2, comparative example 2 EP 2832687 A1 CN 104203813 A KR 10-2014-0136002 A TW 201343541 A | |
| JP | 8-119609 | A | 14 May 1996 | (Family: none) | |
| JP | 8-012306 | A | 16 January 1996 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP HEI72005206409 A
- JP 2009231388 A
- JP HEI5200387441 B
- JP HEI62004329404 A
- WO 2013146713 A
- WO 2021200830 A

**Non-patent literature cited in the description**

- **G.P. GAZZARA** ; **D.P. MESSIER**. *Am. Ceram. Soc. Bull.*, 1977, vol. 56 (9), 777-80